(19) Europäisches Patentamt
European Patent Office
Office européen des brevets

(11) EP 1 376 116 A1

(12) EUROPEAN PATENT APPLICATION
published in accordance with Art. 158(3) EPC

(43) Date of publication:
02.01.2004 Bulletin 2004/01

(21) Application number: 02711293.7

(22) Date of filing: 04.02.2002

(51) Int Cl.7: G01N 27/416, H01M 8/04

(86) International application number:
PCT/JP2002/000877

(87) International publication number:
WO 2002/063289 (15.08.2002 Gazette 2002/33)

(84) Designated Contracting States:
AT BE CH CY DE DK ES FI FR GB GR IE IT LI LU MC NL PT SE TR

(30) Priority: 02.02.2001 JP 2001026420
19.02.2001 JP 2001041331
26.02.2001 JP 2001049917
12.07.2001 JP 2001211829

(71) Applicant: MATSUSHITA ELECTRIC INDUSTRIAL CO., LTD.
Kadoma-shi, Osaka 571-8501 (JP)

(72) Inventors:
- KATSUKI, Nobuharu
Kyotanabe-shi, Kyoto 610-0343 (JP)
- SHOJI, Rihito
Kadoma-shi, Osaka 571-0048 (JP)
- IDA, Takashi
Soraku-gun, Kyoto 619-0237 (JP)

(74) Representative:
Grünecker, August, Dipl.-Ing. et al
Patentanwälte
Grünecker, Kinkeldey, Stockmair & Partner
Maximilianstrasse 58
80538 München (DE)

# (54) GAS DENSITY DETECTOR AND FUEL CELL SYSTEM USING THE DETECTOR

(57) A gas concentration detector is provided which is easily applicable to a fuel cell system and capable of measuring the concentration of carbon monoxide without depending on the flow of test gas while performing an action of refreshment when the concentration of carbon monoxide is relatively high and also producing no abrupt change in the its current output. The gas concentration includes an electrolytic membrane having a hydrogen ionic conductivity, a detecting electrode having a first catalyst and contacting with one side of the electrolytic membrane, a counter electrode having a second catalyst and contacting with other side of the electrolytic membrane, a first collector plate, and a second collector plate. The first collector plate has a surface having a first passage formed therein, the first passage including a first recess and a first opening communicated to the first recess, the first opening being open only to a flow of the test gas, the surface of the first collector plate contacting with the detecting electrode. The second collector plate has a surface having a second passage formed therein, the second passage including a second recess and a second opening communicated to the second recess, the surface of the second collector plate contacting with the counter electrode.

FIG. 1

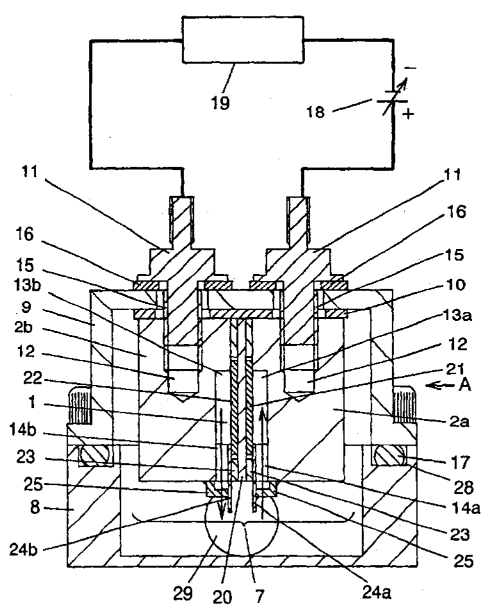


EP 1 376 116 A1

## Description

### TECHNICAL FIELD

The present invention relates to a gas concentration detector for measuring a concentration of a target gas in a fuel gas used for, for example, a fuel cell.

### BACKGROUND ART

Among a variety of fuel cells that have been developed, one of the most feasible cells is a type employing hydrogen ion conducting membranes made of solid polymer. Its operating temperature is below 100°C, which is lower than that of any other types and thus its handling can be easy. It is hence said that the fuel cell of such a type is the favorite for domestic use and automobile applications.

The fuel gas for the fuel cell of the type is ideally hydrogen gas. However, the infrastructure for supply of pure hydrogen gas has hardly been provided. It is therefore concerned to develop a technique for producing hydrogen gas through reforming available fuel such as methanol or utility gas such as might be used in the home for cooking and heating.

The fuel gas produced by such a reforming system contains mostly hydrogen gas and carbon dioxide gas under steady state. Just after the startup of the reforming system, the hydrogen gas may included a few percent of carbon monoxide gas.

Even if the amount of carbon monoxide gas is as low as some tens ppm, its adsorption (also called poisoning) to a platinum catalyst in the fuel cell electrode may decrease the electromotive force of the fuel cell. Consequently, for compensation, the concentration of carbon monoxide in the fuel gas is constantly monitored. Only when the concentration of carbon monoxide gas drops down to a predetermined level, the fuel gas is fed into the fuel cell. Accordingly, in a conventional fuel cell receiving the fuel gas from the reforming system, the use of a gas concentration detector for carbon monoxide is mandatory.

One of the gas concentration detectors for measuring the concentration of carbon monoxide in the fuel gas which contains a large amount of hydrogen is disclosed as a CO gas sensor in PCT Publication, WO97/40371.

The CO gas sensor is schematically illustrated in Fig. 51. As shown in Fig. 51, the CO gas sensor denoted at 511 includes a gas receiving container 516 which also servers as a chamber for measuring the concentration of carbon monoxide in a test gas to be examined. Provided in the gas receiving container 516 are a pool of water 512 for maintaining a level of humidity and a detector 533.

A voltage source 519 is provided at the outside of the gas receiving container 516 for feeding each electrode with a voltage. Also, the CO gas sensor 511 has an inlet 517 for introducing the test gas and an outlet 518 for discharging the test gas.

Fig. 52 illustrates a construction of the detector 533. The detector 533 includes a polymer solid electrolytic membrane 520 sandwiched between a detecting electrode 513 and a combination of a counter electrode 514 and a reference electrode 515.

Fig. 53 is a schematic view of a fuel cell system designed for using a reformed gas as the fuel gas and equipped with the CO gas sensor 511. More specifically, the fuel gas is reformed into a reformed gas by a reforming device 523 shown in Fig. 53. The reformed gas is partially fed to a branch where its carbon monoxide concentration is measured by the CO gas sensor 511.

The action of the CO gas sensor 511 for measuring the concentration of carbon monoxide in the reformed gas to be examined is based on a pulse method which involves introducing the reformed gas into the CO gas sensor 511, allowing the gas to contact directly with the detecting electrode 513 of the detector 533, holding the gas at an oxidizing potential for carbon monoxide gas (commonly from 0.65V to 1V) for a particular length of time, then holding the gas at an adsorbing potential for carbon monoxide gas (commonly 0.4V) for a particular length of time, and repeating the steps.

The pulse method may be classified into four different calibration modes: general calibration, Langmuir's carbon monoxide adsorption calibration, calibration from the relationship between an inverse of the time for reaching a predetermined current declination rate and the concentration of carbon monoxide, and calibration from the relationship between the current declination rate and the concentration of carbon monoxide.

The general calibration mode will briefly be explained. After a voltage corresponding to the oxidizing potential for carbon monoxide is applied to and between the detecting electrode 513 and the combination of the counter electrode 513 and the reference electrode 514 for a particular length of time, a voltage corresponding to the adsorption potential for carbon monoxide is applied to the same for a particular length of time. This cyclic action is repeated and its response current which varies with time is measured.

The response current starts decreasing at the time when the applying voltage drops down from the oxidizing potential level to the absorption potential level for carbon monoxide. The concentration of carbon monoxide gas is determined from a calibration profile of the carbon monoxide concentration in relation to the declination rate of the current. The declination rate $\Delta\theta 1$ of the current is calculated from Equation 1.

$$\Delta\theta 1=(I_0-I_1)/I_0 \quad (1)$$

where $I_0$ is a current at $t_0$, and $I_1$ is a current at $t_1$.

When the declination rate of the response current is low with the relatively high concentration region of carbon monoxide gas , it can be calculated from Equation 2 where the declination rate is relatively high.

$$\Delta\theta 2=(I_0-I_2)/I_0 \quad (2)$$

When the concentration of carbon monoxide gas is low, the declination rate of the response current remains small and quantitative error in the measurement of carbon monoxide may be increased. For compensation, the duration for holding at the adsorption potential level for carbon monoxide is extended to emphasize the declination rate of the response current and thus minimize the quantitative error.

The Langmuir's carbon monoxide adsorption calibration method is based on the calibration profile calculated from a natural logarithm of the ratio of the response current between its initial setting [i(t=0)] and a value after the duration (t) for determining the concentration of carbon monoxide gas.

As the adsorption rate of carbon monoxide remains low at the beginning of the declination of the current regardless of the concentration of carbon monoxide gas, change in the current conforms to the Langmuir's theory. The concentration of carbon monoxide gas can hence be calculated from Equation 3.

$$\text{In}\{i(t)i(t=0)\}=-A\times P_{CO}\times t \quad (3)$$

(where A is a constant and $P_{CO}$ is a partial pressure of carbon monoxide gas).

The calibration method using the relationship between an inverse of the time for reaching a predetermined current declination rate and the concentration of carbon monoxide is based on the profile of the relation between an inverse of the time $\tau$ for reaching a predetermined current declination rate and the concentration of carbon monoxide for determining the concentration of carbon monoxide gas.

While the current declination rate expressed by Equation 4 is linear, the inverse ($1/\tau$) of the time $\tau$ for reaching a predetermined level of the current declination rate is expressed by Equation 5. The concentration of carbon monoxide gas is hence calculated from Equation 5.

$$\{i(\tau)/i(t=0)\} \quad (4)$$

$$1/\tau=-[A/1n\{i(\tau)/i(t=0)\}]\times P_{CO} \quad (5)$$

The calibration method using the relationship between the current declination rate and the concentration of carbon monoxide is based on the relation between the current declination rate at the beginning of a current declination and the concentration of carbon monoxide for determining the concentration of carbon monoxide gas. When a partial pressure of the carbon monoxide gas is small or at the beginning of the current declination, Equation 6 is established. The concentration of carbon monoxide gas is then calculated from Equation 6.

$$i(t)/i(t=0)=1-A\times P_{CO}\times t \quad (6)$$

The CO gas sensor 511 in the fuel cell system shown in Fig. 53 receives a portion of the reformed gas to be examined from a branch of the supply flow which is fed into the gas receiving container 516 shown in Fig. 51 and measured to determine the concentration of carbon monoxide. Then the portion is returned back to the supply flow. It is necessary for feeding the gas into the interior of the CO gas sensor 511 to develop a difference in the pressure between the inlet 517 and the output 518 in the gas receiving container 516. The difference in the pressure may be developed by providing an orifice across the branch or main tubing for the supply flow of the reformed gas which thus makes the system construction complex.

Also, when the flow of the supply of the reformed gas is varied in the system shown in Fig. 53, the portion branched and received by the CO gas sensor 511 is also varied in amount thus preventing the concentration of carbon monoxide from being measured accurately. It is noted that the reforming device 523 does not reform carbon monoxide into the concentration of several tens ppm soon after its startup. In the beginning, a few percent of carbon monoxide can be generated. An experiment was conducted where the fuel gas is provided containing a high rate (1%) of carbon monoxide, the concentration just after the start-up of the reforming device is moistened and is fed into the conventional CO gas sensor 511 for measurement. It is found that even if the oxidizing potential for carbon monoxide is increased to 1V, a maximum oxidizing potential in the prior art for refreshment, the output of the CO gas sensor 511 does not fail to return back over time to its initial level. It is then inferred that a higher concentration of carbon monoxide is securely deposited on the adsorption site of catalyst particles within a short time and can hardly be oxidized by refreshment.

It is also proved throughout continuous long-run measurements or repetitive reproduction examination at a constant concentration of carbon monoxide that the conventional CO gas sensor exhibits a number of points where its current output (of the response current) is abruptly varied. Its profile with time is illustrated in Fig. 54. As shown in the part enclosed with the dotted line, the current output sharply rises up during the application of the adsorption potential for carbon monoxide or the measurement of the concentration of carbon monoxide gas and thus its profile is different in the shape of the curve from the other cycles. The factors $I_0$, $I_1$, and $I_2$ stated in Equations 1 and 2 vary even if the concentration of carbon monoxide is uniform. As the result, the concentration of carbon monoxide gas can hardly be calculated with precision from the known equations.

It is presumed from a series of experiments that the following is a primary cause of the abrupt rise up of the current output. When water molecules migrated with protons arrive at the counter electrode 514, water is condensed and liquefied in the porous carbon material (carbon paper) of the counter electrode 514. As more of the water molecules are migrated, the condensation of water starts departing from the carbon paper and may be drained out as water drops from the detector 530. As the result, the clogging up of the carbon paper with water is suddenly eliminated and the generation of hydrogen gas on the counter electrode 514 can be promoted. This allows the migration of protons to be increased, hence creating an abrupt rise in the current output.

SUMMARY OF THE INVENTION

A gas concentration detector is easily applicable to a fuel cell system and capable of measuring the concentration of carbon monoxide, without depending on the flow rate of test gas to be examined, while performing a refreshment when the concentration of carbon monoxide is relatively high and also producing no abrupt change in the current output. The gas concentration detector includes an electrolytic membrane having a hydrogen ionic conductivity, a detecting electrode having a first catalyst and contacting with one side of the electrolytic membrane, a counter electrode having a second catalyst and contacting with other side of the electrolytic membrane, a first collector plate, and a second collector plate. The first collector plate has a surface having a first passage formed therein, the first passage including a first recess and a first opening communicated to the first recess, the first opening being open only to a flow of the test gas, the surface of the first collector plate contacting with the detecting electrode. The second collector plate has a surface having a second passage formed therein, the second passage including a second recess and a second opening communicated to the second recess, the surface of the second collector plate contacting with the counter electrode.

Brief Description of the Drawings

Fig. 1 is a cross sectional view, at one side vertical to the flow of the gas to be examined, of a gas concentration detector showing a first embodiment of the present invention.

Fig. 2 is a cross sectional view at another side parallel to the flow of the gas of the gas concentration detector.

Fig. 3 is an exploded perspective view of a detecting element of the gas concentration detector viewed from the direction denoted by the arrow A in Fig. 1.

Fig. 4 illustrates a profile of measurements of the current in one measurement cycle at various concentration levels of carbon monoxide measured with the gas concentration detector.

Fig. 5 is an enlarged view of a particular part of Fig. 4.

Fig. 6 illustrates the dependency of the current on the concentration of carbon monoxide in the gas concentration detector.

Fig. 7 is a flowchart for controlling the gas concentration detector.

Fig. 8 illustrates a variation with time of the current at various flows of the gas as a parameter in the gas concentration detector.

Fig. 9 illustrates the dependency on the concentration of carbon monoxide of the current change speed measured by a gas concentration detector of a second embodiment of the present invention.

Fig. 10 is a flowchart for controlling the gas concentration detector and calculating its signal outputs.

Fig. 11 illustrates the current change speed at various flow rates of the gas as a parameter in the gas concentration detector.

Fig. 12 is a cross sectional view, at one side, parallel to the flow of the gas to be examined of a gas concentration detector of a third embodiment of the present invention.

Fig. 13 is a cross sectional view, at one side, vertical to the flow of the gas to be examined of a gas concentration detector of a fourth embodiment of the present invention.

Fig. 14 is a cross sectional view, at another side, parallel to the flow of the gas to be examined of the gas concentration detector.

Fig. 15 is an exploded perspective view of a detecting element of the gas concentration detector.

Fig. 16 illustrates values of the current in one measurement cycle at various concentration levels of carbon monoxide in a base gas containing 80% of hydrogen measured by a carbon monoxide concentration detecting element of the gas concentration detector.

Fig. 17 is an enlarged view of a particular part of Fig. 16.

Fig. 18 illustrates values of the current in one measurement cycle at various concentration levels of carbon monoxide in the base gas containing 50% of hydrogen measured by a carbon monoxide concentration detecting element of the gas concentration detector.

Fig. 19 is an enlarged view of a particular part of Fig. 18.

Fig. 20 illustrates the dependency of the current on the concentration of carbon monoxide at 80% and 50% of hydrogen gas in the carbon monoxide concentration detecting element of the gas concentration detector.

Fig. 21 illustrates the dependency of the current on the concentration of hydrogen at 80% and 50% of hydrogen gas in a hydrogen gas concentration detecting element of the gas concentration detector.

Fig. 22 is a flowchart of controlling the gas concentration detector.

Fig. 23 illustrates a variation with time of the current at the various flow rates of the gas to be examined in the carbon monoxide concentration detecting element of the gas concentration detector.

Fig. 24 illustrates values the current at various flow rates of the gas to be examined in the hydrogen gas concentration detecting element of the gas concentration detector.

Fig. 25 illustrates the dependency of the current change speed on the concentration of carbon monoxide in a gas concentration detector of a fifth embodiment of the present invention.

Fig. 26 is a flowchart of controlling the gas concentration detector for calculating its signal outputs.

Fig. 27 illustrates the current change speed based at various flow rates of the gas to be examined as a parameter in the gas concentration detector.

Fig. 28 is a cross sectional view, at one side, parallel to the flow of the gas to be examined, schematically showing an interior structure of a gas concentration detector of a sixth embodiment of the present invention.

Fig. 29 illustrates schematically a structure of a gas concentration detector of a seventh embodiment of the present invention.

Fig. 30 illustrates current output responses to the various concentrations of carbon monoxide in one measurement cycle in the gas concentration detector.

Fig. 31 is a graph illustrating the dependency of the current change speed on the concentration of carbon monoxide in the gas concentration detector.

Fig. 32 is a graph illustrating the dependency of the current change acceleration variation on the concentration of carbon monoxide in the gas concentration detector.

Fig. 33 is a graph illustrating the dependency of the variation difference on the concentration of carbon monoxide in the gas concentration detector.

Fig. 34 illustrates the dependency on the concentration of carbon monoxide of an ON signal and an OFF signal determined by calculation of the detector outputs before and after the correction in the gas concentration detector.

Fig. 35 is a flowchart of controlling the gas concentration detector and calculating its signal outputs.

Fig. 36 is a flowchart of controlling a gas concentration detector of an eighth embodiment of the present invention and calculating its signal outputs.

Fig. 37 is a graph illustrating the dependency of sensor signal outputs on the concentration of carbon monoxide in the gas concentration detector.

Fig. 38 is a flowchart of controlling a gas concentration detector of a ninth embodiment of the present invention and calculating its signal outputs.

Fig. 39 is a graph illustrating the dependency of the current change speed on the concentration of carbon monoxide in the gas concentration detector.

Fig. 40A is an exploded perspective view of a gas concentration detector of a tenth embodiment of the present invention.

Fig. 40B is an exploded perspective view of a detecting element in the gas concentration detector.

Fig. 41 is a partially cutoff perspective view of the gas concentration detector mounted to a conduit.

Fig. 42 is a piping diagram showing the gas concentration detector installed in a fuel cell system.

Fig. 43 is a graph illustrating the dependency of the detection current on the concentration of carbon monoxide before the startup of the refreshment in the gas concentration detector.

Fig. 44 is a graph illustrating the dependency of the average poisoning speed on the concentration of carbon monoxide in the gas concentration detector.

Fig. 45 is a partial cross section view of a gas concentration detector of an eleventh embodiment of the present invention mounted to a bypass conduit.

Fig. 46 is a graph illustrating the dependency of the current just before the refreshment on the concentration of carbon monoxide when the flow of the gas is varied in the gas concentration detector.

Fig. 47 is a graph illustrating the dependency of the average poisoning speed on the concentration of carbon monoxide when the flow of the gas is varied in the gas concentration detector.

Fig. 48 is a graph illustrating the dependency of the detection current just before the refreshment on the concentration of carbon monoxide when the flow of the gas is varied in the gas concentration detector.

Fig. 49 is a graph illustrating the dependency of the average poisoning speed on the concentration of carbon monoxide when the flow of the gas is varied in the gas concentration detector.

Fig. 50 is a flowchart of controlling the gas concentration detector and calculating the signal outputs.

Fig. 51 is a schematic view of a conventional CO gas sensor.

Fig. 52 is a schematic view of a detecting element of the conventional CO gas sensor.

Fig. 53 is a schematic block diagram of a fuel cell system equipped with the conventional CO gas sensor for measuring a reformed gas as the fuel gas.

Fig. 54 is a graph illustrating the current output (a response current) profile at an abrupt change in the conventional CO gas sensor.

DESCRIPTION OF THE PREFERRED EMBODIMENTS

(First Embodiment)

A gas concentration detector for detecting carbon monoxide as the test gas will be described , according to a first embodyment of the present invention ,referring to Figs. 1 to 8.

As shown in Figs. 1 to 3, a detector element 1 includes an electrolytic membrane 20 and a combination of a detecting electrode 21 and a counter electrode 22 bonded to both sides of the electrolytic membrane 20 for measuring the concentration of carbon monoxide in the gas to be examined. A detector 7 has the detecting electrode 21, the electrolytic membrane 20, the counter electrode 22 sandwiched together with a pair of rubber seals 23, a first collector plate 2a, and a second collector plate 2b between two pairs of insulating rubber strips 3 and between a pair of first pressure strips 4, each having two through holes provided therein for accepting bolts 6, and between a pair of second pressure strips 5, each having two threaded holes provided therein for screwing the bolts 6. The first collector plate 2a has an output terminal joining thread 12, a recess 13a provided in one side thereof, and a positive side passage 14a communicated to the recess 13a and exposed to the gas to be examined. The second collector plate 2b has an output terminal joining thread 12, a recess 13b provided in one side thereof, and a negative side passage 14b communicated to the recess 13b and exposed to the gas to be examined. The first pressure strips 4 and the second pressure strips 5 are tightened together by the bolts 6. Referring to Fig. 1, there are a first space defined between the detecting electrode 21 and the recess 13a of the first collector plate 2a and a second space defined between the counter electrode 22 and the recess 13b of the second collector plate 2b, the two spaces being isolated from each other by the detecting element 1 which includes the detecting electrode 21, the electrolytic membrane 20, and the counter electrode 22.

The opening of the positive side passage 14a of the first collector plate 2a is covered with a porous aluminum filter 25 which inhibits the gas to be examined from entering the positive side passage 14a and the negative side passage 14b and also inhibits impurities in the gas from polluting the positive side passage 14a and the negative side passage 14b.

A case 8 is configured to have an opening at the top, a groove 28 for accepting an O ring 17 to prevent the leakage of the gas, and a pair of tubes 29 at a diameter of 12.7mm (1/2 inch) provided on both sides thereof and communicated to the main flow of the gas to be examined. The detector 7 is anchored to the inner side of a cover 9 by a couple of connector terminals 11, each having a thread 15 and a seal 16, extending through corresponding holes provided in the cover 9 and a rubber sheet 10 for insulation and sealing and screwing into the corresponding output terminal joining threads 12 of the two collector plates 2a and 2b. The detector 7 is then inserted into the upper opening of the case 8 as the cover 9 and the O ring 17 shut up the opening of the case 8. The two connector terminals 11 are connected to an external power source 18 and an ampere meter 19 which acts as a current detector.

The upward arrow shown at the recess 13a in Fig. 1 represents the direction of the flow of the gas to be examined from the outside to the detecting electrode 21. The downward arrow shown at the recess 13b in Fig. 1 represents the direction of the flow of hydrogen gas generated on the counter electrode 22. The large rightward arrow shown at the bottom in Fig. 2 represents the direction of the flow of the gas to be examined across the gas detector. The small arrows shown at the bottom in Fig. 2 represent the flows of the gas towards the detecting electrode 21 and of hydrogen gas from the counter electrode 22 respectively.

The detector 7 will now be described in more detail referring to Fig. 3. The detecting electrode 21 is connected to the positive and is disposed on one side of the electrolytic membrane 20 which is made of a fluorine polymer material having a diameter of 20mm and a level of hydrogen ionic conductivity. The counter electrode 22 is connected to the negative and is disposed on the other side of the electrolytic membrane 20. The electrolytic membrane 20, the detecting electrode 21, and the counter electrode 22 are assembled to fabricate the detector element 1. The detecting electrode 21 is a carbon cloth 12mm in diameter which incorporates a powder of carbon attached with a platinum-gold alloy catalyst and bonded together with a fluorine polymer material. Similarly, the counter electrode 22 is a carbon cloth 12mm in diameter which incorporates a powder of carbon attached with a platinum-ruthenium alloy catalyst and bonded together with a fluorine polymer material.

The two rubber seals 23 are disposed close to the edge of both sides of the electrolytic membrane 20. More particularly, the electrolytic membrane 20 is sandwiched between the detecting electrode 21 and the counter electrode 22 and between the two rubber seals 23 as bonded together by the pressing process of a hot press at 130°C.

The catalyst in the detecting electrode 21 is composed of a platinum-gold alloy and the catalyst in the counter electrode 22 is composed of a platinum-ruthenium alloy. As the alloys described are selectively determined for implementing the best performance of the sensor, their other combination, for example, platinum and any other noble metal, may theoretically be used with favorable performance. In other words, the catalysts in the detecting electrode 21 and the counter electrode 22 are not limited to the platinum-gold alloy and the platinum-ruthenium alloy respectively but may be composed of any other alloys which are easily poisoned for the detecting electrode 21 and hardly poisoned for the counter electrode 22.

As shown in Fig. 1, the first collector plate 2a provided on one side of the detector element 1 is made of a stainless steel. The plate 2a includes an output terminal joining projection, a planar portion 30mm wide and 5mm thick where the recess 13a is arranged in a tubular shape having a depth of 4mm and a diameter of 9mm, and the positive side passage 14a is arranged in a round shape having a diameter of 3.5mm, communicated to the recess 13a, and exposed to the gas to be examined. Also, the second collector plate 2b provided on the other side of the detector element 1 is made of a stainless steel of the same arrangement. A pair of sheet partitions 24a and 24b are provided at the opening ends of the positive side passage 14a in the first collector plate 2a and the negative side passage 14b in the second collector plate 2b for inhibiting hydrogen gas produced on the counter electrode 22 from flowing into the opening end of the positive side passage 14a.

The surfaces at the recess 13a and the positive side passage 14a of the first collector plate 2a and the surfaces at the recess 13b and the negative side passage 14b of the second collector plate 2b are satin finished at roughness by sand blasting. This provides a good hydrophilic property and thus promoting the drainage of condensed water generated by temperature change. The surfaces of the first collector plate 2a and the second collector plate 2b other than at the recesses 13a and 13b and the positive and negative side passages 14a and 14b are smoothly finished to have an average surface roughness of not higher than 1.6μm for providing improved sealing and good contact with the detecting electrode 21 and the counter electrode 22.

The recesses 13a and 13b and the positive and negative side passages 14a and 14b are not limited to the tubular shape and the round shape in the embodiment but may be configured to any shape and size adapted for passing the gas to be examined without difficulty.

Fig. 1 also shows a detecting circuit including the direct-current (DC) source 18 and the ampere meter 19 acting as a current detector. The DC source 18 and the ampere meter 19 for measuring the current are connected in series by cables between the two connector terminals 11 which are in turn connected to the first collector plate 2a and the second collector plate 2b respectively. The output of the ampere meter 19 is connected to a microcomputer (not shown). The microcomputer calculates the concentration of carbon monoxide gas from the current measured by the ampere meter 19, while continuously controlling the voltage at the DC source 18 for refreshing the catalysts attached in the detecting electrode 21 and the counter electrode 22.

While the ampere meter 19 is connected for measuring the current in the embodiment, it may be replaced by a resistor for measuring a voltage between its two ends.

The action of the gas concentration detector of the embodiment will now be described. By the action of hydrogen ion migration from the detecting electrode 21 to the counter electrode 22, the test gas is intercepted at the positive side passage 14a, and received by the recess 13a in the first collector plate 2a. As the recess 13a is exposed to the detecting electrode 21, the gas to be examined can propagate and disperse uniformly throughout the carbon cloth of the detecting electrode 21 before reaching the catalyst.

The DC source 18 is controlled by the microcomputer and desired voltage is applied to and between the first collector plate 2a and the second collector plate 2b. This voltage application starts the chemical reaction expressed by Formula 1 of hydrogen gas in the gas to be examined on the catalyst of the detecting electrode 21 and the chemical reaction expressed by Formula 2 on the catalyst of the counter electrode 22 expressed by Formula 2.

$$H_2 \rightarrow 2H^+ + 2e^- \quad (1)$$

$$2H^+ + 2e^- \rightarrow H_2 \quad (2)$$

As expressed by Formula 1, the hydrogen gas dissociates on the detecting electrode 21 and its hydrogen ions ($H^+$) are passed through the electrolytic membrane 20 and received by the counter electrode 22 where they receive electrons ($e^-$) as expressed by Formula 2 to release hydrogen gas. The hydrogen gas runs through the recess 13b and the negative side passage 14b in the second collector plate 2b and joins with the main flow of the test gas. It is hence essential to have the gas to be examined exposed to the detecting electrode 21 but not to the counter electrode 22.

Since the dissociation of the hydrogen gas takes place on the detecting electrode 21 under the presence of hydrogen, the inner pressure in the positive side passage 14a is decreased thus allowing the test gas to enter the positive side passage 14a. Meanwhile, the hydrogen gas developed on the counter electrode 22 is discharged through the negative side passage 14b. Accordingly, the detector 7 serves as a pump and drives the test gas containing hydrogen gas to enter the positive side passage 14a without the application of pressure.

As an electrical closed circuit is developed between the detector 7 and the DC source 18 under the presence of hydrogen gas, it releases a current corresponding to the hydrogen ionic conductivity.

When carbon monoxide is contained in the test gas, it is adsorbed on the surface of the platinum-gold alloy catalyst of the detecting electrode 21, which is thus poisoned. As the result, the reactions expressed by Formula 1 and Formula 2 are interrupted and the flow of the current between the detector 7 and the DC source 18 will be decreased. The current is measured and its signal is processed by the microcomputer. Finally, a signal output corresponding to the concentration of carbon monoxide gas is released.

However, once the concentration of carbon monoxide has been measured by the above steps, the catalyst remains holding the carbon monoxide and can decrease the current level hence allowing no more measurement of the concentration. To repeat the measurement, it is necessary to revive (or refresh) the catalyst.

In the embodiment, the DC source 18 is controlled by the microcomputer to apply a measurement voltage and a refresh voltage alternately and repeatedly in a predetermined number of cycles between the first collector plate 2a and the second collector plate 2b. The periodic application of the refresh voltage can thus revive the function of the catalyst. This may be explained by the fact that oxygen is generated through the decomposition of water in the test gas due to the application of refresh voltage as expressed by Formula 3 and by the fact that the reaction between oxygen and carbon monoxide adsorbed on the catalyst is conducted as expressed by Formula 4, thus releasing carbon dioxide and eliminating the carbon monoxide.

$$H_2O(g) \rightarrow H_2(g) + O(a) \quad (3)$$

$$CO(a) + O(a) \rightarrow CO_2(g) \quad (4)$$

In Formula 3 and Formula 4, a symbol "(g)" represents a gas, and a symbol "(a)" represents adsorption on the catalyst. The reactions expressed by Formula 3 and Formula 4 take place only when the catalyst is involved. If the catalyst is not present, the application of voltage triggers no reaction.

According to the embodiment, the measurement voltage is 0.1V and the refresh voltage is 1.5V, which is higher than both the measurement voltage and the potential for decomposition of water (an ideal value being 1.23V). Also, the duration of measurement is 5 seconds and the duration of refreshment is 2 seconds, so that the total of 7 seconds equals one cycle.

The described steps involve detecting the current intermittently, processing its signal with a microcomputer, and releasing a signal corresponding to the concentration of carbon monoxide.

The processing of the signal with a microcomputer will be described in more detail. Assuming that the test gas is sampled just after the startup of the reforming device, seven different types of the gas are prepared containing respectively 10000ppm, 2000ppm, 200ppm, 100ppm, 50ppm, 20ppm, and 5ppm of carbon monoxide and commonly 80% of hydrogen gas, 5% of nitrogen gas, and a remaining percentage of carbon dioxide. The seven different gases are supplied in a sequence, 10000ppm for 30 minutes, 2000ppm for 10 minutes, 200ppm for 10 minutes, 100ppm for 10 minutes, 50ppm for 10 minutes, 20ppm for 10 minutes, and 5ppm for 40 minutes, and, after being moistened by a bubbler, introduced into the case 8 of the carbon monoxide gas detector for measuring the current. The flow rate of the test gas is set to 100ml per minute for the measurement.

The time for measurement is varied between the different levels of the concentration of carbon monoxide in the test gas in order to simulate the performance of the reforming device just after the startup where the concentration of carbon monoxide is high at the beginning and then decreased to 5ppm at a normal operation.

Fig. 4 is a diagram showing the profile of currents measured by the ampere meter 19 which correspond to different levels of the concentration of carbon monoxide. The profile represents for five minutes after the refreshment.

As apparent from Fig. 4, the current in every case drops down sharply one second or two seconds after the refreshment. It is presumed that as the supply voltage is stepped down from the refresh voltage level (1.5V) to the measurement voltage level (0.1V), the distribution of water along the membrane thickness which acts as a hydrogen ion carrier in the electrolytic membrane 20 takes a length of time before it settles down.

The current one to two seconds after the refreshment is hence unstable and its value is not desirable for calculating the concentration of carbon monoxide. It would be understood that the values of the current at one second and two seconds and their changes from one second to two seconds or from two seconds to three seconds, shown in Fig. 4, are hardly dependent on the concentration of carbon monoxide.

In the prior art, the concentration of carbon monoxide is calculated from the current based on its level at t=0 where the supply voltage is shifted from the refresh voltage to the measurement voltage and may thus be unfavorable in the repeatability and the steadiness. The embodiment of the present invention allows the concentration of carbon monoxide to be calculated from the current measured at three seconds after the refreshment or when the ionic conductivity of the electrolytic membrane has been stable. Accordingly, the concentration of carbon monoxide calculated can be improved in both the repeatability and the steadiness.

Fig. 5 is an enlargement of the profile of measurements from three seconds to five seconds shown in Fig. 4.

As is apparent from Fig. 5, the values of the current at three, four, or five seconds after the refreshment exhibit no abrupt gradients such as at one second or two seconds; instead, they exhibit moderate curves. Each value of the current precisely depends on the concentration of carbon monoxide. This may be explained by the fact that, as the voltage applied is shifted, the duration of three seconds after the refreshment is a transition region where two different aspects are present; the distribution of water along the thickness of the electrolytic membrane 20 remains not steady and the adsorption of carbon monoxide on the catalyst of the detecting electrode 21 is increased in proportion to the concentration of carbon monoxide.

After three seconds, the distribution of water along the thickness of the electrolytic membrane 20 becomes stable and the current stays at a level corresponding to the adsorption of carbon monoxide on the catalyst in the transition region. Although the value of the current after three seconds is stable, it may gradually be varied thereafter due to the continuation of the adsorption of carbon monoxide on the catalyst. As clearly understood from Fig. 5, the concentration of carbon monoxide can be determined even after three seconds by keeping the timing of sampling the current uniform. If the duration of measurement is too short, there is not enough time for the current to be stabilized. Therefore, the measurement of the current may be stabilized by increasing the duration of measurement instead of the duration of refreshment.

The duration of measurement is not limited to 5 seconds with the duration of refreshment of 2 seconds in the embodiment but may be increased; for example, the measurement of the current after six seconds is used.

Fig. 6 illustrates a profile of the current in relation to the concentration of carbon monoxide gas. The current after five seconds is denoted by I(5).

When the concentration of carbon monoxide is 10000ppm, the current I(5) is as low as 3.5mA. This results from the fact that when the concentration of carbon monoxide is high, the adsorption of carbon monoxide on the catalyst of the detecting electrode 21 is increased thus to decrease the ionization of hydrogen by the catalyst. The lower the concentration of carbon monoxide, the more the adsorption of carbon monoxide on the catalyst of the detecting electrode 21 is decreased. Accordingly, the ionization of hydrogen by the catalyst will be enhanced thus elevating the current.

It is generally said that when the concentration of carbon monoxide in a hydrogen gas is 20ppm or lower, it hardly affects the performance of the fuel cell. We determined from experiments a reference level of the current I(5) used to switch the detection mode for judging whether the concentration of carbon monoxide is higher than 20ppm or not. More specifically, An OFF signal is released when the concentration of carbon monoxide is 20ppm or higher and an ON signal is released when it is lower than 20ppm.

As shown in Fig. 6, the current is 3 7mA when the concentration of carbon monoxide is 20ppm. With the reference of the current I(5) set to 37mA, the gas concentration detector is designed for judging whether or not the concentration of carbon monoxide is higher than 20ppm. In other words, when the current I(5) is 37mA or higher, it is judged that the concentration of carbon monoxide is not higher than 20ppm thus allowing the gas concentration detector to release the ON signal. The current used for determining the reference is not limited to I(5) measured at five seconds after the refreshment but may be another measurement which is detected at three or four seconds after or after five seconds.

Fig. 7 is a flowchart showing a procedure of controlling the action of the gas concentration detector to calculate and judge whether or not the concentration of carbon monoxide is lower than 20ppm.

When the gas concentration detector is turned on, the counter electrode 22 is fed with 1.5V of the refresh voltage (S1) and held for a standby time of 2 seconds (S2) for refreshment of the catalyst. Similarly, the detecting electrode 21 is fed with 1.5V of the refresh voltage (S3) and held for a standby time of 2 seconds (S4) for refreshment of the catalyst. It is then examined whether or not a signal for disconnecting the fuel cell is received from a fuel cell controller circuit (not shown) (S5). When the disconnect signal is received (yes at S5), the voltage fed to the detecting electrode 21 is canceled (S6) to terminate the action of the gas concentration detector.

When the signal for stopping the fuel cell is not received (no at S5), the detecting electrode 21 is fed with 0.1V of the measurement voltage (S7). The values of the current are then stored at intervals of a predetermined period in a memory of the microcomputer (S8). In the embodiment, the current value measured at 5 seconds after each application of the refresh voltage and the measurement voltage is stored as data. After the current data I is stored (yes at S9), it is examined whether or not the current I is lower than the reference level (S10).

In the embodiment, the reference level of the current measured at 5 seconds after the startup of the measurement is 37mA. When the current is not lower than the reference (yes at S10), the ON signal is released (S12). When the current is lower (no at S10), the OFF signal is released (S11). As cycles of the operation for measuring the concentration of carbon monoxide have been completed, it is examined whether or not the cycles of the operation are executed a predetermined number of times (S13). When the number of the cycles is below the predetermined number, the procedure returns back to S3 for repeating the cycle of measuring the concentration of carbon monoxide. When the number of the cycles is equal to the predetermined number, the procedure returns back to S1 for refreshing the catalyst of the counter electrode 22 before repeating the cycle of measuring the concentration of carbon monoxide.

Through repeating the above steps, it is determined whether or not the concentration of carbon monoxide is lower than 20ppm.

Since the counter electrode 22 needs no direct contact with the test gas for measuring the concentration of carbon monoxide, it remains free from the test gas in its engaging space where hydrogen gas is produced. However, when the measurement voltage is decreased and the production of hydrogen gas is lowered on the counter electrode 22, the test gas starts dispersing into the space of the counter electrode 22 and may poison the catalyst of the counter electrode 22. For compensation, the counter electrode 22 is subjected to the refreshment.

Although the examination of whether or not the concentration of carbon monoxide is lower than 20ppm is explained above, its operation can equally be applied to examine any level of concentration other than 20ppm through determining its reference current. The concentration of carbon monoxide can be measured at two or more different points in the single gas concentration detector.

In the embodiment, the measurement voltage is set to 0.1V for detecting a relatively low level of concentration of carbon monoxide. In addition, the filter 25 is made of a porous aluminum material for improving the air permeability.

When the concentration of carbon monoxide is comparatively high, the adsorption of carbon monoxide on the detecting electrode 21 may sharply be increased thus decreasing the current level. It is hence desired to control and minimize the adsorption of carbon monoxide on the catalyst of the detecting electrode 21. For example, when the adsorption of carbon monoxide is controlled by the action of refreshment with the use of a higher level of the measurement voltage, the measurement of carbon monoxide at a higher range of the concentration can be enhanced in sensitivity and accuracy. Also, when the introduction of the test gas into the positive side passage 14a is attenuated by lowering the air permeability of the filter 25 for minimizing the adsorption of carbon monoxide, the measurement of the concentration of carbon monoxide can be improved in accuracy.

The dependency of the gas concentration detector of the embodiment on the flow rate will now be explained referring to Fig. 8. Fig. 8 illustrates measurements of the current I(5) measured at 5 seconds after the startup when 100ml, 200ml, and 300ml per minute of the test gas which includes 80% of hydrogen gas, 5% of nitrogen gas, 100ppm of carbon monoxide gas, and the rest of carbon dioxide gas are introduced separately for 5 minutes into the case 8. The procedure of the measurement is identical to the above described procedure which repeats one cycle, 7 seconds, of the application of the measurement voltage at 0.1V for 5 seconds and the refresh voltage at 1.5V for 2 seconds and records values of the current I(5) which are then plotted. It is found from Fig. 8 that the current I(5) remains substantially unchanged even when the flow rate of the test gas is different between 100ml, 200ml, and 300ml per minute.

This may be caused because the flow of the gas conveyed from the positive side passage 14a to the detecting electrode 21 depends on the migration of hydrogen ions, from the detecting electrode 21 to the counter electrode 22 of the detecting element 1 but not the main flow of the test gas in the gas concentration detector of the embodiment. This is unlike the prior art where the test gas is forcefully conveyed by the effect of a pressure difference in the detector interior.

As the gas concentration detector of the embodiment has the foregoing unique arrangement and operation that is different from the prior art, it can be exposed directly to the main flow of the reformed gas in the fuel cell system and its sensing accuracy will never depend on the flow of the test gas.

(Second Embodiment)

A second embodiment of the gas concentration detector of the present invention will be described referring to Figs. 9 to 11.

The gas concentration detector of this embodiment is substantially identical in construction and functions to that of the first embodiment and only its particular action and steps which are different will be explained in a flowchart showing controlling of the embodiment.

This embodiment is differentiated from the first embodiment by the fact that the measurement of the concentration of carbon monoxide is further improved in sensing accuracy with the use of a current change speed in addition to the detection of the current.

The first embodiment employs the current for measuring the concentration of carbon monoxide. However, if the concentration of carbon monoxide in the test gas is transitionally changed during the measuring period of 5 seconds, the current may fail to follow the change. Then, the current change speed is considered in addition to the current for examining whether the test gas is at its normal state or transition state. This allows the concentration of carbon monoxide to be measured with more accuracy.

The procedure of signal processing in the microcomputer will be explained in more detail.

Referring to Fig. 5 of the first embodiment, there are no abrupt changes in the current at the moments three, four, and five seconds after the startup unlike at the moments one or two seconds after the refreshment. When the concentration of carbon monoxide exceeds about 50ppm, the current after three seconds may slightly drop down. When the concentration of carbon monoxide is lower than 50ppm, the current after three seconds will increase.

The current is moderately increased from three seconds to five seconds when the concentration of carbon monoxide is lower than 50ppm. This may be explained by the fact that when the source voltage is stepped down from 1.5V of the refresh voltage to 0.1V of the measurement voltage, the current overshoots from its original level at 0.1V to a smaller level before gradually returning back to the steady level at 0.1V.

With the concentration of carbon monoxide being higher than 50ppm, the returning back of the current from the overshoot level triggered by shifting from the refresh voltage to the measurement voltage to the steady level at 0.1V may be overwhelmed by the effect of a decrease in the current due to the adsorption of carbon monoxide on the catalyst. As the result, the current will be decreased slowly.

When the concentration of carbon monoxide is below 50ppm, the elevation of the current is canceled by the measuring duration longer than 5 seconds. The current is then decreased moderately. The current of the overshoot level triggered by shifting from the refresh voltage to the measurement voltage can thus return back to its steady level at 0.1V substantially through five seconds. When the concentration of carbon monoxide is 5ppm, the current is decreased by the adsorption of carbon monoxide on the catalyst after five seconds from the startup. Hence, the measuring duration in this embodiment is set to five seconds for ensuring a higher speed of the response.

In the embodiment, the values of the current for determining the concentration of carbon monoxide are recorded during a period where the current increases moderately such as three seconds or five seconds after the startup. As the measurements of the current exhibit a degree of repeatability, any of the data recorded at three seconds, four seconds, and five seconds after the startup can be used in the embodiment.

When the high-speed response is not desired, the duration of measurement may be long and the current that may be measured at six or more seconds after the startup can be used for calculation of the concentration.

The average current change speed CV (a gradient) among the measurements ranging from three seconds to five seconds after the startup is calculated from Equation 7 as a parameter which represents a change in the current. The average current change speed from three seconds to five seconds after the startup is referred to as a velocity CV hereinafter.

$$CV = (I(5)-I(3))/2 \qquad (7)$$

where I(3) is the current measured at three seconds after the startup of measurement following the refreshment and I(5) is the current measured five seconds after the same.

Fig. 9 illustrates a profile of the velocity CV in relation to the concentration of carbon monoxide.

The velocity CV is almost zero when the concentration of carbon monoxide is 10000ppm. This may be explained by the fact that the adsorption of carbon monoxide on the catalyst of the detecting electrode 21 is enhanced by a higher degree of the concentration of carbon monoxide thus interrupting the ionization of hydrogen gas by the catalyst. As shown in Fig. 5, the current drops down to 3.5mA at three seconds after the start up when the concentration of carbon monoxide is 10000ppm but its measurements recorded at four seconds and five seconds after start up exhibit a minimum change.

When the concentration of carbon monoxide is 2000ppm, the absolute value of the velocity CV remains small for the same reason. However, when the concentration of carbon monoxide is lower than 2000ppm, for example, 200ppm, the velocity CV will drop down significantly. It is then apparent that the velocity CV is increased when the concentration of carbon monoxide lower than 200ppm, decreases. Accordingly, the velocity CV in the embodiment can effectively be used for calculating the concentration of carbon monoxide which is not higher than 200ppm.

When the reference values of the current and the velocity CV are determined by the foregoing manner, they are used for judging whether or not the concentration of carbon monoxide is lower than 20ppm to switch the measurement. When the concentration of carbon monoxide is not lower than 20ppm or it is in the transition state, the OFF signal is released. When lower than 20ppm, the ON signal is released.

As shown in Figs. 6 to 9, the gas concentration detector of the embodiment has the reference of the current I(5) measured at five seconds after the start-up set to 37mA and the reference of the velocity CV set to 0.7mA/s for judging whether or not the concentration of carbon monoxide is not higher than 20ppm. When the velocity CV exceeds 0.7mA/s and the current I(5) exceeds 37mA, the ON signal is released to judge that the concentration of carbon monoxide is not higher than 20ppm in a stable condition. Otherwise, the OFF signal is released.

An example where the concentration of carbon monoxide is in the transition state will be explained.

In case the concentration of carbon monoxide is in a transition state shifting from 5ppm to 100ppm during the measuring period of 5 seconds, the current I(5) may not drop down to its steady level (26mA) but stay higher than 37mA as is affected by 5ppm of the concentration of carbon monoxide. Since the current I(5) is smaller than I(3), the velocity CV defined by Equation 7 turns to a negative rate which is lower than the reference level of 0.7mA/s, thus causing the OFF signal to be released. It is hence judged that the concentration of carbon monoxide is in its transition state from a lower level to a higher level.

In case the concentration of carbon monoxide is in a transition from 100ppm to 5ppm during the measuring period of 5 seconds, the current I(5) remains lower than 37mA due to a high concentration of carbon monoxide at the beginning of the measurement, thus allowing the OFF signal to be released. As the concentration of carbon monoxide shifts from 100ppm to 5ppm, the current I(5) is greater than I(3) and the velocity CV is also greater than 0.8mA/s of a rate defined when the concentration of carbon monoxide is 5ppm in a steady state. As the current is lower than the reference level and the velocity CV is greater than the reference rate, it is hence judged that the concentration of carbon monoxide is in its transition state shifting from a higher level to a lower level.

Using the current and the current change speed, it can be judged that the concentration of carbon monoxide is 20ppm or lower even if the flow of the test gas is in either the transition or steady state.

While the measurement in the embodiment is based on the current I(5), its reference may be determined with equal success from the current measured at three or four seconds after the startup or the current after I(5) or their average. Also, the velocity CV is calculated between the currents I(3) and I(5) and its reference may be determined from any combination of the measurements of the current after I(3) and I(5).

Fig. 10 is a flowchart showing a procedure of controlling the gas concentration detector to calculate and judge whether the concentration of carbon monoxide is 20ppm or lower.

When the gas concentration detector is turned on, the counter electrode 22 is fed with 1.5V i.e., a reverse potential of the refresh voltage (S1) and held for 2 seconds (S2) for refreshment of the catalyst of the counter electrode 22. Equally, the detecting electrode 21 is fed with 1.5V of the refresh voltage (S3) and held for 2 seconds (S4) for refreshment of the catalyst of the detecting electrode 21. It is then examined whether or not a signal for stopping the fuel cell is received from a fuel cell controller circuit (not shown) (S5). When the stopping signal is received (yes at S5), the voltage fed to the detecting electrode 21 is canceled (S6) to terminate the operation of the gas concentration detector.

When the signal for stopping the fuel cell is not received (no at S5), the detecting electrode 21 is fed with 0.1V of the measurement voltage (S7). The values of the current are then stored at intervals of a predetermined period in a memory of the microcomputer (S8). In the embodiment, the measurement of the current is carried out at three seconds and five seconds after each application of the measurement voltage. One cycle includes two seconds of the refreshment and five seconds of the measurement, and two of the current data are stored, for a total of seven seconds.

After the current data is stored (yes at S9), the current change speed is calculated using Equation 7 (S14). It is then examined whether or not both the current measured three seconds after the start-up and the current change speed are lower than their respective reference levels (S10). In the embodiment, the reference level of the current measured at 5 seconds after the start-up of the measurement is 37mA and the reference level of the current change speed is 0.7mA/s. When both exceed their reference levels (yes at S10), the ON signal is released (S12).

When at least either the current measured at 5 seconds after or the current change speed is not higher than the reference (no at S10), the OFF signal is released (S11). In the embodiment, the measurement is treated as an off mode when the concentration of carbon monoxide is in the transition state. When the cycle of steps for determining the concentration of carbon monoxide has been completed, it is examined whether or not the cycle of the action is executed a predetermined number of times (S13). When the number of the cycles is below the predetermined number, the procedure returns back to S3 to repeat the cycle of measuring the concentration of carbon monoxide. When the number of cycles is equal to the predetermined number, the procedure returns back to S1 for refreshing the catalyst of the counter electrode 22 before the next cycle of measuring the concentration of carbon monoxide.

Through repeating the above steps, it is determined whether or not the concentration of carbon monoxide is lower than 20ppm.

As the examination whether or not the concentration of carbon monoxide is lower than 20ppm is explained above, its action can equally be applied to examine any level of concentration other than 20ppm. The concentration of carbon monoxide can be measured at multiple points in the single gas concentration detector of the embodiment. Also, the measurement potential is adjusted to the forgoing settings for ease of determining a lower level of concentration of carbon monoxide. In addition, the filter 25 is made of a porous aluminum material and improved air permeability. In case the concentration of carbon monoxide to be calculated is high, the accuracy of the measurement potential can be increased or the air permeability of the filter 25 can be decreased for improving the sensitivity to measure a higher range of the concentration of carbon monoxide. As the result, the accuracy of the measurement of the concentration of carbon monoxide can be enhanced.

The dependency of the current change speed on the flow rate of the gas in the embodiment will now be explained referring to Fig. 11. Fig. 11 illustrates measurements of the average current change speed measured from three seconds to five seconds after the start-up when 100ml, 200ml, and 300ml per minute of the test gas which includes 80% of hydrogen gas, 5% of nitrogen gas, 100ppm of carbon monoxide gas, and the rest of carbon dioxide gas are introduced separately for 300 seconds into the case 8. The procedure of the measurement is identical to the above described procedure which involves alternate application of the measurement voltage at 0.1V for 5 seconds and the refresh voltage at 1.5V for 2 seconds and calculation with Equation 7 of the average current change speed from three seconds to five seconds in the measurement cycles. The average current change speed is then plotted.

It is known from Fig. 11 that the current change speed remains substantially unchanged even when the flow rate of the test gas is varied between 100ml, 200ml, and 300ml per minute. This may be caused because the flow of the gas introduced from the positive side passage 14a depends on the migration of hydrogen ions, from the detecting electrode 21 to the counter electrode 22 of the detecting element 1 but not the main flow of the test gas in the gas concentration detector of the embodiment. This is unlike the prior art where the test gas is forcefully conveyed by the effect of a pressure difference in the detector interior.

As the gas concentration detector of the embodiment has the foregoing unique arrangement and operation different from that of the prior art, it is not dependent on the flow rate and can be exposed directly to the main flow of the reformed gas in the fuel cell system.

(Third Embodiment)

A third embodiment of the gas concentration detector of the present invention will be described referring to Fig. 12.

It is noted for understanding of this embodiment that like components are denoted by like numerals as those of the first and second embodiments and will be explained in no more detail, except for specific components.

It is essential for the carbon monoxide concentration detector of the first or second embodiment to measure and correct the temperature and pressure of the test gas in order to eliminate the effect of variations in the temperature and pressure.

In the carbon monoxide concentration detector of this embodiment, its case 8, identical to that of the first or second embodiment, has a pressure sensor 26 provided across the tube portion thereof and a sheathed thermocouple device, i.e., a temperature sensor 27, covered at its thermocouple with e.g. a metallic enclosure and located thereon close to the filter 25.

The action of the gas concentration detector of this embodiment will now be explained.

The pressure of the test gas is measured by the pressure sensor 26 mounted on the tubular portion of the case 8 and its measurement signal is transferred to the microcomputer. As the gas pressure is increased, the current increases and its current change speed decreases (the gradient of declination is increased) even when the composition of the gas remains uniform. Then, the current and the current change speed are corrected with their respective compensation values which are determined from a data table of pressure and its compensation value stored in the microcomputer in response to the measurement signal from the pressure sensor 26.

Similarly, the temperature of the gas is measured by the temperature sensor 27 mounted to the side of the case 8 for measuring the gas temperature adjacent to the detecting element and its measurement signal is transferred to the microcomputer. As the gas temperature is increased, the current increases and its current change speed decreases even when the composition of the gas remains uniform. Then, the current and the current change speed are corrected with their respective compensation values which are determined from a data table of temperature and its compensation value stored in the microcomputer in response to the measurement signal from the temperature sensor 27.

Using the corrected current and the corrected current change speed, the concentration of carbon monoxide can be measured at higher accuracy by the procedure of the first or second embodiment.

It is also found that the gas concentration detector of each of the first, second, and third embodiments provides no failure of the refreshment while moistening and measuring a hydrogen gas, similar to that of the prior art, containing a high concentration (1%) of carbon monoxide. This may be explained by the fact that the refresh voltage is higher than a water decomposable potential of 1.5V to locally develop on the surface of the catalyst a site where the decomposition of water commonly takes place. This generates an amount of oxygen which then oxidizes the carbon monoxide. In addition, the flow of the test gas introduced into the positive side passage 14a is dependent on the migration of hydrogen ions from the detecting electrode 21 to the counter electrode 22 in the gas concentration detector and is as small as a few milliliters per minute. Accordingly, even when the concentration of carbon monoxide introduced into the detector is very high, its amount is low enough to ensure a successful result of the refreshment.

(Fourth Embodiment)

A fourth embodiment of the gas concentration detector of the present invention will be described referring to Figs. 13 to 24.

As shown in Figs. 13 to 15, a first detector element 101a provided as a carbon monoxide concentration detecting element includes a first electrolyte 120a and a combination of a first detecting electrode 121a and a first counter electrode 122a mounted on both sides of the first electrolyte 120a respectively for measuring the concentration of carbon monoxide gas in a test gas. A carbon monoxide gas concentration detector 107a has the first detecting electrode 121a, the first electrolyte 120a, and the first counter electrode 122a sandwiched between two rubber seals 123 and between a first collector plate 102a which has an output terminal joining thread 112, a recess 113a provided in one side thereof, and a positive side passage 114a communicated to the recess 113a and exposed to the test gas and a second collector plate 102b which has an output terminal joining thread 112, an opening 113b provided in one side thereof, and a negative side passage 114b communicated to the opening 113b and exposed to the test gas , thus forming a layer assembly. Similarly, a second detector element 101b is provided as a hydrogen concentration detecting element including a second electrolyte 120b and a combination of a second detecting electrode 121b and a second counter electrode 122b mounted on both sides of the second electrolyte 120b respectively for measuring the concentration of hydrogen gas in the test gas. A hydrogen gas concentration detector 107b has the second detecting electrode 121b, the second electrolyte 120b, and the second counter electrode 122b sandwiched between two rubber seals 123 and between a third collector plate 102c which has an output terminal joining thread 112, a recess 113c provided in one side thereof, and a positive side passage 114c communicated to the recess 113c and exposed to the test gas and a fourth collector plate 102d which has an output terminal joining thread 112, an opening 113d provided in one side thereof, and a negative side passage 114d communicated to the opening 113d and exposed to the test gas , thus forming a layer assembly. The second collector plate 102b of the carbon monoxide concentration detector 107a is joined at the opening 113b to the fourth collector plate 102d at the opening 113d of the hydrogen concentration detector 107b directly by an insulating seal sheet 129 having an opening provided therein, thus developing an assembly having a third space therein. The assembly is sandwiched between two pairs of insulating rubber strips 103, between two first pressure strips 104, each having two holes provided therein for accepting bolts 106, and between two second pressure strips 105, each having two threaded holes provided therein. As the first pressure strips 104 and the second pressure strips 105 are tightened together with the bolts 106, the assembly is shaped to the gas concentration detector 128.

As shown in Fig. 13, the first space defined by the first detecting electrode 121a and the first collector plate 102a at the recess 113a is spatially isolated from the third spaced defined by the first counter electrode 122a and the second collector plate 102b at the opening 113b by the carbon monoxide concentration detecting element 101a composed of the detecting electrode 121a, the electrolyte 120a, and the counter electrode 122a. Similarly, the second space defined by the second detecting electrode 121b and the third collector plate 102c at the recess 113c is spatially isolated from the third spaced defined by the second counter electrode 122b and the fourth collector plate 102d at the opening 113d by the hydrogen gas concentration detecting element 101b composed of the detecting electrode 121b, the electrolyte 120b, and the counter electrode 122b.

Also, an opening end of the positive side passage 114a of the first collector plate 102a, an opening end of the negative side passage 114b of the second collector plate 102b, an opening end of the positive side passage 114c of the third collector plate 102c, and an opening end of the negative side passage 114d of the fourth collector plate 102d are shut up with filters 125 respectively made of a porous aluminum material. This inhibits the test gas from entering the opening ends of the positive side passages 114a and 114c and the negative side passages 114b and 114d and also prevents contamination with impurities in the four passages 114a, 114b, 114c, and 114d.

A case 108 is configured to have an opening at the top. Also, the case 108 has a groove provided therein for accepting an O-ring 117 for gas leakage protection and a pair of tubes 129 at an outer diameter of 12.7mm (1/2 inch) provided in both sides thereof for communicating to the main flow of the test gas. The two detectors 107a and 107b are anchored to the inner side of an inverted bowl-like cover 109 by four connector terminals 111, each having a thread 115 and a seal 116, extending through corresponding holes provided in the cover 109 and a rubber sheet 110 for insulation and sealing and screwing into the output terminal joining threads 112 of the four collector plates 102a, 102b, 102c, and 102d. The two detectors 107a and 107b are then inserted from the opening into the case 108 before the opening is closed with the cover 109 and sealed with the O ring 117. The four connector terminals 111 are electrically connected to a first direct-current (DC) source 118a, a second DC source 118b, and two ampere meters 119a and 119b acting as the current detector.

The upward arrows shown close to the recesses 113a and 113c in Fig. 13 represent the direction of the flow of the gas to be conveyed towards the first detecting electrode 121a and the second detecting electrode 121b. The downward arrows shown close to the openings 113b and 113d represent the direction of the flow of hydrogen gas generated on the first 122a and the second counter electrode 122b. The leftward arrow shown close to the openings 113b and 113d in Fig. 13 represents the flow of hydrogen gas triggered by the fact that the hydrogen gas generated on the second counter electrode 122b is more than that on the first counter electrode 122a. The rightward large arrow shown at the bottom in Fig. 14 represents the flow of the test gas across the gas concentration detector while the small arrows represent the flow of the gas conveyed towards the first 121a and the second detecting electrode 121b and the flow of the hydrogen gas generated on the first 122a and the second counter electrode 122b.

Referring to Fig. 15, the detector 128 will be explained in more detail. The first electrolyte 120a is made of a fluorine polymer disk having a diameter of 20mm and a hydrogen ionic conductivity and joined directly at one side to the first detecting electrode 121a connected to the positive electrode and at the other side to the first counter electrode 122a connected to the negative electrode. The first electrolyte 120a, the first detecting electrode 121a, and the first counter electrode 122a are assembled to the carbon monoxide concentration detecting element 101a. The first detecting electrode 121a is a carbon cloth of 12mm in diameter made by a powder of carbon attached with a platinum-gold alloy catalyst and bonded with a fluorine polymer. The first counter electrode 122a is a carbon cloth of 12mm in diameter made by a powder of carbon doped with a platinum-ruthenium alloy catalyst and bonded with a fluorine polymer. Similarly, the second electrolyte 120b is made of a fluorine polymer disk having a diameter of 20mm and a hydrogen ionic conductivity and joined directly at one side to the second detecting electrode 121b connected to the positive electrode and at the other side to the second counter electrode 122b connected to the negative electrode. The second electrolyte 120b, the second detecting electrode 121b, and the second counter electrode 122b are assembled to the hydrogen gas concentration detecting element 101b. Each of the second detecting electrode 121a and the second counter electrode 122b is a carbon cloth of 12mm in diameter made by a powder of carbon doped with a platinum-ruthenium alloy catalyst and bonded with a fluorine polymer.

The two rubber seals 123 are provided at both sides close to and on the edge of the outer side of the first electrolyte 120a and the outer side of the second electrolyte 120b respectively. The first electrolyte 120a is sandwiched between the first detecting electrode 121a and the first counter electrode 122a and between the two rubber seals 123 and bonded together at a temperature of 130°C by the process of a hot press. Equally, the second electrolyte 120b is sandwiched between the second detecting electrode 121b and the second counter electrode 122b and between the two rubber seals 123 and bonded together at a temperature of 130°C by the process of a hot press.

In the embodiment, for maximizing the performance to measure the concentration of carbon monoxide, the catalyst of the first detecting electrode 121a is selected from platinum-gold alloys and the catalyst of the first counter electrode 122a is selected from platinum-ruthenium alloys. The catalyst may be platinum or any combination of platinum and another noble metal theoretically. More particularly, the catalyst of the first detecting electrode 121a and the catalyst of the first counter electrode 122a are not limited to a platinum-gold alloy and a platinum-ruthenium alloy respectively, but may be any applicable materials to be easily poisoned and hardly poisoned respectively. Equally, although the catalyst of the second detecting electrode 121b or the second counter electrode 122b is selected from platinum-ruthenium alloys for maximizing the performance to measure the concentration of hydrogen gas in the embodiment, it theoretically may be platinum or a combination of platinum and another noble metal. More specifically, the catalyst of the second detecting electrode 121b and the catalyst of the second counter electrode 122b are not limited to a platinum-ruthenium alloy but may be any applicable material which is hardly poisoned.

Referring to Fig. 13, the carbon monoxide concentration detecting element 101a is then joined at one side to the first collector plate 102a made of a planar stainless steel 30mm wide and 7mm thick having the recess 113a of a tubular shape 4mm deep and 9mm in diameter, the positive side passage 114a having a diameter of 3.5mm communicated to the recess 113a and exposed to the flow of the test gas, and the output terminal joining thread 112 and at the other side to the second collector plate 102b made of a planar stainless steel 30mm wide and 7mm thick having a recess of a tubular shape 4mm deep and 9mm in diameter, the opening 113b being 3.5mm in diameter provided in the recess, the negative side passage 114b having a diameter of 3.5mm communicated to the opening 113b and exposed to the flow of the test gas, and the output terminal joining thread 112. A pair of sheet partitions 124a and 124b are provided at the opening ends of the positive side passage 114a in the first collector plate 102a and the negative side passage 114b in the second collector plate 102b for inhibiting hydrogen gas produced on the first counter electrode 122a from flowing into the opening end of the positive side passage 114a.

Similarly, the hydrogen gas concentration detecting element 101b is joined at one side to the third collector plate 102c made of a planar stainless steel 30mm wide and 7mm thick having the recess 113c of a tubular shape 4mm deep and 9mm in diameter, the positive side passage 114c having a diameter of 3.5mm communicated to the recess 113c and exposed to the flow of the test gas, and the output terminal joining thread 112 and at the other side to the fourth collector plate 102d made of a planar stainless steel 30mm wide and 7mm thick having a recess of a tubular shape 4mm deep and 9mm in diameter, the opening 113d being 3.5mm in diameter provided in the recess, the negative side passage 114d having a diameter of 3.5mm communicated to the opening 113d and exposed to the flow of the test gas , and the output terminal joining thread 112. A pair of sheet partitions 124c and 124d are provided at the opening ends of the positive side passage 114c in the third collector plate 102c and the negative side passage 114d in the fourth collector plate 102d for inhibiting hydrogen gas produced on the second counter electrode 122b from flowing into the opening end of the positive side passage 114c.

The insulating seal sheet 129 made of a silicon resin and having an opening of 3.5mm in diameter provided therein to face the openings 113b and 113d of the second collector plates 102b and the fourth collector plate 102d is sandwiched between the 3.5mm diameter opening 113b at the carbon monoxide concentration detecting element 101a side of the second collector plate 102a and the 3.5mm diameter opening 113d at the hydrogen gas concentration detecting element 101b side of the fourth collector plate 102d, thus developing a third space which is common to both the carbon monoxide concentration detector and the hydrogen gas concentration detector. Accordingly, the state of gas in the third space can be stabilized as soon as possible by shifting towards the first counter electrode 122a the hydrogen gas which has been generated on the second counter electrode 122b and is more than hydrogen gas generated on the first counter electrode 122a, hence contributing to the reduction of the startup time.

The surfaces at the recess 113a and the positive side passage 114a of the first collector plate 102a, at the opening 113b and the negative side passage 114b of the second collector plate 102b, at the recess 113c and the positive side passage 114c of the third collector plate 102c, and at the recess 113d and the negative side passage 114d of the fourth collector plate 102d are satin finished at roughness by sand blasting. This provides a hydrophilic property thus encouraging the drainage of condensed water generated by temperature change. The other surfaces of the first collector plate 102a, the second collector plate 102b, the third collector plate 102c, and the fourth collector plate 102d other than at the recess 113a and the positive side passage 114a, at the opening 113b and the negative side passage 114b, at the recess 113c and the positive side passage 114c, and at the recess 113d and the negative side passage 114d are smoothly finished to have an average surface roughness of not higher than 1.6μm for providing improved sealing and contact with the first detecting electrode 121a, the first counter electrode 122a, the second detecting electrode 121b, and the second counter electrode 122b.

The recesses 113a and 113b, the openings 113b and 113d, and the positive and negative side passages 114a, 114b, 114c, and 114d are not limited to the tubular shape, the stepped tubular shape, and the round shape of the embodiment but may be configured to any shape and size adapted for passing the test gas without difficulty.

Fig. 13 also shows a detecting circuit including the first DC source 118a, the second DC source 118b, the first ampere meter 119a, and the second ampere meter 119b acting as a current detector. The first DC source 118a and the first ampere meter 119a are connected in series by cables for measuring the current between the two connector terminals 111 which are in turn connected to the first collector plate 102a and the second collector plate 102b respectively. Similarly, the second DC source 118b and the second ampere meter 119b are connected in series by cables for measuring the current between the two connector terminals 111 which are in turn connected to the third collector plate 102c and the fourth collector plate 102d respectively. The outputs of the first ampere meter 119a and the second ampere meter 119b are connected to a microcomputer (not shown). The microcomputer calculates the concentration of carbon monoxide gas and the concentration of hydrogen gas from the currents measured by the first 119a and the second ampere meter 119b while continuously controlling the voltages at the first DC source 118a and the second DC source 118b for refreshing the catalysts attached in the first detecting electrode 121a, the first counter electrode 122a, the second detecting electrode 121b, and the second counter electrode 122b.

While the first ampere meter 119a and the second ampere meter 119b are connected for measuring the currents in the embodiment, they may be replaced by corresponding resistors for measuring a voltage between two ends.

The action of the gas concentration detector of this embodiment will now be described.

The test gas is taken into the positive side passage 114a in the first collector plate 102a by the action of hydrogen ion migration from the first detecting electrode 121a to the first counter electrode 122a and received by the recess 113a. As the recess 113a is exposed to the first detecting electrode 121a, the test gas can propagate and disperse uniformly throughout the carbon cloth of the first detecting electrode 121a before reaching the catalyst. Equally, the test gas is taken into the positive side passage 114c in the third collector plate 102c by the action of hydrogen ion migration from the second detecting electrode 121b to the second counter electrode 122b and received by the recess 113c. As the recess 113c is exposed to the second detecting electrode 121b, the test gas can propagate and disperse uniformly throughout the carbon cloth of the second detecting electrode 121b before reaching the catalyst.

The first DC source 118a and the second DC source 118b are controlled by the microcomputer and their voltages are applied to and between the first collector plate 102a and the second collector plate 102b and between the third collector plate 102c and the fourth collector plate 102d respectively. This voltage application starts the chemical reaction of hydrogen gas in the test gas on the catalyst of the first 121a and the second detecting electrode 121b expressed by Formula 1 and on the catalyst of the first 122a and the second counter electrode 122b expressed by Formula 2 respectively.

As expressed by Formula 1, the hydrogen gas dissociates on the first detecting electrode 121a and the second detecting electrode 121b and their hydrogen ions ($H^+$) are passed through the first electrolyte 120a and the second electrolyte 120b and received by the first counter electrode 122a and the second counter electrode 122b respectively where they receive electrons ($e^-$) as expressed by Formula 2 to release hydrogen gas. The hydrogen gas fills up the recesses 113b and 113d of the second and fourth collector plates 102b and 102d and runs through the negative side passages 114b and 114d before being released to the main flow of the test gas. It is hence essential to have the test gas exposed directly to the first 121a and the second detecting electrode 121b but not the first 122a and the second counter electrode 122b.

Since the dissociation of the hydrogen gas takes place on the first 121a and the second detecting electrode 121b under the presence of hydrogen, the inner pressure in the positive side passages 114a and 114c is decreased thus allowing the test gas to enter the positive side passages 114a and 114c. Meanwhile, the hydrogen gas developed on the first 122a and the second counter electrode 122b is discharged through the negative side passages 114b and 114d. Accordingly, the detectors 107a and 107b serve as pumps and drive the test gas containing hydrogen gas to enter the positive side passages 114a and 114c with the application of no pressure.

As electrical closed circuits are developed between the carbon monoxide condensation detector 107a and the first DC source 118a and between the hydrogen gas condensation detector 107b and the second DC source 118b under the presence of hydrogen gas, they release currents corresponding to the hydrogen ionic conductivity.

When carbon monoxide is contained in the test gas, it is adsorbed on the surface of the platinum-gold alloy catalyst of the first detecting electrode 121a which is thus poisoned. As the result, the reactions expressed by Formula 1 and Formula 2 are interrupted and the flow of the current between the carbon monoxide concentration detector 107a and the first DC source 118a will be decreased. The current is measured and its signal is processed by the microcomputer which in turn generates and releases a signal output corresponding to the concentration of carbon monoxide gas.

However, once the concentration of carbon monoxide has been measured by the above steps, the catalyst remains holding the carbon monoxide and can decrease the current level hence allowing no more measurement of the concentration. It is thus necessary for repeating the measurement to revive (or refresh) the catalyst.

The refreshment allows the hydrogen gas concentration detector 107b to generate a current corresponding to the concentration of hydrogen gas in the test gas. The current is then transferred to the microcomputer where it is converted into a signal corresponding to the concentration of hydrogen gas.

As the catalyst of the platinum-ruthenium alloy of the second detecting electrode 121b in the hydrogen gas concentration detector 107b is also poisoned by carbon monoxide, but less than the platinum-gold alloy catalyst, the current between the hydrogen gas concentration detector 107b and the second DC source 118b and thus the accuracy of the concentration of hydrogen gas will gradually be decreased. It is hence needed for repeating the measurement of the concentration of hydrogen gas to refresh the catalyst.

In the embodiment, the microcomputer is controlled to apply a measurement voltage and a refresh voltage alternately and repeatedly in a predetermined number of cycles between the first collector plate 102a and the second collector plate 102b and between the third collector plate 102c and the fourth collector plate 102d. The periodic application of the refresh voltage can thus revive the function of the catalyst. This may be explained by the fact that oxygen is generated through the decomposition of water in the test gas due to the application of refresh voltage as expressed by Formula 3 and the reaction between oxygen and carbon monoxide adsorbed on the catalyst is conducted as expressed by Formula 4 thus to release carbon dioxide and eliminate the carbon monoxide.

It is determined according to the embodiment that the measurement voltage supplied to either the first 118a and the second DC source 118b is 0.1V and the refresh voltage is 1.5V which is higher than both the measurement voltage and the potential for deposition of water (an ideal value being 1.23V). Also, the duration of measurement is 5 seconds and the duration of refreshment is 2 seconds, the total of 7 seconds equal to one cycle.

The described steps involve detecting the current intermittently and releasing from the microcomputer a signal corresponding to the concentration of hydrogen gas and a signal corresponding to the concentration of carbon monoxide.

The processing of the signals with the microcomputer will be described in more detail.

For a first evaluation process, seven different types of the gas are prepared containing respectively 10000ppm, 2000ppm, 200ppm, 100ppm, 50ppm, 20ppm, and 5ppm of carbon monoxide and commonly 80% of hydrogen gas, 5% of nitrogen gas, and a remaining percentage of carbon dioxide. The seven different gases are supplied in a sequence, 10000ppm for 30 minutes, 2000ppm for 10 minutes, 200ppm for 10 minutes, 100ppm for 10 minutes, 50ppm for 10 minutes, 20ppm for 10 minutes, and 5ppm for 40 minutes, and after being moistened by a bubbler, introduced into the case 8 of the carbon monoxide gas detector for measuring the current at each step.

For a second evaluation process, seven different types of the gas are prepared containing respectively 10000ppm, 2000ppm, 200ppm, 100ppm, 50ppm, 20ppm, and 5ppm of carbon monoxide and commonly 50% of hydrogen gas, 5% of nitrogen gas, and a remaining percentage of carbon dioxide. Similar to the first evaluation step, the seven different gases are supplied in a sequence, 10000ppm for 30 minutes, 2000ppm for 10 minutes, 200ppm for 10 minutes, 100ppm for 10 minutes, 50ppm for 10 minutes, 20ppm for 10 minutes, and 5ppm for 40 minutes, and after being moistened by a bubbler, introduced into the case 8 of the carbon monoxide gas detector for measuring the current.

It is assumed throughout the evaluation processes that the test gas is sampled just after the start-up of the reforming device. Also, the flow rate of the test gas is set to 100ml per minute for the measurement of both the first and second estimation processes.

The time for measurement is varied between the different levels of the concentration of carbon monoxide in the test gas in order to simulate the performance of the reforming device just after the start-up where the concentration of carbon monoxide is high at the beginning and then decreased to 5ppm at a normal operation.

Fig. 16 is a diagram showing the profile of currents measured by the first ampere meter 119a which correspond to different levels of the concentration of carbon monoxide in the first estimation process. Fig. 18 is a diagram showing the profile of currents measured by the first ampere meter 119a which correspond to different levels of the concentration of carbon monoxide in the second evaluation process. Both profiles represent the current at five seconds after the refreshment.

As is apparent from Figs. 16 and 18, the current in every case drops down sharply one second or two seconds after the refreshment. It is presumed that when the supply is stepped down from the refresh voltage level (1.5V) to the measurement voltage level (0.1V), the distribution of water along the membrane thickness which acts as a hydrogen ion carrier in the first electrolytic membrane 120a takes a certain length of time before it is settled down.

The current at one to two seconds after the refreshment is hence unstable and its measurement is not desirable for calculating the concentration of carbon monoxide. It would be understood that the measurements of the current at one second and two seconds and their changes from one second to two seconds or from two seconds to three seconds, shown in Figs. 16 and 18, are hardly dependent on the concentration of carbon monoxide.

In the prior art, the concentration of carbon monoxide is calculated from the current at t=0 where the supply voltage is shifted from the refresh voltage to the measurement voltage and may thus be unfavorable in the repeatability and the steadiness. This embodiment of the present invention allows the concentration of carbon monoxide to be calculated from the current measured three seconds after the refreshment or when the ionic conductivity of the electrolytic membrane has been stable. Accordingly, the concentration of carbon monoxide calculated can be improved in both the repeatability and the steadiness.

Fig. 17 is an enlargement of the profile of measurements from three seconds to five seconds shown in Fig. 16. Similarly, Fig. 19 is an enlargement of the profile of measurements from three seconds to five seconds shown in Fig. 18.

As is apparent from Figs. 17 and 19, the measurements of the current at three, four, or five seconds after the refreshment exhibit no abrupt gradients such as at one second or two seconds, but exhibit moderate curves. Each measurement of the current precisely depends on the concentration of carbon monoxide. This may be explained by the fact that, as the voltage of application is shifted, the duration of three seconds after the refreshment is a transition where two different aspects are present; the distribution of water along the thickness of the first electrolyte 120a remains not steady and the adsorption of carbon monoxide on the catalyst of the first detecting electrode 121a is quickly increased in proportion with the concentration of carbon monoxide.

After three seconds, the distribution of water along the thickness of the first electrolyte 120a becomes stable and the current stays at a level corresponding to the adsorption of carbon monoxide on the catalyst in the transition. Although the measurement of the current after three seconds is stable, it may gradually be varied thereafter due to the continuation of the adsorption of carbon monoxide on the catalyst. As is clearly understood from Figs. 17 and 19, the concentration of carbon monoxide can be determined even after three seconds by keeping the timing of sampling the current constant. If the duration of measurement is too short, there is not enough time for the current to be stabilized. Therefore, the measurement of the current may be stabilized by increasing the duration of measurement longer than the duration of refreshment.

The duration of measurement is not limited to 5 seconds with the duration of refreshment of 2 seconds in the embodiment but may be increased; for example, the measurement of the current after six seconds is used.

Fig. 20 illustrates a profile of the current measured at five seconds after by the first ampere meter 119a in relation to the concentration of carbon monoxide gas in the first and second estimation processes. Similarly, Fig. 21 illustrates a profile of the current measured at five seconds after by the second ampere meter 119b in relation to the concentration of carbon monoxide gas. For the first estimation, the current measured at five seconds after by the first ampere meter 119a is denoted by Ic1(5) and the current measured at five seconds after by the second ampere meter 119b is denoted by Ih1(5). For the second estimation, the current measured five seconds after by the first ampere meter 119a is denoted by Ic2(5) and the current measured at five seconds after by the second ampere meter 119b is denoted by Ih2(5).

In the first estimation process, when the concentration of carbon monoxide is 10000ppm, the current IC1(5) is as low as 3.5mA. Similarly , in the second estimation process, the current Ic2(5) is as low as 3.4mA. This results from the fact that when the concentration of carbon monoxide is high, the adsorption of carbon monoxide on the catalyst of the first detecting electrode 121a is increased thus to decrease the ionization of hydrogen of the catalyst. The lower the concentration of carbon monoxide, the more the adsorption of carbon monoxide on the catalyst of the first detecting electrode 121a is decreased. Accordingly, the ionization ability of hydrogen of the catalyst will be enhanced thus elevating the current.

It is generally said that when the concentration of carbon monoxide in a hydrogen gas is lower than 20ppm, it hardly affects the performance of the fuel cell. We determined from experiments a desired level of the current used to switch for judging whether the concentration of carbon monoxide is higher than 20ppm or not. More specifically, it is contemplated that an OFF signal is released when the concentration of carbon monoxide is 20ppm or higher and an ON signal is released when lower than 20ppm.

As shown in Fig. 20, the current Ic1(5) is 37mA, when the concentration of hydrogen gas is 80% and the concentration of carbon monoxide is 20ppm. Also, the current Ic2(5) is 26mA when the concentration of hydrogen gas is 50% and the concentration of carbon monoxide is 20ppm. Apparently, when the concentration of hydrogen gas in the test gas is decreased with the concentration of carbon monoxide remaining unchanged, the current drops down. A change in the current is estimated to be likely linear from 50% to 80% of the concentration of hydrogen gas. The current can thus be calculated at 20ppm of the concentration of carbon monoxide in relation to the concentration of hydrogen gas using Equation 8 of the embodiment. The calculated current is then set as a reference Ith in the gas concentration detector and used for examining whether or not the concentration of carbon monoxide is lower than 20ppm.

$$I_{th} = 0.367 \times H_2(\text{concentration of hydrogen})+7.64 \quad (8)$$

As is apparent from Fig. 21, the current Ih1(5) stays at 153mA but not changed regardless of any change in the concentration of carbon monoxide, when the concentration of hydrogen gas is 80%. Also, the current Ih2(5) is 109mA, when the concentration of hydrogen gas is 50%. Accordingly, a change in the current measured by the second ampere meter 119b is likely linear from 50% to 80% of the concentration of hydrogen gas. The concentration of hydrogen gas can thus be calculated from the measurement of the current using Equation 9 of the embodiment. Finally, the reference of the current at 20ppm of the concentration of carbon monoxide can be determined from the calculated concentration of hydrogen gas using Equation 8.

$$H_2 = 0.682 \times I(\text{current})-24.346 \quad (9)$$

Accordingly, when the current measured by the first ampere meter 119a exceeds the reference calculated from Equation 8, it is judged that the concentration of carbon monoxide is lower than 20ppm and the ON signal is released. While the reference is determined from the current measured at five seconds after in this embodiment, it may be based on any other measurement recorded at three or four seconds or after five seconds.

Fig. 22 is a flowchart showing a procedure of controlling the action of the gas concentration detector to calculate and judge whether the concentration of carbon monoxide is lower than 20ppm or not.

When the gas concentration detector is turned on, the first and second counter electrodes 112a and 122b are fed with 1.5V of the refresh voltage (S1) and held for a standby time of 2 seconds (S2) for refreshment of the catalysts of the counter electrodes 112a and 112b. Then, the first 121a and the second detecting electrode 121b are fed with 1.5V of the refresh voltage (S3) and held for a standby time of 2 seconds (S4) for refreshment of the catalysts of the two detecting electrodes 121a and 121b. It is then examined whether or not a signal for stopping the fuel cell is received from a fuel cell controller circuit (not shown) (S5). When the disconnect signal is received (yes at S5), the voltage fed to the two detecting electrodes 121a and 121b is canceled (S6) to terminate the action of the gas concentration detector.

When the signal for disconnecting the fuel cell is not received (no at S5), the first 121a and the second detecting electrode 121b are fed with 0.1V of the measurement voltage (S7). The measurements of the current recorded by the first ampere meter 119a and the second ampere meter 119b are then stored at intervals of a predetermined period in a memory of the microcomputer (S8). In the embodiment, the current measured at five seconds after each cycle application of the refreshment and measurement voltages is stored as data. After the current data is stored (yes at S9), the concentration of hydrogen gas and the reference of the current are calculated using Equations 8 and 9 and it is then examined whether or not the current measured by the first ampere meter 119a is lower than the reference (S10).

When the current measured by the first ampere meter 119a is not lower than the reference (yes at S10), the ON signal is released (S12). When the current measured by the first ampere meter 119a is lower (no at S10), the OFF signal is released (S11). After cycles of the action for measuring the concentration of carbon monoxide and the concentration of hydrogen gas have been completed, it is examined whether or not the cycles of the action are executed at a predetermined number of times. When the number of the cycles is below the predetermined number, the procedure returns back to S3 for repeating the cycle of measuring the concentration of carbon monoxide and the concentration of hydrogen gas. When the number of the cycles is equal to the predetermined number, the procedure returns back to S1 for refreshing the catalyst of the counter electrodes before repeating the cycle of measuring the concentration of carbon monoxide and concentration of hydrogen gas.

Through repeating the above steps, the concentration of carbon monoxide is examined to determine whether it is lower than 20ppm or not regardless of any change in the concentration of hydrogen gas.

The first counter electrode 122a and the second counter electrode 122b need no direct contact with the test gas for measuring the concentration of carbon monoxide. Since the first and second counter electrodes 122a and 122b release hydrogen gas during the measurement, their adjoining third space remains free from the test gas. However, when the measurement voltage is decreased and the production of hydrogen gas is lowered on the counter electrodes 122a and 122b, the test gas starts dispersing into the third space adjacent to the counter electrodes 122a and 122b and may poison the catalyst of the counter electrodes 122a and 122b. For compensation, both the first counter electrode 122a and the second counter electrode 122b are subjected to the refreshment.

As the examination whether or not the concentration of carbon monoxide is lower than 20ppm is explained above, its action can equally be applied to examine any other level of the concentration than 20ppm through determining its reference current. The concentration of carbon monoxide can be measured at two or more different points in the single gas concentration detector.

In the embodiment, the measurement voltage is set to 0.1V for detecting relatively lower levels of the concentration of carbon monoxide and the concentration of hydrogen gas. In addition, the filter 125 is made of a porous aluminum material for improving the air permeability.

When the concentration of carbon monoxide is comparatively high, the adsorption of carbon monoxide on the first detecting electrode 121a may sharply be increased thus decreasing the current level. It is hence desired to control and minimize the adsorption of carbon monoxide on the catalyst of the first detecting electrode 121a. For example, when the adsorption of carbon monoxide is controlled by the reaction of refreshment with the use of a higher level of the measurement voltage, the measurement of carbon monoxide at a higher range of the concentration can be enhanced in sensitivity and accuracy. Also, when the introduction of the test gas into the positive side passage 114a is attenuated by lowering the air permeability of the filter 125 for minimizing the adsorption of carbon monoxide, the measurement of the concentration of carbon monoxide can be improved in accuracy.

The dependency of the gas concentration detector of the embodiment on the flow rate will now be explained referring to Figs. 23 and 24. Figs. 23 and 24 illustrate measurements of the current Ic1(5) and Ih1(5) measured at 5 seconds after the refreshment when flow rate of 100ml, 200ml, and 300ml per minute of the test gas which includes 80% of hydrogen gas, 5% of nitrogen gas, 100ppm of carbon monoxide gas, and the rest of carbon dioxide gas are introduced separately for 5 minutes into the case 8. The procedure of the measurement is identical to the above described procedure which repeats one cycle, 7 seconds, of the application of the measurement voltage of 0.1V for 5 seconds and the refresh voltage of 1.5V for 2 seconds and records values of the current Ic1(5) and Ih1(5) which are then plotted. It is found from Figs. 23 and 24 that the currents Ic1(5) and Ih1(5) remain substantially unchanged even when the flow of the test gas is varied between 100ml, 200ml, and 300ml per minute.

This may result from the dependency of the flow of the gas conveyed from the positive side passage 114a of the first collector plate 102a and the positive side passage 114c of the third collector plate 102c to the first detecting electrode 121a and the second detecting electrode 121b respectively on the migration of hydrogen ions, but not the main flow of the test gas , from the first detecting electrode 121a to the first counter electrode 122a of the first detecting element 101a in the gas concentration detector of the embodiment, unlike the prior art where the test gas is forcefully conveyed by the effect of a pressure difference in the detector interior.

As the gas concentration detector of the embodiment has the foregoing unique behavior different from that of the prior art, it can be exposed directly to the main flow of the reformed gas in the fuel cell system and only its sensing accuracy will hardly be dependent on neither the flow of the test gas nor the concentration of hydrogen gas.

(Fifth Embodiment)

A fifth embodiment of the gas concentration detector of the present invention will be described referring to Figs. 25 to 27.

The gas concentration detector of this embodiment is substantially identical in the construction and functions to that of the fourth embodiment and only its particular action and steps in a flowchart of controlling which are different from those of the fourth embodiment will be explained.

This embodiment is differentiated from the fourth embodiment by the fact that the measurement of the concentration of carbon monoxide is further improved in the sensing accuracy with the use of a current change speed in addition to the detection of the current.

The fourth embodiment employs the current for measuring the concentration of carbon monoxide. However, if the concentration of carbon monoxide in the test gas is transitionally changed during the measuring period of 5 seconds, the current may fail to follow the change. Then, the current change speed is concerned in addition to the current for examining whether the test gas is at its steady state or transition state. This allows the concentration of carbon monoxide to be measured with more accuracy.

The procedure of signal processing in the microcomputer will be explained in more detail.

Referring to Figs. 17 and 19 of the fourth embodiment, there are no abrupt changes in the current at the moments at three, four, and five seconds after the refreshment unlike at the moments one or two seconds after the refreshment when the concentration of hydrogen gas is 80% or 50%, thus showing a moderate profile of the current. When the concentration of carbon monoxide exceeds about 50ppm, the current after three seconds may slightly drop down. When the concentration of carbon monoxide is lower than 50ppm, the current after three seconds will increase.

The current is moderately increased from three seconds to five seconds after the refreshment when the concentration of carbon monoxide is lower than 50ppm. This may be explained by the fact that when the supply is stepped down from 1.5V of the refresh voltage to 0.1V of the measurement voltage, the current overshoots from its steady level at 0.1V to a smaller level before gradually returning back to the steady level.

With the concentration of carbon monoxide being higher than 50ppm, the returning back of the current from the overshoot level triggered by shifting from the refresh voltage to the measurement voltage to the steady level at 0.1V may be overwhelmed by the effect of a drop down in the current due to the adsorption of carbon monoxide on the catalyst. As a result, the current will be decreased slowly.

When the concentration of carbon monoxide is lower than 50ppm, the elevation of the current is canceled by increasing the measuring duration from 5 seconds. The current is then decreased moderately. The current of the overshoot level triggered by shifting from the refresh voltage to the measurement voltage can thus return back to its steady level at 0.1V substantially through five seconds. When the concentration of carbon monoxide is 5ppm, the current is decreased by the adsorption of carbon monoxide on the catalyst after five seconds from the startup. Hence, the measuring duration in this embodiment is set to five seconds for ensuring a higher speed of the response.

In the embodiment, the values of the current for determining the concentration of carbon monoxide are recorded during a period where the current increases moderately such as three seconds or five seconds after the refreshment. As the measurements of the current exhibit a degree of the repeatability, any of the values recorded at three seconds, four seconds, and five seconds after the refreshment can be used in the embodiment.

When the high-speed response is not desired, the duration of measurement is increased and the current measured at six or more seconds after the refreshment can be used for calculation of the concentration.

The average current change speed CV (a gradient of the current) among the measurements ranging from three seconds to five seconds after the refreshment is calculated from Equation 7 as a parameter which represents a change in the current. Fig. 25 illustrates a profile of the current change speed CV in relation to the concentration of carbon monoxide when the concentration of hydrogen gas is 80%. It is noted that the average current speed from three seconds to five seconds after the refreshment at 50% of the concentration of hydrogen gas is substantially equal to that at 80% of the concentration of hydrogen gas and thus omitted in the illustration.

As long as the concentration of carbon monoxide is constant, the adsorption of carbon monoxide on the catalyst may be carried out at an equal speed regardless of any change in the concentration of hydrogen gas. It is hence said that the current change speed will hardly be dependent on the concentration of hydrogen gas.

Accordingly, the average current change speed is denoted by CV from three seconds to five seconds after each refreshment, regardless of the concentration of hydrogen gas.

The velocity CV is almost zero when the concentration of carbon monoxide is 10000ppm. This may be explained by the fact that the adsorption of carbon monoxide on the catalyst is enhanced by a higher degree of the concentration of carbon monoxide thus interrupting the ionization of hydrogen gas by the catalyst. As shown in Figs. 17 and 19, the current drops down to 3.5mA at three seconds after which the concentration of carbon monoxide is 10000ppm but its values recorded four seconds and five seconds after the energization exhibit a minimum change as compared with that at three seconds.

When the concentration of carbon monoxide is 2000ppm, the absolute value of the velocity CV remains small by the same reason. However, when the concentration of carbon monoxide is lower than 2000ppm, for example, 200ppm, the velocity CV will drop down significantly. It is then apparent that the velocity CV is increased as the concentration of carbon monoxide, not higher than 200ppm, decreases. Accordingly, the velocity CV in the embodiment can effectively be used for calculating the concentration of carbon monoxide which is not higher than 200ppm.

As the reference values of the current and the velocity CV are determined by the foregoing manner, they are used for judging whether or not the concentration of carbon monoxide is lower than 20ppm to switch the device. When the concentration of carbon monoxide is not lower than 20ppm or it is in the transition state, the OFF signal is released. When lower than 20ppm, the ON signal is released.

As shown in Figs. 20 to 21, the gas concentration detector of the embodiment has the reference of the current measured at five seconds after the refreshment determined using Equations 8 and 9 of the fourth embodiment and the reference of the velocity CV set to 0.7mA/s for judging whether or not the concentration of carbon monoxide is lower than 20ppm. When the velocity CV exceeds 0.7mA/s and the current measured at five seconds after refreshment exceeds its reference, the ON signal is released, according to judgement that the concentration of carbon monoxide is lower than 20ppm in a stable condition. Otherwise, the OFF signal is released.

An example where the concentration of carbon monoxide is in the transition state will be explained.

When the concentration of carbon monoxide is in a transition state from 5ppm to 100ppm during the measuring period of 5 seconds, the current measured at five seconds after may not drop down to its steady level at 100ppm of the concentration of carbon monoxide but stay higher than the reference as the current is affected by 5ppm of carbon monoxide gas in the beginning. Since the current measured five seconds after is smaller than that measured three seconds after, the velocity CV defined by Equation 7 turns to a negative rate which is lower than the reference level of 0.7mA/s, thus causing the OFF signal to be released. This can be achieved when the concentration of carbon monoxide is in its transition state shifting from a lower level to a higher level.

When the concentration of carbon monoxide is in a transition state from 100ppm to 5ppm during the measuring duration of 5 seconds, the current measured at five seconds after remains lower than the reference due to a high concentration of carbon monoxide thus allowing the OFF signal to be released. As the concentration of carbon monoxide shifts from 100ppm to 5ppm, the currents measured at five seconds after the refreshment is greater than that measured three seconds after and the velocity CV is also greater than 0.8mA/s of a rate defined when the concentration of carbon monoxide is 5ppm in a normal mode. As the current is lower than the reference level and the velocity CV is greater than the reference rate, it is hence judged that the concentration of carbon monoxide is in its transition state from a higher level to a lower level.

Using the current and the current change speed, it can be judged that the concentration of carbon monoxide is lower than 20ppm even if the flow of the test gas is in either the transition or normal state.

While the measurement in the embodiment is based on the current measured at five seconds after the refreshment, the reference may be determined with equal success from the current measured at three or four seconds after the refreshment or the current after five seconds or their average. The velocity CV is calculated between the current measured three seconds after and the current measured five seconds after and its reference may be determined from any combination of the values of the current thereafter.

Fig. 26 is a flowchart showing a procedure of controlling the gas concentration detector of the embodiment to calculate and judge whether the concentration of carbon monoxide is 20ppm or lower.

When the gas concentration detector is turned on, the first and second counter electrodes 122a and 122b are fed with 1.5V or a reverse potential of the refresh voltage (S1) and held for 2 seconds (S2) for refreshment of the catalyst of the counter electrodes 122a and 122b. Equally, the first and second detecting electrodes 121a and 121b are fed with 1.5V of the refresh voltage (S3) and held for 2 seconds (S4) for refreshment of the catalyst of the two detecting electrodes 121a and 121b. It is then examined whether or not a signal for stopping the fuel cell is received from a fuel cell controller circuit (not shown) (S5). When the stopping signal is received (yes at S5), the voltage fed to the first 121a and the second detecting electrode 121b is canceled (S6) to terminate the operation of the gas concentration detector.

When the signal for disconnecting the fuel cell is not received (no at S5), the first 121a and the second detecting electrode 121b are fed with 0.1V of the measurement voltage (S7). The values of the current recorded by the first ampere meter 119a and the second ampere meter 119b are then stored at intervals of a predetermined period in a memory of the microcomputer (S8). In the embodiment, the measurement of the current is carried out as data acquisition at three seconds and five seconds after the refreshment at the carbon monoxide concentration detector 107a and five seconds after the refreshment at the hydrogen gas concentration detector 107b. As one cycle includes two seconds of the refreshment and five seconds of the measurement, three of the current data are stored in a total of seven seconds.

After the current data is stored (yes at S9), the reference of the current is calculated using Equations 8 and 9. Also, the current change speed is calculated using Equation 7 (S14). It is then examined whether or not both the current measured at three seconds after the refreshment and the current change speed are lower than their respective reference levels (S10). When both exceed their reference levels (yes at S10), the ON signal is released (S12).

When at least either the current measured at five seconds after or the current change speed is lower than the reference (no at S10), the OFF signal is released (S11). In the embodiment, the measurement is treated as an off state when the concentration of carbon monoxide is in the transition state. After the cycle of steps for determining the concentration of carbon monoxide has been completed, it is examined whether or not the cycles of the action are executed a predetermined number of times. When the number of the cycles is below the predetermine number, the procedure returns back to S3 for repeating the cycle of measuring the concentration of carbon monoxide. When the number of the cycles is equal to the predetermined number, the procedure returns back to S1 for refreshing the catalyst of the first and second counter electrodes 122a and 122b before repeating the cycle of measuring the concentration of carbon monoxide.

Through repeating the above steps, the concentration of carbon monoxide is examined whether it is lower than 20ppm or not and its resultant signal can be released.

As the examination whether or not the concentration of carbon monoxide is lower than 20 ppm is explained above, its action can equally be applied to examine any other level of the concentration than 20ppm with its reference predetermined. The concentration of carbon monoxide can be measured at multiple points in the single gas concentration detector of the embodiment. Also, the measurement potential is adjusted to the forgoing settings for ease of determining a lower level of the concentration of carbon monoxide and the filter 125 is made of a porous aluminum material and improved in the air permeability. In case the concentration of carbon monoxide to be detected is high, the measurement potential can be increased or the air permeability of the filter 125 can be decreased. As the result, the measurement of the concentration of carbon monoxide at a higher range can be enhanced in the accuracy.

The dependency of the current change speed on the flow of the gas in the embodiment will now be explained referring to Fig. 27.

Fig. 27 illustrates values of the average current change speed measured from three seconds to five seconds after the refreshment when 100ml, 200ml, and 300ml per minute of the test gas which includes 80% of hydrogen gas, 5% of nitrogen gas, 100ppm of carbon monoxide gas, and the rest of carbon dioxide gas are introduced separately for 300 seconds into the case 8. The procedure of the measurement is identical to the above described procedure which involves alternate application of the measurement voltage at 0.1V for 5 seconds and the refresh voltage at 1.5V for 2 seconds and the average current change speed from three seconds to five seconds after the refreshment is calculated with Equation 7, and are then plotted.

It is found from Fig. 27 that the current change speed remains substantially unchanged even when the flow of the test gas is varied between 100ml, 200ml, and 300ml per minute. This may result from the dependency of the flow of the gas introduced from the positive side passage 114a on the migration of hydrogen ions, from the first detecting electrode 121a to the first counter electrode 122a of the first detecting element 101a in the gas concentration detector of the embodiment but not the main flow of the test gas, unlike the prior art where the test gas is forcefully conveyed by the effect of a pressure difference in the detector interior.

As the gas concentration detector of the embodiment has the foregoing unique behavior different from that of the prior art, it can be independent of the flow and the concentration of hydrogen gas and improved in the output accuracy.

(Sixth Embodiment)

A sixth embodiment of the gas concentration detector of the present invention will be described referring to Fig. 28.

It is noted for understanding of this embodiment that like components are denoted by like numerals as those of the fourth and fifth embodiments and will be explained in no more detail, except for specific components.

It is essential for the carbon monoxide concentration detector of the fourth or fifth embodiment to measure and correct the temperature and pressure of the test gas.

In the carbon monoxide concentration detector of this embodiment, its case 108 identical to that of the fourth or fifth embodiment has a pressure sensor 126 provided across the tube portion thereof and a sheathed thermocouple device or a temperature sensor 127 covered at its thermocouple with e.g. a metallic enclosure and located thereon close to the filter 125, as shown in Fig. 28.

The action of the gas concentration detector of this embodiment will now be explained.

The pressure of the test gas is measured by the pressure sensor 126 mounted on the tubular portion of the case 108 and its measurement signal is transferred to the microcomputer. As the gas pressure is increased, the current measured at the carbon monoxide concentration detector 107a increases and its current change speed decreases (the gradient of declination is increased) even when the composition of the gas remains uniform. Simultaneously, the current measured at the hydrogen gas concentration detector 107b is increased. Then, the current and the current change speed are corrected with their respective compensation values which are determined from a data table of pressure and its compensation value stored in the microcomputer in response to the measurement signal from the pressure sensor 126.

Similarly, the temperature of the gas is measured by the temperature sensor 127 mounted to the side of the case 108 for measuring the gas temperature adjacent to the detecting element and its measurement signal is transferred to the microcomputer. As the gas temperature is increased, the current measured at the carbon monoxide concentration detector 107a increases and its current change speed decreases even when the composition of the gas remains constant. Simultaneously, the current measured at the hydrogen gas concentration detector 107b is increased. Then, the current and the current change speed are corrected with their respective compensation values which are determined from a data table of temperature and its compensation value stored in the microcomputer in response to the measurement signal from the temperature sensor 127.

Using the corrected current and the corrected current change speed, the concentration of carbon monoxide can be measured at higher accuracy by the procedure of the fourth or fifth embodiment.

As the result, the gas concentration detector of the embodiment is independent of the flow and the concentration of hydrogen gas and can correct any changes in the pressure and temperature.

(Seventh Embodiment)

A seventh embodiment of the gas concentration detector of the present invention will be described referring to Figs. 29 to 35. In this embodiment, a target gas is carbon monoxide.

As shown in Fig. 29, a detector element 204 includes a proton conductive electrolytic membrane 201, two electrodes 202, and two seal members 203. The proton conductive electrolytic membrane 201 is a disk of a fluorine polymer material having a diameter of 1.4 cm. The electrolytic membrane 201 is sandwiched between the two electrodes 202 which are made by a powder of carbon attached with a catalyst of a platinum-gold alloy at 3:1 and bonded to a 1 cm diameter carbon cloth with a fluorine polymer material. Each of the two electrodes 202 is protected at the outer edge with the seal member 203 of a 0.25mm thick silicone polymer for inhibiting the leakage of the gas. As the electrolytic membrane 201 is sandwiched between the two electrodes 202 and between the two seal members 203, they are fixedly bonded together at a temperature of 130°C by the process of a hot press.

A first collector plate 208 is provided on one side of the detecting element 204 which is thus exposed directly to a gas passage 207 extending from an inlet 205 to an output 206. The gas passage 207 is shaped at a width or pitch of 0.5mm within the area of the electrode 202 by cutting the surface of the first collector plate 208 of a stainless steel (e.g. JIS SUS304) to a depth of 0.3mm. The gas passage 207 is not limited to the above described dimensions so long as it can pass a desired flow of the test gas (100 cc/min in this embodiment). The first collector plate 208 is also covered at the surface with a gold plating layer of 1μm thick.

Provided on the other surface of the detecting element 204 is a second collector plate 210 made of a stainless steel (e.g. JIS SUS304) and having a plurality of 1.5mm diameter apertures 209. The second collector plate 210 is also covered at the surface with a gold plating layer of 1μm thick.

A cap is made of a machined stainless steel block (e.g. JIS SUS304) having a gas outlet 211 and a gas chamber 304 therein is provided on the other side of the second collector plate 210 where the electrode 202 is not exposed. The outlet 211 is communicated to a orifice 213 of 0.8mm in diameter provided as a flow controller.

The first collector plate 208, the detecting element 204, the second collector plate 210, and the gas chamber 212 are joined together in this order by four screws 214.

The gas inlet 205 and the gas outlet 206 of the first collector plate 208 are communicated to a gas intake 215 and a gas exhaust 216 respectively which are threaded tubing members. The gas exhaust 216 is further communicated to the output of the orifice 213.

The first collector plate 208 and the second collector plate 210 are connected to a direct-current (DC) source 217 so that the former serves as a positive side and the latter serves as a negative side. An ampere meter 218 is connected as a current detector in series with the DC source 217 between the two collecting plates 208 and 210 for measuring a current therebetween. A signal output of the ampere meter 218 is transferred to a microcomputer 219. The microcomputer 219 performs a given arithmetic action to determine the concentration of carbon monoxide from the current signal and continuously controls the voltage of the DC source 217 to refresh the catalyst.

The operation of the gas concentration detector of this embodiment will now be described.

The test gas is passed across the gas intake 215 and the inlet 205 to the gas passage 207. As the gas passage 207 is exposed directly to the electrode 202, it allows the gas to disperse uniformly throughout the carbon paper of the electrode 202 and thus reach the catalyst. Then, the gas is discharged from the output 206 and the gas exhaust 216. The DC source 217 is controlled by the microcomputer to apply a measurement voltage and a refresh voltage alternately and continuously between the first collector electrode 208 and the second collector electrode 210. In the embodiment, the measurement voltage is set to 1.3V which is higher than the decomposing potential of water (theoretically 1.23V) and the refresh voltage is 4V which is higher than the measurement voltage. The duration of the measurement is 8 seconds while the duration of the refreshment is 2 seconds and thus one cycle takes 10 seconds. As the result of the above action, hydrogen gas in the test gas carries out the reactions denoted by Formulas 1 and 2 on the catalyst at the positive and negative electrodes 202.

The dissociation of hydrogen takes place on the positive side electrode 202 as denoted by Formula 1. Its resultant protons ($H^+$) are migrated through the electrolytic membrane 201 to the negative side electrode 202 where they react with electrons ($e^-$) to generate hydrogen gas as expressed by Formula 2. Accordingly, an electrically closed circuit is developed between the detecting element 204 and the DC source 217 under the presence of hydrogen gas, hence allowing the current to flow corresponding to the conductivity of protons. The hydrogen gas generated on the negative electrode 202 is then discharged through the apertures 209, the gas chambers 212, the outlet 211, and the orifice 213.

Through the above described procedure, the current is measured and the microcomputer 219 releases a signal indicative of the concentration of carbon monoxide.

The process of signal processing in the microcomputer 219 will now be explained in more detail.

Assuming that the test gas is sampled just after the startup of the reforming device, the gas concentration detector of the embodiment is supplied at its gas intake 215 with various types of the gas with 1% of carbon monoxide for 30 minutes, 0.2% for 10 minutes, 100ppm for 10 minutes, 20ppm for 10 minutes, and 5ppm for 60 minutes, which are gradually reduced in concentration and moistened. The flow rate of the test gas is 100cc/minute in the measurement.

Fig. 30 illustrates profiles of values of the current recorded by the ampere meter 218. The profile a) is with 1% of carbon monoxide, the profile b) is with 100ppm, and the profile c) is with 5ppm. Each profile represents one cycle (8 seconds) of time. As is apparent from the profile a), the current output rises and falls alternately and remains unstable even at a later half of the cycle (from three to eight) when the concentration of carbon monoxide is high. This may be explained by the fact that the adsorption of carbon monoxide on the catalyst of the electrode for decreasing the current and the refreshment of the catalyst by the reaction between adsorbed carbon monoxide and oxygen produced by the decomposition of water in the test gas, as denoted by Formulas 3 and 4, are repeated alternately.

Accordingly, the site on the catalyst where water is decomposed to yield oxygen can never be completely covered with carbon monoxide and contrary to the prior art, the output of a gas concentration detector returns to its steady level with time, even when the gas with % of carbon monoxide is introduced.

When the concentration of carbon monoxide is decreased to as low a level as 100ppm, the current gradually decreases at the later half (5 seconds) of the cycle as shown in Fig. 30b. This may be explained by the fact that the lower concentration of carbon monoxide produces an abundant adsorption area on the catalyst thus decreasing the probability for a reaction between oxygen and carbon monoxide expressed by Formula 4. As the result, the poisoning of the catalyst will cause the current output to be decreased.

Furthermore, when the concentration of carbon monoxide is decreased to 5ppm, the current output remains almost unchanged at the later half of the cycle as shown in Fig. 30c. This may result from nearly no adsorption of carbon monoxide on the catalyst which thus produces no change in the current output.

It is found from the above description that the profile of the current output is varied at the later half of the cycle depending on the concentration of carbon monoxide. Then, the average current change speed MV (equivalent to a gradient) in the later half of five seconds is calculated as a parameter which represents a change in the current, using Equation 10. In Equation 10, I(3) and I(8) represent the currents measured at three seconds and eight seconds respectively after the startup of the cycle.

$$MV=(I(8)-I(3))/5 \qquad (10)$$

Fig. 31 illustrates a variation of MV in relation to the concentration of carbon monoxide. MV is unstable when the concentration is high. When the concentration is decreased to 100ppm or lower, MV exhibits no abrupt change and becomes stable at a given level. However, as shown in Fig. 31, unstable portions of MV at high concentration overlaps with the dotted portion A at 100ppm of the concentration, with the dotted portion B at 20ppm, and with the dotted portion C at 5ppm. It is hard to discriminate between a higher range of the concentration or portions of a lower range through MV only.

Accordingly, the unstableness of the current at a higher range of the concentration may be used to determine the concentration and the overlap can distinguish among the concentrations. When the current is unstable, its profile significantly rises and falls in every second as shown in Fig. 30a. Therefore, the concentration of carbon monoxide can be judged between a higher range and a lower range from a variation of the parameter or a change in the current.

The variation of the parameter is hence calculated from actual measurements. For ease of the calculation, it is assumed that the variation is equal to a difference between the maximum and the minimum of the current change speed at the later half or five seconds of the cycle of the measurement. The calculation is based on Equations 11 to 14. It is assumed in Equations 11 to 14, V(i) is the current change speed from i to i+1 or a gradient of the current profile, I(i) is the current measured at i seconds, i is the number of seconds ranging from three to seven, VW is a variation in the current change speed, MAX(V(3~7)) is the maximum of the current change speed between V(3) and V(7), MIN(V (3~7)) is the minimum of the same, G(i) is a current change acceleration from i to i+1 or a gradient of the current change speed profile, GW is a variation in the current change acceleration, MAX(G(3~6)) is the maximum of the current change acceleration between G(3) and G(6), and MIN(G(3~6)) is the minimum of the same.

$$V(i)=I(i+1)-I(i),\ i=3,4,5,6,7 \tag{11}$$

$$VM=MAX(V(3\sim7))-MIN(V(3\sim7)) \tag{12}$$

$$G(i)=V(i+1)-V(i),\ i=3,4,5,6 \tag{13}$$

$$GW=MAX(G(3\sim6))-MIN(G(3\sim6)) \tag{14}$$

It is then found from the calculation that the variation VW in the current change speed partially overlaps between measurements at a higher range and a lower range of the concentration of carbon monoxide and can hardly determine a difference. Also, Fig. 32 illustrates a profile of the variation GW in the current change acceleration. Although the higher range and the lower range of the concentration partially overlap each other as denoted by the dotted area, the two can generally be distinguished from each other. More specifically, the concentration of carbon monoxide is estimated by examining whether GW is higher than its reference level or not. It is hence proved that through comparison between VW and GW, GW is more distinguishable.

However, if any point exists where the higher range and the lower range of the concentration are hardly discriminated from each other, the detector as a sensor may be decreased in the accuracy of the measurement. Such a point may instantly be developed as the range D in Fig. 32 where GW stays significantly unstable. A variation DGW is then defined as a parameter for expressing the stableness of GW. More specifically, DGW is a difference between the present value GW and the previous value (GWO) in the preceding cycle of the current change speed variation as expressed by Equation 15. When GW is stable, DGW is a minimum. Accordingly, the stableness of GW can be determined from DGW.

$$DGW=GW-GWO \tag{15}$$

Fig. 33 illustrates a profile of DGW. It is apparent that DGW is different between the higher range and the lower range of the concentration. However, as plural points with at $DGW \fallingdotseq 0$ are found in the higher range of the concentration, the concentration of carbon monoxide may hardly be determined at accuracy from DGW. In other words, GW may be equal between two other cycles in the higher range of the concentration.

The output of the detector can thus be improved in the accuracy by determining a level of the concentration of carbon monoxide from examining whether or not both GW and DGW are higher than their respective reference levels.

The accuracy of the output of the detector is examined by the following procedures. It is assumed in the embodiment that the switching action is based on whether the concentration of carbon monoxide exceeds 100ppm or not. More particularly, when the concentration of carbon monoxide is not lower than 100ppm, the OFF signal is released. When it is lower than 100ppm, the ON signal is released.

It is found from Figs. 32 and 33 that the switching action based on 100ppm of the concentration is successfully implemented when the reference of GW is $0.9mA/s^2$ and the reference of DGW is $0.4mA/s^2$. In other words, it is judged that the concentration of carbon monoxide is lower than 100ppm when GW is lower than $0.9mA/s^2$ and the absolute of DGW is lower than $0.4mA/s^2$ and then the ON signal is released.

A profile of the output (denoted as pre-correction) gotten by the above-mentioned method is illustrated at the upper part in Fig.34.. The OFF signal is replaced by the ON signal about when the concentration of carbon monoxide shifts from 100ppm to 20ppm. It is however apparent that the signal output is decreased in accuracy at the time by the occurrence of chattering.

For eliminating chattering, a continuation of the output (a combination of the ON signal and the OFF signal) is used. More specifically, considering that the occurrence of chattering is abrupt, the signal output is corrected through calculating a total number of the ON signals and a total of the OFF signals from those in the present cycle and in an even number of the previous cycles and releasing the signal which is greater in the total number. In the embodiment, four of the previous cycles are used for determining a number of the ON signals and a number of the OFF signals. A total number of the ON signals and a total number of the OFF signals are calculated from the present cycle and the four previous cycles, actually the five cycles. This allows either the ON signals or the OFF signals to be greater in number than the other. It is assumed that the present cycle yields the ON signal and the four previous cycles yield the OFF signals. As the ON signal is one while the OFF signals are four, the present ON signal is regarded as a result of chattering thus allowing the detector to release the OFF signal.

A profile of the output after the correction is shown at the lower in Fig. 34 (denoted as post-correction). When the concentration of carbon monoxide shifts from 100ppm to 20ppm, the output is switched to the ON signal. In the other range of the concentration, the chattering does not occur

Fig. 35 is a flowchart showing a procedure of controlling the gas concentration detector to calculate and examine whether the concentration of carbon monoxide exceeds 100ppm or not.

When the gas concentration detector is turned on, its electrodes 202 are fed with 4V of the refresh voltage (S1) and held for a standby time of 2 seconds (S2). It is then examined whether or not a signal for stopping the fuel cell is received from a fuel cell controller circuit (not shown) (S3). When the disconnect signal is received (yes at S3), the voltage fed to the electrode 202 is canceled (S4) to terminate the action of the gas concentration detector.

When the signal for stopping the fuel cell is not received (no at S3), the electrodes 202 are fed with 1.3V of the measurement voltage (S5). The measurements of the current are then stored at intervals of a predetermined period (one second in the embodiment) in a memory of the microcomputer 219 (S6).

After the current data in eight seconds are stored (yes at S7), the current change speed V(i) is calculated using Equation 11 (S8). Similarly, the current change acceleration G(i) is calculated from V(i) using Equation 13 (S9). Then, a variation of the current change acceleration GW is calculated from G(i) using Equation 14 (S10) and a difference DGW between GW and GWO (GW in the preceding cycle) is calculated using Equation 15 (S11).

It is then examined whether GW and DGW are lower than their respective reference levels ($0.9mA/s^2$ and $0.4mA/s^2$ respectively in the embodiment) (S12). When both are lower than their reference levels (yes at S12), a signal indicating that the output of the present cycle is the ON signal is stored in the memory of the microcomputer 219 (S13). As the output is the ON signal in the present cycle, one plus the number of the ON signals in a cycle at an even number (four in the embodiment) prior to the present cycle is compared with the number of the OFF signals in the cycle. The even number is stored in the memory (S14). When the number of the ON signals is greater (yes at S14), the ON signal is released (S15) and the procedure jumps to a branch A (returning to S1) in Fig. 35. When the number of the OFF signals is greater (no at S14), the OFF signal is released (S16) and the procedure jumps to the branch A (returning to S1).

When both GW and DGW exceed their reference levels (no at S12), a signal indicating that the output is the OFF signal in the present cycle is stored in the memory of the microcomputer 219 (S17). As the output is the OFF signal in the present cycle, one plus the number of the OFF signals in a cycle at an even number (four in the embodiment) prior to the present cycle is compared with the number of the ON signals in the cycle. The even number is stored in the memory (S18). When the number of the OFF signals is greater (yes at S18), the OFF signal is released (S16) and the procedure jumps to the branch A (returns to S1). When the number of the ON signals is greater (no at S18), the procedure jumps to a branch B for releasing the ON signal (S15) before steps to the branch A (returning to S1).

By repeating the above procedure, it is determined whether or not the concentration of carbon monoxide is not lower than 100ppm.

Accordingly, as the gas concentration detector of the embodiment is arranged to refresh for a high range of the concentration of carbon monoxide, it can thus be improved in the output accuracy.

(Eighth Embodiment)

A gas concentration detector of an eighth embodiment of the present invention will be described referring to Figs. 36 and 37. The test gas in the embodiment is carbon monoxide gas.

The gas concentration detector of this embodiment is substantially identical in the construction to that of the seventh embodiment and its arrangement will be explained in no more detail. Also, the flowchart for controlling and calculating is substantially identical to that of the seventh embodiment and like steps are denoted by like numerals and will be explained in no more detail.

As shown in Fig. 36, the average current change speed MV calculated using Equation 12 (S19). The speed MV is used along with GW and DGW after receiving values of the current in a given period (yes at S7) for selecting the output from either the ON signal or the OFF signal (S20). The procedure of the seventh embodiment is capable of examining from GW and DGW whether the concentration of carbon monoxide is lower than 100ppm or not as shown in Figs. 32 and 33 but fails to examine a lower range, for example 20ppm, of the concentration of carbon monoxide.

Hence, the average current change speed MV is used as a parameter for discriminating between 20ppm and 5ppm of carbon monoxide. As apparent from Fig. 31, MV at 5ppm is greater than that at 20ppm and can be utilized for measuring as a lower level as 20ppm of carbon monoxide. However, the profile of MV shown in Fig. 31 overlaps with the dotted range B at 20ppm and with the dotted range C at 5ppm as explained with the seventh embodiment. It is hence essential for determining the concentration of carbon monoxide to use GW and DGW in addition to MV.

An experiment was conducted where the gas concentration detector was operated by the foregoing flowchart for calculation and controlling. The reference levels of GW and DGW were identical to those of the seventh embodiment while the reference of MV was -0.2mA/s. It was judged for releasing the ON signal that the concentration of carbon monoxide was lower than 20ppm when MV exceeds -0.2mA/s, GW was below $0.9mA/s^2$, and the absolute of DGW was below $0.4mA/s^2$. A result of the signal output is shown in Fig. 37. It is apparent that when the concentration of carbon monoxide shifts from 20ppm to 5ppm, the output turns to the ON signal and produces no chattering.

Accordingly, as the gas concentration detector of the embodiment is arranged to be able to refresh for a high range of the concentration of carbon monoxide and can also be improved in the output accuracy at a lower range of the concentration.

(Ninth Embodiment)

A gas concentration detector of a ninth embodiment of the present invention will be described referring to Figs. 38 and 39. The test gas in the embodiment is carbon monoxide gas.

The gas concentration detector of this embodiment is substantially identical in the construction to that of the seventh embodiment and its arrangement will be explained in no more detail.

The action of the gas concentration detector of the embodiment will be explained.

As shown in Fig. 29, the test gas is passed across the gas intake 215 and the inlet 205 to the gas passage 207. As the gas passage 207 is exposed directly to the electrode 202, it allows the gas to disperse uniformly throughout the carbon paper of the electrode 202 and thus reach the catalyst. Then, the gas is discharged from the output 206 and the gas exhaust 216. A measurement voltage and a refresh voltage are applied under control of the microcomputer alternately and continuously to between the first collector electrode 208 and the second collector electrode 210. In the embodiment, the measurement voltage is set to either 0.3V which is lower than the decomposing potential of water (theoretically 1.23V) when the average current change speed MV equal to that of the eighth embodiment exceeds its reference level (-4mA/s in the embodiment), the variation in the current change acceleration GW is below its reference level ($0.9mA/s^2$ in the embodiment), and the difference of variation DGW is below its reference level ($0.4mA/s^2$ in the embodiment) or 1.3V which is lower than the water decomposing potential when the above requirements are not satisfied or the output of the ampere meter 218 is lower than its reference level (50mA in the embodiment). Preferably, the measurement voltage which is as low as 1.3V not higher than the water decomposing potential may be within a range from 0.1V to 0.4V. When the voltage is lower than 0.1V, the current across the detector is too small to measure precisely. When the voltage is higher than 0.4V, carbon monoxide begins to decompose on the catalyst. Therefore, low concentration of carbon monoxide is not detected with high sensitivity. The measurement voltage from 0.1V to 0.4V provides an accurate gas concentration detector even for low concentration range.

The refresh voltage is 4V, which is higher than the measurement voltage. The duration of the measurement is 8 seconds while the duration of the refreshment is 2 seconds and thus one cycle takes 10 seconds.

As the result of the above action, hydrogen gas in the test gas carries out the reactions denoted by Equations 1 and 2 on the catalysts of the positive and negative electrodes 202.

The dissociation of hydrogen takes place on the positive side electrode 202 as denoted by Formula 1. Its resultant protons ($H^+$) are migrated through the electrolytic membrane 201 to the negative side electrode 202 where they react with electrons ($e^-$) to generate hydrogen gas as expressed by Formula 2. Accordingly, an electrically closed circuit is developed between the detecting element 204 and the DC source 217 under the presence of hydrogen gas, hence allowing the current to flow corresponding to the conductivity of protons. The hydrogen gas generated on the negative electrode 202 is then discharged through the apertures 209, the gas chambers 212, the outlet 211, and the orifice 213.

Through the above described procedure, the current is measured and the microcomputer 219 releases a signal indicative of the concentration of carbon monoxide.

The action of signal processing in the microcomputer 219 will now be explained in more detail, referring to Fig. 38.

When the gas concentration detector is turned on, its electrodes 202 are fed with 4V of the refresh voltage (S21) and held for a standby time of 2 seconds (S22). It is then examined whether or not a signal for stopping disconnecting the fuel cell is received from a fuel cell controller circuit (not shown) (S23). When the disconnect signal is received (yes at S23), the voltage fed to the electrodes 202 is canceled (S24) to terminate the operation of the gas concentration detector.

When the signal for stopping the fuel cell is not received (no at S23), the electrodes 202 are fed with either 0.3V or 1.3V of the measurement voltage depending on the requirements (S25). The values of the current are then stored at intervals of a predetermined period (one second in the embodiment) in a memory of the microcomputer 219 (S26).

When the current is lower than its reference level (50mA) (yes at S27), it is judged that the concentration of carbon monoxide introduced into the gas concentration detector is too high to refresh the element which has been poisoned. Then, the measurement voltage is reset (to 1.3V) (S28) and the procedure jumps to A for refreshing the element (S21). Through the foregoing steps, the element can be protected from over poisoning while the output where the measurement voltage is reset is disabled from the cycle. Accordingly, any unwanted change in the current at the resetting of the voltage will be eliminated hence allowing the measurement of the concentration of carbon monoxide at higher accuracy. As the measurement voltage is reset to 1.3V, the decomposition of water supplies continuously the catalyst with oxygen thus promoting the oxidization of carbon monoxide and avoiding the element from being over poisoned by a higher concentration of carbon monoxide.

When the current is not lower than the reference (no at S27), values of the current recorded in eight seconds are taken as data (no at S29). Then, the average current change speed MV is calculated using Equation 10 (S30).

When the measurement voltage is at its lower level (0.3V in the embodiment) (yes at S31), the average MV is compared with the reference level (S32) and the concentration of carbon monoxide corresponding to the average MV is released (S33). This series of steps will be explained later in more detail.

When the measurement voltage is not at the lower level or stays at 1.3V (no at S31), the current change speed G(i) is calculated using Equation 13 (S34). Then, a variation of the current change acceleration GW is calculated from G(i) using Equation 14 (S35) and a difference DGW between GW and GWO in the preceding cycle is calculated using Equation 15 (S36).

The resultant MV, GW, and DGW are compared with their respective reference levels (S37). It is judged in the embodiment that the concentration of carbon monoxide is lower than 100ppm when MV is not lower than -4mA/s, GW is lower than $0.9mA/s^2$ and, the absolute of DGW is lower than $0.4mA/s^2$ (yes at S37). This inhibits the element from being over poisoned when the measurement voltage is lowered. Accordingly, the measurement voltage is shifted to the lower level (S38) for increasing the accuracy of the output at a lower range of the concentration. More particularly, the concentration at multiple points can be obtained. Then, the procedure jumps to A (returning to S21).

When it is judged no at S37, the concentration of carbon monoxide is not lower than 100ppm and measurement voltage remains at 1.3V without any over poisoning. The procedure then jumps to A (returning to S21).

By repeating the above procedure, the element can be refreshed whenever a higher concentration of carbon monoxide is received. Then, when the concentration of carbon monoxide is lower than 100ppm, the present level of the concentration can be released.

Fig. 39 is a profile of the average MV when the gas concentration detector of this embodiment is operated. It is apparent that when the concentration of carbon monoxide is lower than 100ppm, the average current change speed MV is varied corresponding to the concentration. As denoted by the dotted line in Fig. 39, the concentration of carbon monoxide can be calculated by comparing the present average MV with its reference level: -0.5mA/s at 100ppm, 0mA/s at 20ppm, and 0.4mA/s at 5ppm (S32). More particularly, the absolute value of the concentration can be acquired in addition to the switching action described with the seventh or eighth embodiment. It is noted that the above reference levels of the average MV are different from those of the seventh or eighth embodiments because the measurement voltage employed is different.

Accordingly, while the gas concentration detector of the embodiment is arranged to refresh for a high range of the concentration of carbon monoxide, it can be improved for providing outputs of the concentration of carbon monoxide at multiple points at a lower range of the concentration.

(Tenth Embodiment)

A gas concentration detector of a tenth embodiment of the present invention will be described referring to Figs. 40A to 44. The test gas in the embodiment is carbon monoxide gas. As shown n Fig. 40B, a detector element 304 includes a proton conductive electrolytic membrane 301, two electrodes 302, and two seal members 303. The proton conductive electrolytic membrane 301 is a disk of a fluorine polymer material having a diameter of 14mm. The electrolytic membrane 301 is sandwiched between the two electrodes 302 which are made by a powder of carbon attached with a catalyst of a platinum-gold alloy at 3:1 and bonded to a 10mm diameter carbon cloth with a fluorine polymer material. Each of the two electrodes 302 is protected at the outer edge with the seal member 303 of a 0.25mm thick silicone polymer for inhibiting the leakage of the gas. After the electrolytic membrane 301 is sandwiched between the two electrodes 302 and between the two seal members 303, they are fixedly bonded together at a temperature of 130°C by the process of a hot press.

A first collector plate 305 made of a stainless steel (e.g. JIS SUS316, every stainless steel described hereinafter being made of SUS316) is provided on one side of the detecting element 304, as shown in Fig. 40A. The first collector plate 305 has a first collector plate passage 306 of 4mm in diameter provided therein as the inlet of the test gas and a gas chamber 307 provided of 8mm in diameter to communicate with the first collector plate passage 306 both by machining. As the opening of the gas chamber 307 is smaller than the size of the electrode 302, it is air-tightly shut up with the first collector plate 305.

Provided on the other surface of the detecting element 304 is a second collector plate 308 which is identical in shape to the first collector plate 305. Similarly, the second collector plate 308 has a second collector plate passage 309 provided therein as the inlet of the test gas and a gas chamber 307 provided therein, the other electrode 302 joined air-tightly to the second collector plate 308 to shut up the gas chamber 307.

The surfaces at the passage 306 and the gas chamber 307 of the first collector plate 305 and at the passage 309 of the second collector plate 308 are roughened using acid treatment.

The first collector plate 305, the detecting element 304, and the second collector plate 308 are joined together in this order by fully insulating resin screws 310 so that the first collector plate passage 306 and the second collector plate passage 309 extend in one direction. This allows the first collector plate 305 and the second collector plate 308 to be positioned symmetrically about the detecting element 304, hence eliminating discrimination between the two plates during the assembling process of the gas concentration detector and improving the productivity.

Each of the first collector plate 305 and the second collector plate 308 has a female thread 311 provided in one side thereof for accepting a retaining screw 315 to tighten a washer 314. The two washers 314 of the plates 305 and 308 are connected with a positive lead 312 and a negative lead 313 respectively.

Connected in series between the positive lead 312 and the negative lead 313 are a direct-current (DC) source 316 and an ampere meter 317 provided as a current detector for measuring the current between the two electrodes. The output of the ampere meter 317 is connected to a microcomputer 318. The microcomputer 318 carries out an arithmetic operation of determining the concentration of carbon monoxide from the current measured by the ampere meter 317 and an action of continuously controlling the voltage of the DC source 316 for refreshment of the catalyst.

A positioning of the gas concentration detector of this embodiment is shown in Fig. 41. A bypass conduit 325 made of a stainless steel through which the test gas is conveyed is branched from the main gas supply line to connect between the fuel cell stack and the reformer which is provided for reforming a hydrocarbon fuel such as natural gas or methanol to generate hydrogen gas. The inner surface of the bypass conduit 325 like the surfaces at the gas chamber 307, the first collector plate passage 306, and the second collector plate 309 is roughened using acid treatment.

The gas concentration detector denoted by 320 is fixedly mounted across the bypass conduit 325. In particular, the first collector plate passage 306 and the second collector plate 309 are located so as to open at the downstream of the bypass conduit 325. In Fig. 41, the test gas flows in the direction denoted by the blank arrows.

More specifically, a stainless steel made positive strip 321 and a negative strip 322 which both act as the washers 314 are tightened to the gas concentration detector 320 by screws (which are identical to the screws 315 shown in Fig. 40A). Both the positive strip 321 and the negative strip 322 are fixedly inserted into a positive strip insulator 323 and a negative strip insulator 324 respectively made of a Teflon material and fitted into the wall of the bypass conduit 325. As the result, the gas concentration detector 320 is mechanically joined to the bypass conduit 325 by the positive strip 321 and the negative strip 322. As the positive strip 321 and the negative strip 322 are connected to the positive lead 312 and the negative lead 313 respectively, the gas concentration detector 320 is electrically connected to the outside. However, while the gas concentration detector 320 and the bypass conduit 325 are mechanically joined to each other, the two are electrically insulated from each other.

Fig. 42 is a schematic view of a piping of the fuel cell system with the gas concentration detector. As the hydrocarbon fuel is mixed with a vapor of water and conveyed through a reformer 330, a transformer 311, and a carbon monoxide remover 332, it turns to a hydrogen rich, reformed gas. Simultaneously, carbon monoxide generated during a series of the reactions remains slightly after passing through the carbon monoxide remover 332. Then, in case that the concentration of carbon monoxide in the reformed gas is comparatively high (20ppm or higher in the embodiment), a directional valve 333 is actuated to transfer the carbon monoxide rich gas directly to a burner 336 for protecting the fuel cell 334 from being unfavorably poisoned. For the purpose, the bypass conduit 325 is provided between the carbon monoxide remover 332 and the main supply line communicated to the fuel cell 334 for monitoring the concentration of carbon monoxide in the reformed test gas. When the concentration of carbon monoxide is decreased to lower than 20ppm, the fuel cell 334 is directly supplied with the reformed gas by the operation of the directional valve 333. Accordingly, the gas concentration detector 320 is designed to release a signal which indicates whether the concentration of carbon monoxide is lower than 20ppm or not.

The gas concentration detector 320 is provided locally across the bypass conduit 325 as denoted by the dotted line in Fig. 42. A region encircled by the dotted line of Fig.42 corresponds to the enlarged cross sectional view of Fig. 41. A stainless steel orifice 335 is integrally provided across the bypass conduit 325 at the upstream of the gas concentration detector 320. This permits the bypass conduit 325 to receive a range from 0.1% to 1% of the flow rate of the reformed gas. It is proved throughout preliminary experiments that the above described range of the flow is optimum for conducting quick replacement of the gas in the bypass conduit 325 without significantly interrupting the rated power supplying action of the fuel cell 334. Also, the orifice 335 at the upstream protects the detector from directly receiving a change in the pressure of the reformed gas derived from a change in the load to the fuel cell during the operation.

The gas concentration detector 320 may be provided across a portion of the main line between the carbon monoxide remover 332 and the fuel cell 334. As the temperature of the reformed gas released from the carbon monoxide remover 332 is as high as ranging from about 100°C to 200°C, the direct provision across the main line will deteriorate the electrolytic membrane 301 of the fluorine polymer. The bypass conduit 325 is hence arranged to lower the temperature of the test gas by its effect of spontaneous cooling while the gas runs therethrough. Although the temperature of the gas is varied depending on the operational conditions of the reformer, it is desirably not higher than 90°C in view of the life of the electrolytic membrane 301. The location of the gas concentration detector 320 is favorably determined through reviewing a variety of operating conditions so as to inhibit the test gas from exceeding a temperature of 90°C in the bypass conduit 325. Also, if the bypass conduit 325 is fouled with condensations of the water vapor in the gas at every portion thereof or at the first collector plate passage 306 and the second collector plate passage 309 in the gas concentration detector 320, it may possibly interrupt the flow of the test gas. For protecting from the condensation, the piping arrangement is specifically arranged to the following feature.

As shown in Fig. 42, the bypass conduit 325 is adapted to extend vertical to the ground for passing the test gas towards the ground. Also, the gas concentration detector 320 is oriented with its first collector plate passage 306 and second collector plate passage 309 opening at the ground (the downstream). As the result, the vapor of water contained in the gas can be drained downwardly towards the downstream by its own weight upon being condensed at the bypass conduit 325 or the first 306 and the second collector plate passage 309. Moreover, since the inner surface of the bypass conduit 325 is undulated, it allows the condensations or drops of water to be stuck at a small angle of contact and easily drained downwardly. Accordingly, the bypass conduit 325 can be free from the condensations of water vapor and successfully pass the test gas to the gas concentration detector 320.

The bypass conduit 325 is extended vertical to the ground with its downstream end facing the ground as well as the outlet of the fuel cell 334. Accordingly, any interruption of the bypass conduit 325 with undesired condensations of the water vapor can be eliminated. The downstream end of the bypass conduit 325 may be fed back to the main line between the carbon monoxide remover 332 and the fuel cell 334. In that case, a difference in the pressure between the upstream end and the downstream end in the bypass conduit 325 is too small to ensure the smooth running of the test gas or to avoid a reverse of the flow of the gas, hence decreasing the accuracy of the concentration of carbon monoxide. In this embodiment, the downstream end of the bypass conduit 325 is communicated with the outlet of the fuel cell 334 so that the pressure in the bypass conduit 325 is lower at the outlet than at the inlet by the effect of pressure loss in the fuel cell 334. As the result, the concentration of carbon monoxide can be measured at higher accuracy without suffering from a reverse of the flow.

The operation action of the gas concentration detector of this embodiment will now be explained.

Referring back to Fig. 41, a part of the gas introduced in the direction denoted by the blank arrows at the operating mode (while being energized) of the gas concentration detector 320 flows into the first collector plate passage 306 of the first collector plate 305 which is connected to the positive strip 321. This may be explained by the following steps.

As the first collector plate 305 is supplied at a positive voltage, the reaction by Formula 1 of hydrogen gas in the gas chamber 307 takes place on the catalyst of the electrode 302 exposed to the first collector plate 305 thus separating protons and electrons. When both are combined on the catalyst of the other electrode 302 exposed to the second collector plate 308 by the reaction of Formula 2, they return back to hydrogen gas. In other words, the gas concentration detector 320 performs a pump-driven action (referred to as pumping hereinafter) for transferring the hydrogen gas from the positive side to the negative side. As the result, the gas concentration detector 320 at the operating mode carries out a pumping action for transferring from the positive side to the negative side thus decreasing the amount of hydrogen gas and creating a negative pressure in the gas chamber 307 of the first collector plate 305. Accordingly, the test gas can be drawn out from the first collector plate passage 306.

The pumping action also generates a greater amount of hydrogen gas and increases a pressure in the gas chamber 307 of the second collector plate 308. Accordingly, the hydrogen gas can be discharged out from the second collector plate passage 309.

This allows the test gas to be taken from the first collector plate passage 306 at the positive side but never the second collector plate passage 309. More particularly, the test gas never reaches and poisons the catalyst of the other electrode 302 exposed to the second collector plate 308. It is then unnecessary for this embodiment unlike the prior art to refresh the other electrode 302 at the negative side through periodically applying a reverse of the potential.

The DC source 316 connected between the first collector plate 305 and the second collector plate 308 is controlled by the microcomputer 318 to supply the detecting element 304 with the measurement voltage and the refresh voltage alternately and continuously. In the embodiment, the measurement voltage is in a range from 0.65V to 1.23V, which is higher than the oxidizing potential of carbon monoxide and lower than the decomposition potential of water. The refresh voltage is 1.3V, which exceeds the decomposition potential of water or 1.23V. The duration of the measurement is 8 seconds while the duration of the refreshment is 2 seconds and thus one cycle takes 10 seconds.

As the result of the above action, hydrogen gas in the test gas carries out the reactions denoted by Formulas 1 and 2 on the catalyst at the positive and negative electrodes 302.

The dissociation of hydrogen takes place on the positive side electrode 302 as denoted by Formula 1. Its resultant protons ($H^+$) are migrated through the electrolytic membrane 301 to the negative side electrode 302 where they react with electrons (e-) to generate hydrogen gas as expressed by Formula 2. Accordingly, an electrically closed circuit is developed between the detecting element 304 and the DC source 316 under the presence of hydrogen gas, hence allowing the current to flow corresponding to the conductivity of protons. The current is measured by the ampere meter 317 and the microcomputer 318 connected to the ampere meter 317 releases a signal indicative of the concentration of carbon monoxide.

The operation of signal processing in the microcomputer 318 will now be explained in more detail.

Assuming that the test gas is sampled just after the startup of the reforming device, the gas concentration detector of the embodiment is supplied with various types of the gas at 1% of carbon monoxide for 30 minutes, 0.1% for 10 minutes, 100ppm for 10 minutes, 50ppm for 10 minutes, 20ppm for 10 minutes, 10ppm for 10 minutes, and 5ppm for 40 minutes, which are gradually reduced in the concentration. The test gas further includes 80% of hydrogen, 5% of nitrogen, and the rest of carbon dioxide. The gas is then moistened by a bubbler. The flow rate of the gas for the measurement is 300cc/minute equivalent to 1% of the output (about 30l/min) of the reforming device and its temperature is 80°C.

As the result, the current measured by the ampere meter 317 is gradually decreased after the refresh voltage is applied for two seconds and then replaced by the measurement voltage. This may be explained by the fact that the reaction denoted by Formula 1 is interrupted by the adsorption of carbon monoxide in the test gas on the catalyst of the electrode 302.

The microcomputer 318 records the measurements of the current every one second in its memory. The current is denoted by I(i) where i is a time after the startup of the measurement (seconds) representing i=1, 2, ..., 8 in the embodiment.

When the given duration (8 seconds) of the measurement has elapsed, the microcomputer 318 shifts up the output of the DC source 316 from the measurement voltage to the refresh voltage (1.3V) and simultaneously, starts calculating the current change speed MV (referred to as average poisoning speed hereinafter) in a specific length of time (2 seconds in the embodiment) from the values of the current I(i) using Equation 16. The rate MV is equivalent to a gradient of the current during the measurement (from two seconds before the refreshment to the startup of the refreshment).

$$MV=(I(8)-I(6))/2 \qquad (16)$$

When the refresh voltage is applied, the reaction, expressed by Formula 5, of carbon monoxide adsorbed with hydroxy groups and oxygen produced by electrolytic reaction of water vapor in the test gas takes place on the catalyst of the electrode 302 thus releasing carbon dioxide gas and eliminating carbon monoxide from the catalyst. In Equation 5, (g) represents a gas and (a) is an adsorption.

$$H_2O(g)+CO(a) \rightarrow 2H^++2e^-+CO_2(g) \qquad (5)$$

By repeating the above procedure, the concentration of carbon monoxide can be measured while refreshing the catalyst.

Resultant profiles of the measurements are shown in Figs. 43 and 44. Fig. 43 illustrates the dependency on the concentration of carbon monoxide of the current RI (RI=I(8) in the embodiment) after the predetermined time measurement (8 seconds) or before the refreshment. Fig. 44 illustrates the dependency of the average poisoning speed MV calculated from Equation 16 on the concentration of carbon monoxide. The measurement is carried out five times under equal conditions and its profiles are shown in the drawings.

It is apparent from Fig. 43 that when the concentration of carbon monoxide is shifted from a high level to a lower, the current measured just before the startup of the refreshment exhibits a significant change and can thus highly be dependent on carbon monoxide. However, when the concentration of carbon monoxide is too low, a difference in the current between the measurements becomes greater than a change in the concentration of carbon monoxide. Accordingly as shown in Fig. 43, the values of the current before the refreshment overlap each other at different levels of the concentration as denoted by the thin dotted line. This disables to determine whether the concentration of carbon monoxide is lower than 20ppm or not.

Now, the dependency of the average poisoning speed MV on the concentration of carbon monoxide is examined referring to Fig. 44. When the concentration of carbon monoxide shifts from 20ppm to 10ppm, MV is definitely changed. Also, a difference among the five measurements is hardly notified. It is hence determined whether or not the concentration of carbon monoxide exceeds 20ppm , through examining whether or not MV is lower than a threshold (-0.3mA/s) denoted by the thick dotted line in Fig. 44.

It is however true that MV is substantially equal to the threshold when the concentration of carbon monoxide is about 1%. This may result from the carbon monoxide adsorbed instantly upon introduction of as a high level as 1% of carbon monoxide thus making a change in the current (MV, a gradient) six to eight seconds thereafter very moderate and hardly distinguished from that with a lower concentration of carbon monoxide. Therefore, when MV is solely used for determining the concentration of carbon monoxide, the output of a measurement at 1% of the concentration may be equal to that at 20ppm of carbon monoxide. For compensation, it is concerned that the current RI before the refreshment stays low, as apparent from Fig. 43, due to the vigorous poisoning of the catalyst becoming vigorous when the concentration of carbon monoxide is high. More specifically, the concentration of carbon monoxide is roughly examined using RI and when it is in a low range, for example, at higher than 130mA as denoted by the thick dotted line in Fig. 43, is judged more precisely by comparing MV with its threshold. As the result, the concentration can correctly be determined whether it is lower than 20ppm or not.

There is developed no abrupt change in the current output (response current) in the five times of the measurement, as apparent from Fig. 43, which is a major drawback of the prior art. This may be explained by the fact that the measurement voltage is 1V which is higher than the oxidizing potential of carbon monoxide and lower than the decomposing potential of water. This will be described below in more detail.

As explained with the prior art, any abrupt increase in the current output is caused by the fact that water impregnated in the carbon paper is rapidly discharged when the water increases to a specific amount and that the generation of hydrogen gas is carried out smoothly.

It is understood for avoiding any abrupt change in the current output to allow the discharge of eluted water in its gaseous form before turning to a liquid form in the carbon paper. For the purpose, the measurement voltage is set to a higher level (1V) than 0.4V of the prior art. Accordingly, a great number of water molecules can be transferred together with protons and discharged in its vapor form without turning to its liquid form in the carbon paper.

While the voltage is 1V, a wave indicating the oxidization of adsorbed carbon monoxide appears in a cyclic voltamogram. As a result, carbon monoxide adsorbed in the catalyst can thus be oxidized and released in the form of carbon dioxide from the catalyst. However, we, the inventors, believe that since the current across the detecting element has apparently been changed depending on the concentration of carbon monoxide as shown in Fig. 43, not all of carbon monoxide adsorbed in the catalyst can be oxidized with the application of 1V More particularly, while most of carbon monoxide has been removed by oxidization, some remains adsorbed in the catalyst. The measurement of the current may hence be determined by the balance between adsorption and release under different experimental conditions including the concentration of carbon monoxide and the temperature.

The concentration of carbon monoxide can be measured when the measurement voltage is higher than the oxidizing potential of carbon monoxide. More specifically, the measurement at the voltage higher than the decomposing potential of water is equivalent to that with the refreshment being carried out due to the reaction of Formula 5 taking place upon the adsorption of carbon monoxide. When the measurement is carried out , its resultant current may have a dependency on the concentration of carbon monoxide explained in the seventh and eighth embodiments but will be decreased in the accuracy. It is hence desired for having accurate measurements to set the measurement voltage to a level lower than the decomposing potential of water and the refresh voltage to a level higher than the same. When the measurement voltage is lower than the decomposing potential of water and higher than the oxidizing potential of carbon monoxide, no abrupt change in the current is encountered and measurements of the currents can be obtained at practical accuracy.

According to this embodiment of the arrangement and operation , the gas concentration detector can create no abrupt change in the current measurement.

(Eleventh Embodiment)

A gas concentration detector of an eleventh embodiment of the present invention will be described referring to Figs. 45 and 50. The test gas in the embodiment is carbon monoxide gas.

The gas concentration detector of this embodiment is substantially identical in the construction to that of the tenth embodiment and while like components are denoted by like numerals, its arrangement will be explained in no more detail.

This embodiment is featured by the gas concentration detector 320 located not inside but outside the bypass conduit 325 as shown in Fig. 45. As the gas concentration detector 320 is located outside, it can hardly be limited by the location, size, and shape of the bypass conduit 325 and its installation freedom will be increased.

The gas concentration detector of the embodiment will be explained in more detail.

As shown in Fig. 45, the gas concentration detector 320 is fixedly mounted to a case 340 of stainless steel (e.g. JIS SUS316, the stainless steel being SUS315 hereinafter) identical to the material of the bypass conduit 325 by a couple of washer retaining screws 315 and their washers 314. The two washer retaining screws 315 are screwed into Teflon insulating materials (not shown) which are press fitted into the case 340. The case 340 has threads provided on both ends thereof for joining to the bypass conduit 325 by stainless steel nuts 341.

Also as shown in Fig. 45, the bypass conduit 325 is partially bent to have a tilt against the ground where the gas concentration detector 320 is mounted. The test gas is conveyed in a direction denoted by the blank arrow or towards the ground. The bypass conduit 325 and the case 340 are hydrophilic finished at surfaces as coated with a 0.5μm thick titanium oxide layer which has an anatase type crystalline structure. The titanium oxide layer is deposited by repeating a procedure of immersing the bypass conduit 325 and the case 340 into a titanium contained organic complex solution and then baking them at 500°C under an atmospheric pressure until a desired thickness is obtained. The titanium oxide layer may be less hydrophilic when too thin or easily peeled off when too thick and its desired thickness is determined through a series of experiment ranging from 0.1 μm to 1 μm and preferably from 0.2μm to 0.5μm. It is known that the titanium oxide layer becomes hydrophilic when exposed to ultraviolet rays. It is also found through the experiments that the other regions of the layer not exposed to ultraviolet rays exhibit a level of the hydrophilic property. This may be explained by the fact that as the test gas branched from the carbon monoxide remover 332 to the bypass conduit 325 remains at a high temperature not lower than 100°C, its energy excites some of the titanium atoms on the surface of the titanium oxide layer for promoting reaction of hydroxy groups, hence providing a level of the hydrophilic property. The hydrophilic property may be low as compared with the exposure to ultraviolet rays but still favorable for preventing the fouling with condensations of water vapor. The hydrophilic property in the crystalline structure of the titanium oxide layer is higher of the anatase type than of any rutile type. This may be explained by the fact that the latter is smaller in the bandgap than the former and can easily turn to its exciting state.

As the result, the condensations of water vapor in the test gas when developed in the conduit can be conveyed towards the ground by its own weight and their angle of contact is smaller due to the hydrophilic property of the titanium oxide layer. Accordingly, the condensations of water vapor can hardly be fouled to interrupt the flow of the gas in the conduit.

The gas concentration detector 320 has the first collector plate passage 306 and the second collector plate passage 309 extended vertically to the wall of the bypass conduit 325 while the first collector plate passage 306 is located at the upstream. This allows any condensations of water vapor developed in the first collector plate passage 306 and the second collector plate passage 309 to be drained by their own weight along the first collector plate passage 306 and the second collector plate passage 309 both tilted to the ground, as shown in Fig. 45, and then conveyed in the downward direction of the bypass conduit 325. Accordingly, the fouling of condensations of water vapor in both the first collector plate passage 306 and the second collector plate passage 309 can be avoided. Also, as the first collector plate passage 306 is located before the second collector plate passage in the stream, the gas discharged from the second collector plate passage 309 can run towards the downstream as denoted by the small arrow in Fig. 45 but never enter the first collector plate passage 306. As the result, the first collector plate passage 309 can always receive the test gas from the upstream hence permitting the concentration of carbon monoxide to be measured accurately,

The case 340 includes a temperature sensor 342 of a thermistor protected with a stainless steel cover and a semiconductor pressure sensor 343 having a pressure sensing portion made of stainless steel. The two sensors 342 and 343 are identical in the material in the case 340 and can produce no effect of a battery cell developed by the condensations of water vapor on the joint between two different metals. This will provide an anti-corrosion property. Also, as the two sensors 342 and 343 are mounted by Teflon seal members (not shown) to the case 340, any crosstalk between the signals thereof and any noise received from the bypass conduit 325 can be attenuated. Also, the two can favorably be protected from corrosion. The two sensors are also hydrophilic finished at the sensing region exposed to the gas for inhibiting the condensation of water vapor.

The joining of the bypass conduit 325 in the fuel cell system is identical to that of the tenth embodiment shown in Fig. 42. More specifically, the gas concentration detector of Fig. 45 is located in the area denoted by the dotted line in Fig. 42 and the joining of the bypass conduit 325 will be explained in no more detail.

The operation of the gas concentration detector of this embodiment will now be described.

Referring to Fig. 45, the test gas is conveyed in the direction denoted by the blank arrow at the operating state of the gas concentration detector 320 (while energized under specific conditions equal to those of the tenth embodiment) and its portion is introduced into the first collector plate passage 306 as denoted by the small arrow before entering the gas chamber 307. Hydrogen in the test gas is transferred as protons to the negative side where it is released as hydrogen gas before being discharged from the second collector plate passage 309 as denoted by the small arrow. At the time, if carbon monoxide is present in the test gas, it can poison the catalyst as explained with the tenth embodiment thus producing a change in the current across the gas concentration detector 320. As the current change is based on the concentration of carbon monoxide, it can be used to calculate the concentration of carbon monoxide in the gas. The operation of the microcomputer for refreshing the element poisoned by carbon monoxide is identical to that of the tenth embodiment and its description will be omitted.

The gas concentration detector of this embodiment was tested using a moistened gas identical to that of the tenth embodiment. Profiles of the result are shown in Figs. 46 and 47. Fig. 46 illustrates the dependency of the current RI (RI=I(8) on the concentration of carbon monoxide in the embodiment) before the refreshment explained with the tenth embodiment. Fig. 47 illustrates the dependency of the average poisoning speed MV on the concentration of carbon monoxide. While the temperature of the gas shown in Figs. 46 and 47 is set to 80°C, the dependency of the gas on the flow rate is examined at 200 cc/min, 300 cc/min, and 400 cc/min in view of a change in the load when the reforming device is operated.

It is apparent from Fig. 46 that the dependency of RI on the flow rate of the test gas is low. This may be explained by the fact that the amount of the gas received from the first collector plate passage 306 is determined by the capability of proton pumping of the detecting element 304 but not affected by the flow of the gas through the bypass conduit 325. Also, as apparent from Fig. 47, a change in the speed MV when the concentration of carbon monoxide shifts from 20ppm to 10ppm will not significantly be affected by the flow of the gas but the two levels can clearly be distinguished from each other.

In the gas concentration detector of this embodiment similar to that of the tenth embodiment, the concentration of carbon monoxide can be determined whether it is lower than 20ppm or not by comparing the measurement value with a threshold (RI=130mA and MV=-0.3mA/s denoted by thick dotted lines in Figs. 46 and 47 respectively) regardless of the flow of the gas.

The dependency of the current RI just before the refreshment on the concentration of carbon monoxide when the flow of the gas is 300 cc/min and the gas temperature is varied is illustrated in Fig. 48. The dependency of the average poisoning speed MV on the concentration of carbon monoxide is illustrated in Fig. 49. It is apparent that the two profiles are varied with the temperature of the gas. As described previously, the threshold of RI is set to 130mA (denoted by the thick dotted line in Fig. 48) for rough judgment of the concentration. The threshold of MV, denoted by the thick dotted line in Fig. 49) has to be reformed depending on the temperature of the gas for distinguishing between 20ppm and 10ppm of carbon monoxide. For the purpose, this embodiment has the temperature sensor 342 in the case 340 arranged to monitor the temperature of the test gas so that the threshold of MV is reformed according to the measurement of the temperature. A list of the thresholds of MV in relation to the temperatures is shown in Table 1.

(Table 1)

| Temperature (°C) | Current before Refreshment | Average Poisoning Speed |
|---|---|---|
| 60 | >130 | >-0.7 |
| 70 | >130 | >-0.5 |
| 80 | >130 | >-0.3 |
| 90 | >130 | >-0.1 |

The list of Table 1 is stored in an non-volatile memory of the microcomputer and 20ppm and 10ppm of the concentration can be distinguished from each other by selecting a proper threshold in response to the signal output of the temperature sensor 342.

The pressure sensor 343 is also provided in the embodiment. As the bypass conduit 325 is joined at the distal end to a burner 336 where pressure loss is insignificant, the pressure at the gas concentration detector stays substantially uniform and can hardly affect the signal output. However, a change in the pressure may not be negligible depending on the operating conditions and error conditions. When not, the threshold can be corrected to a level determined by the signal output of the pressure sensor 343. Accordingly, the concentration of carbon monoxide can be measured accurately.

The gas concentration detector of the embodiment carried out its measurement action under the same conditions as of the tenth embodiment. Hence. an abrupt change in the current output (response current) which is a major drawback of the prior art is never observed.

As described, the gas concentration detector of the embodiment can be improved in the accuracy.

Fig. 50 is a flowchart showing a procedure of controlling and calculating the gas concentration detector to judge whether the concentration is lower than 20ppm or not.

When the gas concentration detector is turned on, its electrodes 302 are fed with 1.5V of the refresh voltage at Step 1 and held for a standby time of 2 seconds at Step 2. It is then examined at Step 3 whether or not a signal for stopping the fuel cell is received from a fuel cell controller circuit (not shown). When the disconnect signal is received, the voltage fed to the electrodes 302 is canceled at Step 4 to terminate the operation action of the gas concentration detector.

When the signal for disconnecting the fuel cell is not received, the electrodes 302 are fed with 1V of the measurement voltage at Step 5. The values of the current are then stored at intervals of a predetermined period (one second in the embodiment) in a memory of the microcomputer 318 at Step 6. It is now assumed that the measurements at the latest are expressed by current RI before the refreshment (hence, I(8) in the embodiment).

After the measurements of the current in eight seconds of the duration are stored as data, a temperature of the test gas measured by the temperature sensor 342 at the time is stored at Step 8. Also, a pressure measured by the pressure sensor 343 is stored at Step 9. Then, the average poisoning speed MV is calculated using Equation 16 at Step S10. At Step 11, the reference levels of RI and MV based on the pressure and the temperature are determined from the threshold table.

It is then examined at Step 12 whether RI and MV are lower than their respective reference levels or not. When not, it is judged at Step 13 that the concentration of carbon monoxide is lower than 20ppm and the ON signal is released before the procedure jumps to a branch A (returning to S1). When either is lower than its reference level, it is judged at Step 14 that the concentration of carbon monoxide is not lower than 20ppm and the OFF signal is released before the procedure jumps to A (returning to S1).

By repeating the above procedure, the concentration of carbon monoxide can be judged whether it is lower than 20ppm or not.

The gas concentration detector of this embodiment having the above arrangement and operation can produce no abrupt change in its current output.

While the particular materials and figures described with the first to eleventh embodiments are simply for the purpose of illustrating the gas concentration detector of the present invention, they are thus of no limitation excluding those defined in the appended claims.

INDUSTRIAL APPLICABILITY

The present invention is directed towards a gas concentration detector which is easily applicable to any fuel cell system and capable of measuring the concentration of carbon monoxide without depending on the flow rate of the test gas while performing an action of refreshment when the concentration of carbon monoxide is relatively high and also producing no abrupt change in the its current output. The fuel cell system when equipped with the gas concentration detector of the present invention can be improved in the operating stability thus yielding some advantages for the relevant industries.

**Claims**

**1.** A gas concentration detector for measuring a concentration of target gas in a test gas, comprising:

an electrolytic membrane having a hydrogen ionic conductivity;

a detecting electrode having a first catalyst and contacting with one side of said electrolytic membrane;

a counter electrode having a second catalyst and contacting with other side of said electrolytic membrane;

a first collector plate having a surface having a first passage formed therein, said first passage including a first recess and a first opening communicated to said first recess, said first opening being open only to a flow of the test gas, said surface of said first collector plate contacting with said detecting electrode; and

a second collector plate having a surface having a second passage formed therein, said second passage including a second recess and a second opening communicated to said second recess, said surface of said second collector plate contacting with said counter electrode.

**2.** The gas concentration detector according to claim 1, wherein:

said detecting electrode has a carbon cloth including a carbon powder having said first catalyst attached thereto, and

said counter electrode has a carbon cloth including a carbon powder having said first catalyst attached thereto.

**3.** The gas concentration detector according to claim 2, wherein said first catalyst contains an alloy of platinum and gold.

**4.** The gas concentration detector according to claim 2, wherein said second catalyst contains an alloy of platinum and ruthenium.

**5.** The gas concentration detector according to claim 1, said collector plate has a surface with a hydrophilic property at said first and second recesses and said first and second passages.

**6.** The gas concentration detector according to claim 1, further comprising:

filters provided around said first and second openings for inhibiting the test gas from entering directly to said first and second passages, respectively.

**7.** The gas concentration detector according to claim 6, wherein said filters are made of porous material covering said first and second openings.

**8.** The gas concentration detector according to claim 1, further comprising:

a partition between said first and second openings.

**9.** The gas concentration detector according to claim 1, further comprising:

a temperature sensor for measuring a temperature of the test gas.

**10.** The gas concentration detector according to claim 1, further comprising:

a pressure sensor for measuring a pressure of the test gas.

**11.** The gas concentration detector according to claim 1, wherein,

a direct-current (DC) source is connected between said first and second collector plates,

a current detector measures a current from said DC source, and

a cycle including a measurement of a current by said current detector and a catalyst refreshment for refreshing said catalysts is repeated, and, the concentration of the target gas is related to a current measured by said current detector, said measurement being performed by applying a measurement voltage between said detecting electrode and said counter electrode, the catalyst refreshment being performed by applying a refresh voltage between said detecting electrode and said counter electrode, said refresh voltage being higher than the measurement voltage and lower than a decomposing potential of water.

**12.** The gas concentration detector according to claim 11, wherein said current detector measures the current three seconds after the measurement voltage is applied when the catalyst refreshment is completed.

**13.** The gas concentration detector according to claim 11, wherein the cycle including the measurement of the current by said current detector with the measurement voltage and the catalyst refreshment is repeated, and the concentration of the target gas is related to the measured current and a current change of the measured current.

**14.** The gas concentration detector according to claim 13, wherein said current detector measures the current three seconds after the measurement voltage is applied and after the catalyst refreshment is completed, and the current change is obtained from a current after the measured current.

**15.** The gas concentration detector according to claim 11, wherein the measurement voltage and the refresh voltage are switched substantially instantly from one to another.

**16.** The gas concentration detector according to claim 11, wherein a duration of the refresh voltage is shorter than a duration of the measurement voltage.

**17.** The gas concentration detector according to claim 11, wherein the measurement of the current starts after the refresh voltage is applied between said detecting electrode and said counter electrode and just after startup.

**18.** The gas concentration detector according to claim 11, wherein the refresh voltage is applied to said counter electrode at a predetermined interval of time, for a predetermined time, at a predetermined number of cycles during measurement.

**19.** The gas concentration detector according to claim 11, wherein the current is measured when the measurement voltage is applied and the concentration of the target gas is determined by comparing the measured current with a reference level.

**20.** The gas concentration detector according to claim 19, further comprising:

means for outputting a signal which indicates that the current measured during the measurement voltage applied is not lower than the reference level.

**21.** The gas concentration detector according to claim 20, further comprising:

means for outputting a signal which indicates that the current measured and a change speed of the current at the measurement voltage are not lower than respective reference levels.

**22.** The gas concentration detector according to claim 19, wherein the concentration of the target gas is determined by comparing the current measured at the measurement voltage and a change speed of the current with respective reference levels.

**23.** A gas concentration detector for measuring a concentration of target gas in a test gas, comprising:

a first gas concentration detecting element including:

a first electrolytic membrane having a hydrogen ionic conductivity;

a first detecting electrode having a first catalyst and contacting with one side of said first electrolytic membrane;

a first counter electrode having a second catalyst and contacting with an other side of said first electrolytic membrane;

a first collector plate having a surface having a first passage formed therein, said first passage including a first recess and a first opening communicated to said first recess, said first opening being open only to a flow of the test gas, said surface of said first collector plate contacting with said first detecting electrode; and

a second collector plate having a surface having a second passage formed therein, said second passage including a first aperture and a second opening being communicated to said first aperture, said surface of said second collector plate contacting with said first counter electrode;

a second gas concentration detecting element including:

a second electrolytic membrane having a hydrogen ionic conductivity;

a second detecting electrode having a third catalyst and contacting with one side of said second electrolytic membrane;

a second counter electrode having a fourth catalyst and contacting with an other side of said second electrolytic membrane;

a third collector plate having a surface having a third passage formed therein, said third passage having a second recess and a third opening communicated to said second recess, said third opening being open only to the flow of the test gas, said surface of said third collector plate contacting with said second detecting electrode; and

a fourth collector plate having a surface having a fourth passage formed therein, said fourth passage having a second aperture and a fourth opening communicated to said second aperture, said surface of said fourth collector plate contacting with said second counter electrode;

an insulating seal sheet contacting with a side of said first gas concentration detecting element in which said first aperture opens and a side of said second gas concentration detecting element in which said second aperture opens, said insulating seal sheet forming a third aperture communicated to said first and second apertures. a second DC source being connected between said third and fourth collector plates

**24.** The gas concentration detector according to claim 23, wherein

said first detecting electrode has a carbon cloth including a carbon powder having said first catalyst attached thereto,

said second detecting electrode has a carbon cloth including a carbon powder having said third catalyst attached thereto,

said first counter electrode has a carbon cloth including a carbon powder having said second catalyst attached thereto, and

said second counter electrode has a carbon cloth including a carbon powder having said fourth catalyst attached thereto.

**25.** The gas concentration detector according to claim 24, wherein said first catalyst contains an alloy of platinum and gold.

**26.** The gas concentration detector according to claim 24, wherein said second, third, and fourth catalysts contain an alloy of platinum and ruthenium.

**27.** The gas concentration detector according to claim 23, wherein:

said first collector plate has a surface with a hydrophilic property at said first recess and said first passage,

said second collector plate has a surface with a hydrophilic property at said first aperture and said second passage,

said third collector plate has a surface with a hydrophilic property at said second recess and said third passage, and

said fourth collector plate has a surface with a hydrophilic property at said second aperture and said fourth passage.

**28.** The gas concentration detector according to claim 23, further comprising:

filters provided around said first, second, third, and fourth openings for inhibiting the test gas from entering directly to said first, second, third, and fourth passages, respectively.

**29.** The gas concentration detector according to claim 28, wherein said filters are made of porous material covering said first, second, third, and fourth openings.

**30.** The gas concentration detector according to claim 23, further comprising:

a first partition between said first and second openings; and

a second partition between said third and fourth openings.

**31.** The gas concentration detector according to claim 23, further comprising:

a temperature sensor for measuring a temperature of the test gas.

**32.** The gas concentration detector according to claim 23, further comprising:

a pressure sensor for measuring a pressure of the test gas.

**33.** The gas concentration detector according to claim 23, wherein:

a first direct-current (DC) source is connected between said first and second collector plates,

a first current detector measures a current of said first DC source,

a second DC source is connected between said third and fourth collector plates,

a second current detector measures a current of said second DC source, and

a cycle including a measurement of the currents by said first and second current detectors and a catalyst refreshment for refreshing said catalysts is repeated, and a concentration of carbon monoxide and a concentration of hydrogen gas are calculated from currents measured by said first and second current detector, said current measurements being performed with respective measurement voltages from said first and second DC sources, the catalyst refreshment being performed by applying refresh voltages higher than the measurement voltages and lower than a decomposing potential of water.

**34.** The gas concentration detector according to claim 33, wherein said first and second current detectors measure the currents three seconds after the measurement voltages are applied and after the catalyst refreshment is completed, and the concentration of carbon monoxide and the concentration of hydrogen gas are obtained from the currents.

**35.** The gas concentration detector according to claim 33, wherein the measurement voltages and the refresh voltages are substantially instantly switched from one to another.

**36.** The gas concentration detector according to claim 33, wherein a duration for applying the refresh voltages is shorter than a duration for applying the measurement voltages.

**37.** The gas concentration detector according to claim 33, wherein said first and second current detectors start the measurements of the currents after the refresh voltages are applied from said first and second DC sources just after startup.

**38.** The gas concentration detector according to claim 33, wherein the refresh voltages are applied by said first and second DC sources at a predetermined number of cycles during the measurement.

**39.** The gas concentration detector according to claim 33, wherein the concentration of hydrogen gas is determined by comparing, with a reference level, the current measured when the measurement voltage is applied from said second DC source.

**40.** The gas concentration detector according to claim 39, further comprising:

means for outputting a signal for indicating that measurements of the current measured when the measurement voltages applied from said first and second DC sources are not lower than respective reference levels.

**41.** The gas concentration detector according to claim 33, wherein the concentration of carbon monoxide is determined by comparing with a reference level, the current measured when the measurement voltage is applied from said first DC source, said reference level corresponding to the concentration of hydrogen gas.

**42.** The gas concentration detector according to claim 23, wherein:

a first direct-current (DC) source is connected between said first and second collector plates,

a first current detector measures a current of said first DC source, and

a cycle including a measurement of the current and a current change measured by said first current detector and a catalyst refreshment for refreshing said catalysts is repeated, and the concentration of carbon monoxide is obtained from a current measured by said first current detector and a current change of the measured current, said current measurement being performed with a measurement voltage applied by said first DC source, the catalyst refreshment being performed with a refresh voltage higher than the measurement voltage and lower than a decomposing potential of water.

**43.** The gas concentration detector according to claim 42, wherein said first current detector measures the current three seconds after the measurement voltage is applied and after the catalyst refreshment is completed, and the current change is obtained from a current after the measured current.

**44.** The gas concentration detector according to claim 42, wherein the measurement voltage and the refresh voltage are substantially instantly switched from one to another.

**45.** The gas concentration detector according to claim 42, wherein a duration for applying the refresh voltage is shorter than a duration for applying the measurement voltage.

**46.** The gas concentration detector according to claim 42, wherein the measurement of the current from said first DC source by said first current detector starts after the refresh voltage is applied from said first DC source just after startup.

**47.** The gas concentration detector according to claim 42, wherein the refresh voltage is applied by said first DC source at a predetermined number of cycles during the measurement.

**48.** The gas concentration detector according to claim 42, wherein the concentration of carbon monoxide is determined by comparing, with a reference level, the current measured when the measurement voltage is applied from said first DC source, said reference level corresponding to the concentration of hydrogen gas.

**49.** The gas concentration detector according to claim 48, further comprising:

means for outputting a signal which indicates that the current measured with the measurement voltage applied from said first DC source is not lower than a reference level.

**50.** The gas concentration detector according to claim 49, wherein the concentration of carbon monoxide is determined by comparing, with reference levels, the current and a current change speed of the current measured when the measurement voltage is applied from said first DC source, the reference levels corresponding to the concentration of hydrogen gas.

**51.** The gas concentration detector according to claim 49, further comprising:

means for outputting a signal which indicates that the current and the current change speed measured when the measurement voltage is applied are not lower than the respective reference levels.

**52.** A gas concentration detector comprising:

an electrolytic membrane having a proton conductivity;

first and second electrodes on respective sides of said electrolytic membrane, said first and second electrodes each having a catalyst;

a first collector plate having a gas passage provided therein, said gas passage including an outlet and an inlet for a test gas, said gas passage contacting with said first electrode; and

a second collector plate on a surface of said second electrode, said second collector plate having an aperture formed therein, said aperture being communicated to said surface of said second electrode.

**53.** The gas concentration detector according to claim 52, wherein:

a direct-current (DC) source is connected between said first and second collector plates for supplying a measurement voltage at a positive potential to said first collector plate and at a negative potential to said second collector plate, said measurement voltage being higher than a decomposing potential of water,

a current detector measures a current of said DC source, and

a cycle including a measurement of a current change of the current and a catalyst refreshment for refreshing said catalysts is repeated, the measurement is performed when the measurement voltage is applied for obtaining a concentration of carbon monoxide, the catalyst refreshment being performed when a refresh voltage higher than the measurement voltage is applied.

**54.** The gas concentration detector according to claim 53, wherein the measurement voltage and the refresh voltage varies continuously.

**55.** The gas concentration detector according to claim 53, wherein a duration for applying the refresh voltage is shorter than a duration for applying the measurement voltage.

**56.** The gas concentration detector according to claim 53, further comprising:

a controller for starting the measurement after the refresh voltage is applied at startup and for stopping the measurement after the refresh voltage is applied at an end of the measurement.

**57.** The gas concentration detector according to claim 53, wherein the concentration of carbon monoxide is obtained by comparing, with respective reference levels, a variation of a current change acceleration of the current and a change of the variation when the measurement voltage is applied.

**58.** The gas concentration detector according to claim 57, wherein the variation is a difference between a maximum value and a minimum value of the current change acceleration for a predetermined duration.

**59.** The gas concentration detector according to claim 57, wherein the change is an absolute value of a difference between a variation in a preceding cycle and a variation in a present cycle.

**60.** The gas concentration detector according to claim 57, further comprising:

means for outputting a first signal which indicates that the variation and the change are not lower than the respective reference levels and for outputting a second signal which indicates that the variation and the change are lower than the respective reference levels.

**61.** The gas concentration detector according to claim 60, further comprising:

means for calculating the first total number of the first signal during a present cycle and the first signal during an even number of the preceding cycle and the second total number of the second signal during the present cycle and the second signal during the even number of the preceding cycle and for outputting the signal of which the total number is greater.

**62.** The gas concentration detector according to claim 53, wherein the concentration of carbon monoxide is calculated by comparing respective reference levels, a current change speed of the current change, a variation of a current change acceleration of the current change, and a change of the variation when the measurement voltage is applied.

**63.** The gas concentration detector according to claim 62, wherein the variation is an absolute value of a difference between a maximum and a minimum of the current change acceleration within a predetermined duration.

**64.** The gas concentration detector according to claim 62, wherein the change is an absolute value of a difference between the variation in a preceding cycle and the variation in a present cycle.

**65.** The gas concentration detector according to claim 62, further comprising:

means for outputting a first signal which indicates that the current change speed, the variation, and the change are not lower than respective reference levels and for outputting a second signal which indicates that the current change speed, the variation, and the change are lower than the respective reference levels.

**66.** The gas concentration detector according to claim 65, further comprising:

means for calculating a total number of the first signal and a total number of the second signal during the present cycle and during an even number of the preceding cycle and for outputting the signal of which the total number is greater.

**67.** A gas concentration detector comprising:

a proton conductive electrolytic membrane;

electrodes provided on respective sides of said electrolytic membrane, each of said electrodes having a respective catalyst and a respective surface;

a first collector plate having a gas passage provided therein, said gas passage having an inlet and an outlet for a test gas, said gas passage contacting one of said surfaces of said electrodes;

a second collector plate having an aperture therein exposed to the other of said surfaces of said electrodes;

a direct current source having positive and negative sides connected to said first and second collector plates, respectively, for supplying a measurement voltage and a refresh voltage; and

a current detector for measuring a current which varies depending on a concentration of carbon monoxide in the test gas containing hydrogen, said test gas flowing through said gas passage,

wherein, when a current change speed of the current when the applied measurement voltage is not lower than a reference level, and when a variation of a current change acceleration of the current change, and a change of the variation are lower than respective reference levels, the measurement voltage is decreased to lower than a decomposing potential of water,

wherein the concentration of carbon monoxide is calculated from the current change speed, and

wherein, when the measurement voltage is lower than the reference level, the measurement voltage is set to a reference level higher than the decomposing potential of water and a catalyst refreshment for said catalysts is carried out.

**68.** The gas concentration detector according to claim 67, wherein the decreased measurement voltage ranges from 0.1V to 0.4V

**69.** The gas concentration detector according to claim 67, wherein the measurement voltage is decreased and set continuously.

**70.** The gas concentration detector according to claim 67, wherein an output at a cycle when the measurement voltage is set is invalid.

**71.** A gas concentration detector comprising:

a electrolytic membrane having a proton conductivity;

first and second electrodes on respective sides of said electrolytic membrane, said first and second electrodes each having a catalyst;

a first collector plate having a passage therein for intaking a test gas and having a gas chamber therein communicated with said passage, said gas chamber having a cross section smaller than a size of said first electrode;

a second collector plate having a shape identical to a shape of said first collector plate, said second collector plate contacting a surface of said second electrode;

a direct current source having positive and negative sides connected to said first and second collector plates, respectively; and

a current detector for measuring a current of said direct current source,

wherein a cycle including a measurement of the current by said current detector and a catalyst refreshment for refreshing said catalysts is repeated for obtaining a concentration of carbon monoxide in the test gas, the current measurement being performed by applying a measurement voltage higher than an oxidizing potential of carbon monoxide and lower than a decomposing potential of water supplied by said direct current source, the catalyst refreshment being performed by applying a refreshment voltage higher than the decomposing potential of water, and the concentration of carbon monoxide in the test gas is calculated.

**72.** The gas concentration detector according to claim 71, wherein the concentration of carbon monoxide is determined from the current measured after a predetermined time from when the measurement voltage is applied and a current change speed of the current around the time.

**73.** The gas concentration detector according to claim 71, wherein said passage of said first collector plate and said passage of said second collector plate are disposed in an identical direction.

**74.** A fuel cell system comprising:

a fuel cell;

a reformer for reforming hydrocarbon fuel for generating a reformed gas containing hydrogen;

a reformed-gas main line communicating between said reformer and said fuel cell;

a bypass conduit at a region of said reformed-gas main line for allowing test gas to pass therethrough; and

a gas concentration detector provided across said bypass conduit.

**75.** The fuel cell system according to claim 74, wherein a flow of the test gas flowing in said bypass conduit is equal to 0.1% to 1% of a flow of the reformed gas flowing in said reformed-gas main line.

**76.** The fuel cell system according to claim 74, wherein said bypass conduit includes an orifice.

**77.** The fuel cell system according to claim 76, wherein said orifice is located upstream from said gas concentration detector.

**78.** The fuel cell system according to claim 74, wherein:

said bypass conduit includes a vertical region arranged vertically,

wherein the test gas flows through said vertical region towards a ground, and

said gas concentration detector is located in said vertical region.

**79.** The fuel cell system according to claim 78, wherein said gas concentration detector has an opening therein opening towards the ground.

**80.** The fuel cell system according to claim 74, wherein:

said bypass conduit includes a tilted region arranged at an angle to the ground,

the test gas flows through said tilted region towards the ground, and

said gas concentration detector is located in said tilted region.

**81.** The fuel cell system according to claim 80, wherein said gas concentration detector has an opening in a direction perpendicular to a peripheral wall of said bypass conduit.

**82.** The fuel cell system according to claim 81, wherein:

said opening of said gas concentration detector is located upstream from said bypass conduit, and

said gas concentration detector includes a first collector plate connected to said opening.

**83.** The fuel cell system according to claim 74, wherein said bypass conduit has an end connected to said reformed-gas main line at an outlet of said fuel cell.

**84.** The fuel cell system according to claim 83, wherein said bypass conduit has an end connected one of vertically and at an angle to a ground to said reformed-gas main line at said outlet of said fuel cell.

**85.** The fuel cell system according to claim 74, wherein said gas concentration detector further includes a temperature sensor in said bypass conduit around said gas concentration detector.

**86.** The fuel cell system according to claim 85, wherein said temperature sensor includes a mounting portion joined to said bypass conduit, said bypass conduit being made of a material, said mounting portion being made of a material identical to the material of said bypass conduit.

**87.** The fuel cell system according to claim 85, wherein said temperature sensor is mounted to said bypass conduit and iselectrically insulated from said bypass conduit.

**88.** The fuel cell system according to claim 85, wherein said temperature sensor has a surface with a hydrophilic property for contacting the test gas.

**89.** The fuel cell system according to claim 88, wherein the surface of said temperature sensor is roughened to produce the hydrophilic property.

**90.** The fuel cell system according to claim 88, wherein said temperature sensor includes a titanium oxide layer on said surface contacting the test gas.

**91.** The fuel cell system according to claim 90, wherein said titanium oxide layer has an anatase type crystalline structure.

**92.** The fuel cell system according to claim 74, wherein said gas concentration detector further includes a pressure sensor in said bypass conduit around said gas concentration detector.

**93.** The fuel cell system according to claim 92, wherein said pressure sensor includes a mounting portion joined to said bypass conduit, said bypass conduit being made of a material, said mounting portion being made of a material identical to the material of said bypass conduit.

**94.** The fuel cell system according to claim 92, wherein said pressure sensor is mounted to said bypass conduit and electrically insulated from said bypass conduit.

**95.** The fuel cell system according to claim 92, wherein said pressure sensor has a surface with a hydrophilic property contacting the test gas.

**96.** The fuel cell system according to claim 95, wherein the surface of said pressure sensor is roughened to produce the hydrophilic property.

**97.** The fuel cell system according to claim 95, wherein said pressure sensor has a titanium oxide layer on said surface contacting the test gas.

**98.** The fuel cell system according to claim 97, wherein said titanium oxide layer has an anatase type crystalline structure.

**99.** The fuel cell system according to claim 74, wherein said bypass conduit being made of a material, said gas concentration detector contains a material identical to the material of said bypass conduit.

**100.** The fuel cell system according to claim 74, wherein said gas concentration detector is mounted to said bypass conduit, said gas concentration detector being electrically insulated from said bypass conduit.

**101.** The fuel cell system according to claim 74, wherein said gas concentration detector and said bypass conduit have respective surfaces with a hydrophilic property contacting the test gas.

**102.** The fuel cell system according to claim 101, wherein said surfaces are roughened to produce the hydrophilic property.

**103.** The fuel cell system according to claim 101, wherein said gas concentration detector and said bypass conduit includes titanium oxide layers on said surfaces contacting with the test gas, respectively.

**104.** The fuel cell system according to claim 103, wherein each of said titanium oxide layers has an anatase type crystalline structure.

**105.** The fuel cell system according to claim 103, wherein said titanium oxide layers have thicknesses ranging from 0.1μm and to 1μm.

**Amended claims under Art. 19.1 PCT**

**1.** (Amended) A gas concentration detector for measuring a concentration of target gas in a test gas, comprising:

an electrolytic membrane having a hydrogen ionic conductivity;

a detecting electrode having a first catalyst and contacting with one side of said electrolytic membrane;

a counter electrode having a second catalyst and contacting with other side of said electrolytic membrane;

a first collector plate having a surface having a first passage formed therein, said first passage including a first recess and a first opening communicated to said first recess, said first opening being open only to a flow of the test gas, said surface of said first collector plate contacting with said detecting electrode;

a second collector plate having a surface having a second passage formed therein, said second passage including a second recess and a second opening communicated to said second recess, said second opening being open only to the flow of the test gas, said surface of said second collector plate contacting with said counter electrode;

a direct-current (DC) source connected between said first and second collector plates; and

a current detector for measuring a current from said DC source.

**2.** The gas concentration detector according to claim 1, wherein:

said detecting electrode has a carbon cloth including a carbon powder having said first catalyst attached thereto, and

said counter electrode has a carbon cloth including a carbon powder having said first catalyst attached thereto.

**3.** The gas concentration detector according to claim 2, wherein said first catalyst contains an alloy of platinum and gold.

**4.** The gas concentration detector according to claim 2, wherein said second catalyst contains an alloy of platinum and ruthenium.

**5.** The gas concentration detector according to claim 1, said collector plate has a surface with a hydrophilic property at said first and second recesses and said first and second passages.

**6.** The gas concentration detector according to claim 1, further comprising:

filters provided around said first and second openings for inhibiting the test gas from entering directly to said first and second passages, respectively.

**7.** The gas concentration detector according to claim 6, wherein said filters are made of porous material covering said first and second openings.

**8.** The gas concentration detector according to claim 1, further comprising:

a partition between said first and second openings.

**9.** The gas concentration detector according to claim 1, further comprising:

a temperature sensor for measuring a temperature of the test gas.

**10.** The gas concentration detector according to claim 1, further comprising:

a pressure sensor for measuring a pressure of the test gas.

**11.** (Amended) The gas concentration detector according to claim 1, wherein a cycle including a measurement of a current by said current detector and a catalyst refreshment for refreshing said catalysts is repeated, and, the concentration of the target gas is related to a current measured by said current detector, said measurement being performed by applying a measurement voltage between said detecting electrode and said counter electrode, the catalyst refreshment being performed by applying a refresh voltage between said detecting electrode and said counter electrode, said refresh voltage being higher than the measurement voltage and lower than a decomposing potential of water.

**12.** The gas concentration detector according to claim 11, wherein said current detector measures the current three seconds after the measurement voltage is applied when the catalyst refreshment is completed.

**13.** The gas concentration detector according to claim 11, wherein the cycle including the measurement of the current by said current detector with the measurement voltage and the catalyst refreshment is repeated, and the concentration of the target gas is related to the measured current and a current change of the measured current.

**14.** The gas concentration detector according to claim 13, wherein said current detector measures the current three seconds after the measurement voltage is applied and after the catalyst refreshment is completed, and the current change is obtained from a current after the measured current.

**15.** The gas concentration detector according to claim 11, wherein the measurement voltage and the refresh voltage are switched substantially instantly from one to another.

**16.** The gas concentration detector according to claim 11, wherein a duration of the refresh voltage is shorter than a duration of the measurement voltage.

**17.** The gas concentration detector according to claim 11, wherein the measurement of the current starts after the refresh voltage is applied between said detecting electrode and said counter electrode and just after startup.

**18.** The gas concentration detector according to claim 11, wherein the refresh voltage is applied to said counter electrode at a predetermined interval of time, for a predetermined time, at a predetermined number of cycles during measurement.

**19.** The gas concentration detector according to claim 11, wherein the current is measured when the measurement voltage is applied and the concentration of the target gas is determined by comparing the measured current with a reference level.

**20.** The gas concentration detector according to claim 19, further comprising:

means for outputting a signal which indicates that the current measured during the measurement voltage applied is not lower than the reference level.

**21.** The gas concentration detector according to claim 20, further comprising:

means for outputting a signal which indicates that the current measured and a change speed of the current at the measurement voltage are not lower than respective reference levels.

**22.** The gas concentration detector according to claim 19, wherein the concentration of the target gas is determined by comparing the current measured at the measurement voltage and a change speed of the current with respective reference levels.

**23.** (Amended) A gas concentration detector for measuring a concentration of target gas in a test gas, comprising:

a first gas concentration detecting element including:

a first electrolytic membrane having a hydrogen ionic conductivity;

a first detecting electrode having a first catalyst and contacting with one side of said first electrolytic membrane;

a first counter electrode having a second catalyst and contacting with an other side of said first electrolytic membrane;

a first collector plate having a surface having a first passage formed therein, said first passage including a first recess and a first opening communicated to said first recess, said first opening being open only to a flow of the test gas, said surface of said first collector plate contacting with said first detecting electrode; and

a second collector plate having a surface having a second passage formed therein, said second passage including a first aperture and a second opening being communicated to said first aperture, said second opening being open only to the flow of the test gas, said surface of said second collector plate contacting with said first counter electrode;

a second gas concentration detecting element including:

a second electrolytic membrane having a hydrogen ionic conductivity;

a second detecting electrode having a third catalyst and contacting with one side of said second electrolytic membrane;

a second counter electrode having a fourth catalyst and contacting with an other side of said second electrolytic membrane;

a third collector plate having a surface having a third passage formed therein, said third passage having a second recess and a third opening communicated to said second recess, said third opening being open only to the flow of the test gas, said surface of said third collector plate contacting with said second detecting electrode; and

a fourth collector plate having a surface having a fourth passage formed therein, said fourth passage having a second aperture and a fourth opening communicated to said second aperture, said fourth opening being open only to the flow of the test gas, said surface of said fourth collector plate contacting with said second counter electrode;

an insulating seal sheet contacting with a side of said first gas concentration detecting element in which said first aperture opens and a side of said second gas concentration detecting element in which said second aperture opens, said insulating seal sheet forming a third aperture communicated to said first and second apertures;

a first current detector for measuring a current changing according to a concentration of the target gas in the test gas brought through said first passage by hydrogen ion migration from said first detecting electrode to said first counter electrode, a first direct-current (DC) source being connected between said first and second collector plates; and

a second current detector for measuring a current changing according to the concentration of the target gas in the test gas brought through said third passage by a hydrogen ion migration from said second detecting electrode to said second counter electrode, a second DC source being connected between said third and fourth collector plates

**24.** The gas concentration detector according to claim 23, wherein

said first detecting electrode has a carbon cloth including a carbon powder having said first catalyst attached thereto,

said second detecting electrode has a carbon cloth including a carbon powder having said third catalyst attached thereto,

said first counter electrode has a carbon cloth including a carbon powder having said second catalyst attached thereto, and

said second counter electrode has a carbon cloth including a carbon powder having said fourth catalyst attached thereto.

**25.** The gas concentration detector according to claim 24, wherein said first catalyst contains an alloy of platinum and gold.

**26.** The gas concentration detector according to claim 24, wherein said second, third, and fourth catalysts contain an alloy of platinum and ruthenium.

**27.** The gas concentration detector according to claim 23, wherein:

said first collector plate has a surface with a hydrophilic property at said first recess and said first passage,

said second collector plate has a surface with a hydrophilic property at said first aperture and said second passage,

said third collector plate has a surface with a hydrophilic property at said second recess and said third passage, and

said fourth collector plate has a surface with a hydrophilic property at said second aperture and said fourth passage.

**28.** The gas concentration detector according to claim 23, further comprising:

filters provided around said first, second, third, and fourth openings for inhibiting the test gas from entering directly to said first, second, third, and fourth passages, respectively.

**29.** The gas concentration detector according to claim 28, wherein said filters are made of porous material covering said first, second, third, and fourth openings.

**30.** The gas concentration detector according to claim 23, further comprising:

a first partition between said first and second openings; and

a second partition between said third and fourth openings.

**31.** The gas concentration detector according to claim 23, further comprising:

a temperature sensor for measuring a temperature of the test gas.

**32.** The gas concentration detector according to claim 23, further comprising:

a pressure sensor for measuring a pressure of the test gas.

**33.** (Amended) The gas concentration detector according to claim 23, wherein a cycle including a measurement of the currents by said first and second current detectors and a catalyst refreshment for refreshing said catalysts is repeated, and a concentration of carbon monoxide and a concentration of hydrogen gas are calculated from currents measured by said first and second current detector, said current measurements being performed with respective measurement voltages from said first and second DC sources, the catalyst refreshment being performed by applying refresh voltages higher than the measurement voltages and lower than a decomposing potential of water.

**34.** The gas concentration detector according to claim 33, wherein said first and second current detectors measure the currents three seconds after the measurement voltages are applied and after the catalyst refreshment is completed, and the concentration of carbon monoxide and the concentration of hydrogen gas are obtained from the currents.

**35.** The gas concentration detector according to claim 33, wherein the measurement voltages and the refresh voltages are substantially instantly switched from one to another.

**36.** The gas concentration detector according to claim 33, wherein a duration for applying the refresh voltages is shorter than a duration for applying the measurement voltages.

**37.** The gas concentration detector according to claim 33, wherein said first and second current detectors start the measurements of the currents after the refresh voltages are applied from said first and second DC sources just after startup.

**38.** The gas concentration detector according to claim 33, wherein the refresh voltages are applied by said first and second DC sources at a predetermined number of cycles during the measurement.

**39.** The gas concentration detector according to claim 33, wherein the concentration of hydrogen gas is determined by comparing, with a reference level, the current measured when the measurement voltage is applied from said second DC source.

**40.** The gas concentration detector according to claim 39, further comprising:

means for outputting a signal for indicating that measurements of the current measured when the measurement voltages applied from said first and second DC sources are not lower than respective reference levels.

**41.** The gas concentration detector according to claim 33, wherein the concentration of carbon monoxide is determined by comparing with a reference level, the current measured when the measurement voltage is applied from said first DC source, said reference level corresponding to the concentration of hydrogen gas.

**42.** The gas concentration detector according to claim 23, wherein:

a first direct-current (DC) source is connected between said first and second collector plates,

a first current detector measures a current of said first DC source, and

a cycle including a measurement of the current and a current change measured by said first current detector and a catalyst refreshment for refreshing said catalysts is repeated, and the concentration of carbon monoxide is obtained from a current measured by said first current detector and a current change of the measured current, said current measurement being performed with a measurement voltage applied by said first DC source, the catalyst refreshment being performed with a refresh voltage higher than the measurement voltage and lower than a decomposing potential of water.

**43.** The gas concentration detector according to claim 42, wherein said first current detector measures the current three seconds after the measurement voltage is applied and after the catalyst refreshment is completed, and the current change is obtained from a current after the measured current.

**44.** The gas concentration detector according to claim 42, wherein the measurement voltage and the refresh voltage are substantially instantly switched from one to another.

**45.** The gas concentration detector according to claim 42, wherein a duration for applying the refresh voltage is shorter than a duration for applying the measurement voltage.

**46.** The gas concentration detector according to claim 42, wherein the measurement of the current from said first DC source by said first current detector starts after the refresh voltage is applied from said first DC source just after startup.

**47.** The gas concentration detector according to claim 42, wherein the refresh voltage is applied by said first DC source at a predetermined number of cycles during the measurement.

**48.** The gas concentration detector according to claim 42, wherein the concentration of carbon monoxide is determined by comparing, with a reference level, the current measured when the measurement voltage is applied from said first DC source, said reference level corresponding to the concentration of hydrogen gas.

**49.** The gas concentration detector according to claim 48, further comprising:

means for outputting a signal which indicates that the current measured with the measurement voltage applied from said first DC source is not lower than a reference level.

**50.** The gas concentration detector according to claim 49, wherein the concentration of carbon monoxide is determined by comparing, with reference levels, the current and a current change speed of the current measured when the measurement voltage is applied from said first DC source, the reference levels corresponding to the concentration of hydrogen gas.

**51.** The gas concentration detector according to claim 49, further comprising:

means for outputting a signal which indicates that the current and the current change speed measured when the measurement voltage is applied are not lower than the respective reference levels.

**52.** (Amended) A gas concentration detector comprising:

an electrolytic membrane having a proton conductivity;

first and second electrodes on respective sides of said electrolytic membrane, said first and second electrodes each having a catalyst;

a first collector plate having a gas passage provided therein, said gas passage including an outlet and an inlet for a test gas, said gas passage contacting with said first electrode;

a second collector plate on a surface of said second electrode, said second collector plate having an aperture formed therein, said aperture being communicated to said surface of said second electrode;

a direct-current (DC) source connected between said first and second collector plates for supplying a measurement voltage, said DC source having a positive potential connected to said first collector plate and a negative potential connected to said second collector plate, said measurement voltage being higher than a decomposing potential of water; and

a current detector measures a current of said DC source.

**53.** (Amended) The gas concentration detector according to claim 52,
wherein a cycle including a measurement of a current change of the current and a catalyst refreshment for refreshing said catalysts is repeated, the measurement is performed when the measurement voltage is applied for obtaining a concentration of carbon monoxide, the catalyst refreshment being performed when a refresh voltage higher than the measurement voltage is applied.

**54.** The gas concentration detector according to claim 53, wherein the measurement voltage and the refresh voltage varies continuously.

**55.** The gas concentration detector according to claim 53, wherein a duration for applying the refresh voltage is shorter than a duration for applying the measurement voltage.

**56.** The gas concentration detector according to claim 53, further comprising:

a controller for starting the measurement after the refresh voltage is applied at startup and for stopping the measurement after the refresh voltage is applied at an end of the measurement.

**57.** The gas concentration detector according to claim 53, wherein the concentration of carbon monoxide is obtained by comparing, with respective reference levels, a variation of a current change acceleration of the current and a change of the variation when the measurement voltage is applied.

**58.** The gas concentration detector according to claim 57, wherein the variation is a difference between a maximum value and a minimum value of the current change acceleration for a predetermined duration.

**59.** The gas concentration detector according to claim 57, wherein the change is an absolute value of a difference between a variation in a preceding cycle and a variation in a present cycle.

**60.** The gas concentration detector according to claim 57, further comprising:

means for outputting a first signal which indicates that the variation and the change are not lower than the respective reference levels and for outputting a second signal which indicates that the variation and the change are lower than the respective reference levels.

**61.** The gas concentration detector according to claim 60, further comprising:

means for calculating the first total number of the first signal during a present cycle and the first signal during an even number of the preceding cycle and the second total number of the second signal during the present cycle and the second signal during the even number of the preceding cycle and for outputting the signal of which the total number is greater.

**62.** The gas concentration detector according to claim 53, wherein the concentration of carbon monoxide is calculated by comparing respective reference levels, a current change speed of the current change, a variation of a current change acceleration of the current change, and a change of the variation when the measurement voltage is applied.

**63.** The gas concentration detector according to claim 62, wherein the variation is an absolute value of a difference between a maximum and a minimum of the current change acceleration within a predetermined duration.

**64.** The gas concentration detector according to claim 62, wherein the change is an absolute value of a difference between the variation in a preceding cycle and the variation in a present cycle.

**65.** The gas concentration detector according to claim 62, further comprising:

means for outputting a first signal which indicates that the current change speed, the variation, and the change are not lower than respective reference levels and for outputting a second signal which indicates that the current change speed, the variation, and the change are lower than the respective reference levels.

**66.** The gas concentration detector according to claim 65, further comprising:

means for calculating a total number of the first signal and a total number of the second signal during the present cycle and during an even number of the preceding cycle and for outputting the signal of which the total number is greater.

**67.** A gas concentration detector comprising:

a proton conductive electrolytic membrane;

electrodes provided on respective sides of said electrolytic membrane, each of said electrodes having a respective catalyst and a respective surface;

a first collector plate having a gas passage provided therein, said gas passage having an inlet and an outlet for a test gas, said gas passage contacting one of said surfaces of said electrodes;

a second collector plate having an aperture therein exposed to the other of said surfaces of said electrodes;

a direct current source having positive and negative sides connected to said first and second collector plates, respectively, for supplying a measurement voltage and a refresh voltage; and

a current detector for measuring a current which varies depending on a concentration of carbon monoxide in the test gas containing hydrogen, said test gas flowing through said gas passage,

wherein, when a current change speed of the current when the applied measurement voltage is not lower than a reference level, and when a variation of a current change acceleration of the current change, and a change of the variation are lower than respective reference levels, the measurement voltage is decreased to lower than a decomposing potential of water,

wherein the concentration of carbon monoxide is calculated from the current change speed, and

wherein, when the measurement voltage is lower than the reference level, the measurement voltage is set to a reference level higher than the decomposing potential of water and a catalyst refreshment for said catalysts is carried out.

**68.** The gas concentration detector according to claim 67, wherein the decreased measurement voltage ranges from 0.1V to 0.4V.

**69.** The gas concentration detector according to claim 67, wherein the measurement voltage is decreased and set continuously.

**70.** The gas concentration detector according to claim 67, wherein an output at a cycle when the measurement voltage is set is invalid.

**71.** (Amended) A gas concentration detector comprising:

a electrolytic membrane having a proton conductivity;

first and second electrodes on respective sides of said electrolytic membrane, said first and second electrodes each having a catalyst;

a first collector plate having a passage therein for intaking a test gas and having a gas chamber therein communicated with said passage, said gas chamber having a cross section smaller than a size of said first electrode;

a second collector plate having a shape identical to a shape of said first collector plate, said second collector plate contacting a surface of said second electrode;

a direct current source having positive and negative sides connected to said first and second collector plates, respectively; and

a current detector for measuring a current of said direct current source,

wherein a cycle including a measurement of the current by said current detector and a catalyst refreshment for refreshing said catalysts is repeated for obtaining a concentration of carbon monoxide in the test gas, the current measurement being performed by applying a measurement voltage higher than an oxidizing potential of carbon monoxide and lower than a decomposing potential of water supplied by said direct current source, the catalyst refreshment being performed by applying a refreshment voltage higher than the decomposing potential of water, and the concentration of carbon monoxide in the test gas is calculated.

**72.** The gas concentration detector according to claim 71, wherein the concentration of carbon monoxide is determined from the current measured after a predetermined time from when the measurement voltage is applied and a current change speed of the current around the time.

**73.** The gas concentration detector according to claim 71, wherein said passage of said first collector plate and said passage of said second collector plate are disposed in an identical direction.

**74.** A fuel cell system comprising:

a fuel cell;

a reformer for reforming hydrocarbon fuel for generating a reformed gas containing hydrogen;

a reformed-gas main line communicating between said reformer and said fuel cell;

a bypass conduit at a region of said reformed-gas main line for allowing test gas to pass therethrough; and

a gas concentration detector provided across said bypass conduit.

**75.** The fuel cell system according to claim 74, wherein a flow of the test gas flowing in said bypass conduit is equal to 0.1% to 1% of a flow of the reformed gas flowing in said reformed-gas main line.

**76.** The fuel cell system according to claim 74, wherein said bypass conduit includes an orifice.

**77.** The fuel cell system according to claim 76, wherein said orifice is located upstream from said gas concentration detector.

**78.** The fuel cell system according to claim 74, wherein:

said bypass conduit includes a vertical region arranged vertically,

wherein the test gas flows through said vertical region towards a ground, and
said gas concentration detector is located in said vertical region.

**79.** The fuel cell system according to claim 78, wherein said gas concentration detector has an opening therein opening towards the ground.

**80.** The fuel cell system according to claim 74, wherein:

said bypass conduit includes a tilted region arranged at an angle to the ground,

the test gas flows through said tilted region towards the ground, and

said gas concentration detector is located in said tilted region.

**81.** The fuel cell system according to claim 80, wherein said gas concentration detector has an opening in a direction perpendicular to a peripheral wall of said bypass conduit.

**82.** (Amended) The fuel cell system according to claim 81, wherein:

said opening of said gas concentration detector is located upstream from said bypass conduit, and

said gas concentration detector includes a first collector plate connected to said opening.

**83.** The fuel cell system according to claim 74, wherein said bypass conduit has an end connected to said reformed-gas main line at an outlet of said fuel cell.

**84.** The fuel cell system according to claim 83, wherein said bypass conduit has an end connected one of vertically and at an angle to a ground to said reformed-gas main line at said outlet of said fuel cell.

**85.** The fuel cell system according to claim 74, wherein said gas concentration detector further includes a temperature sensor in said bypass conduit around said gas concentration detector.

**86.** The fuel cell system according to claim 85, wherein said temperature sensor includes a mounting portion joined to said bypass conduit, said bypass conduit being made of a material, said mounting portion being made of a material identical to the material of said bypass conduit.

**87.** The fuel cell system according to claim 85, wherein said temperature sensor is mounted to said bypass conduit and iselectrically insulated from said bypass conduit.

**88.** The fuel cell system according to claim 85, wherein said temperature sensor has a surface with a hydrophilic property for contacting the test gas.

**89.** The fuel cell system according to claim 88, wherein the surface of said temperature sensor is roughened to produce the hydrophilic property.

**90.** The fuel cell system according to claim 88, wherein said temperature sensor includes a titanium oxide layer on said surface contacting the test gas.

**91.** The fuel cell system according to claim 90, wherein said titanium oxide layer has an anatase type crystalline structure.

**92.** The fuel cell system according to claim 74, wherein said gas concentration detector further includes a pressure sensor in said bypass conduit around said gas concentration detector.

**93.** The fuel cell system according to claim 92, wherein said pressure sensor includes a mounting portion joined to said bypass conduit, said bypass conduit being made of a material, said mounting portion being made of a material identical to the material of said bypass conduit.

**94.** The fuel cell system according to claim 92, wherein said pressure sensor is mounted to said bypass conduit and electrically insulated from said bypass conduit.

**95.** The fuel cell system according to claim 92, wherein said pressure sensor has a surface with a hydrophilic property contacting the test gas.

**96.** The fuel cell system according to claim 95, wherein the surface of said pressure sensor is roughened to produce the hydrophilic property.

**97.** The fuel cell system according to claim 95, wherein said pressure sensor has a titanium oxide layer on said surface contacting the test gas.

**98.** The fuel cell system according to claim 97, wherein said titanium oxide layer has an anatase type crystalline structure.

**99.** The fuel cell system according to claim 74, wherein said bypass conduit being made of a material, said gas concentration detector contains a material identical to the material of said bypass conduit.

**100.** The fuel cell system according to claim 74, wherein said gas concentration detector is mounted to said bypass conduit, said gas concentration detector being electrically insulated from said bypass conduit.

**101.** The fuel cell system according to claim 74, wherein said gas concentration detector and said bypass conduit have respective surfaces with a hydrophilic property contacting the test gas.

**102.** The fuel cell system according to claim 101, wherein said surfaces are roughened to produce the hydrophilic property.

**103.** The fuel cell system according to claim 101, wherein said gas concentration detector and said bypass conduit includes titanium oxide layers on said surfaces contacting with the test gas, respectively.

**104.** The fuel cell system according to claim 103, wherein each of said titanium oxide layers has an anatase type crystalline structure.

**105.** The fuel cell system according to claim 103, wherein said titanium oxide layers have thicknesses ranging from 0.1μm and to 1μm.

FIG. 1

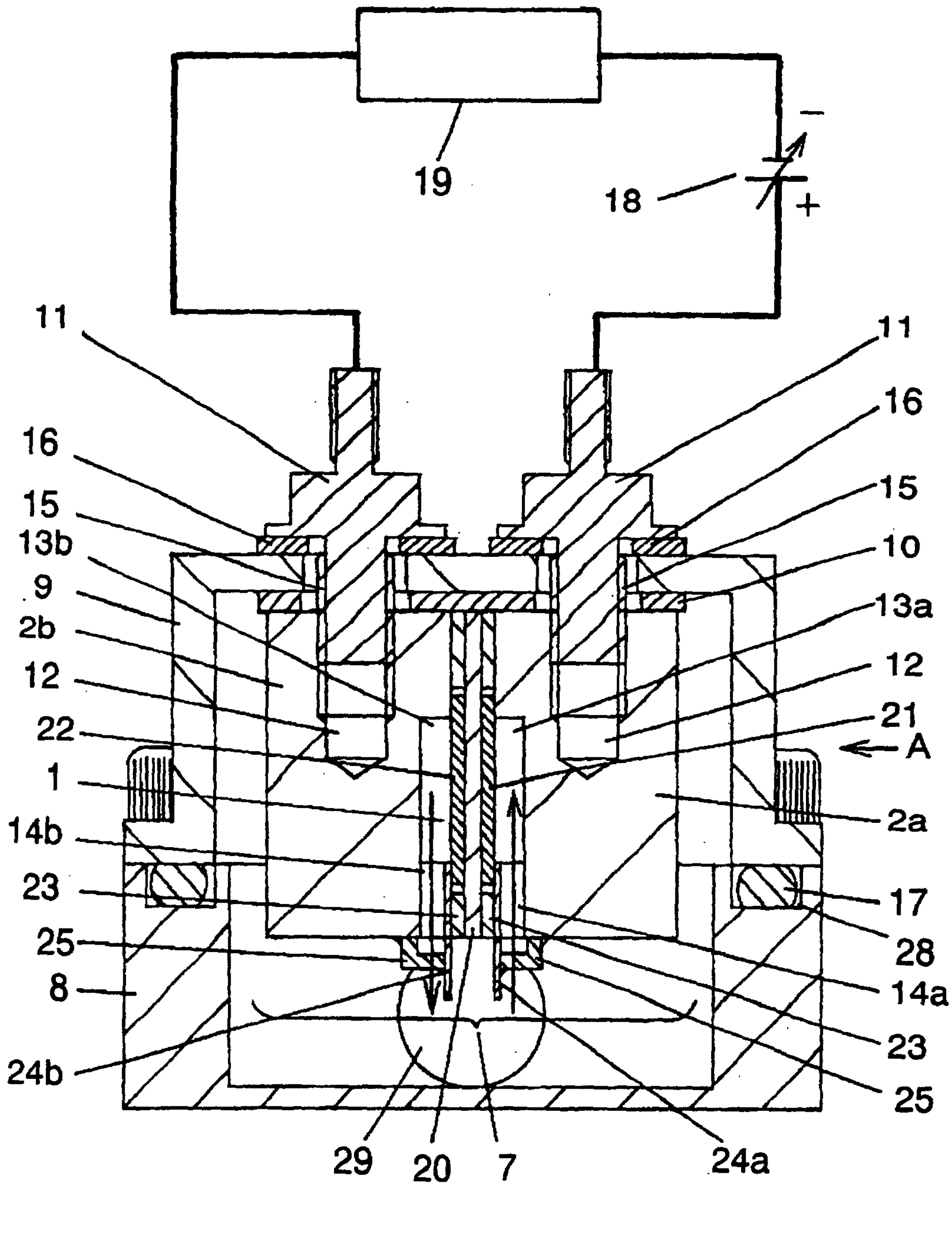
19
18
−
+
11
11
16
16
15
15
13b
10
9
13a
2b
12
12
22
21
A
1
2a
14b
17
23
28
25
14a
8
23
24b
25
29
20
7
24a

FIG. 2

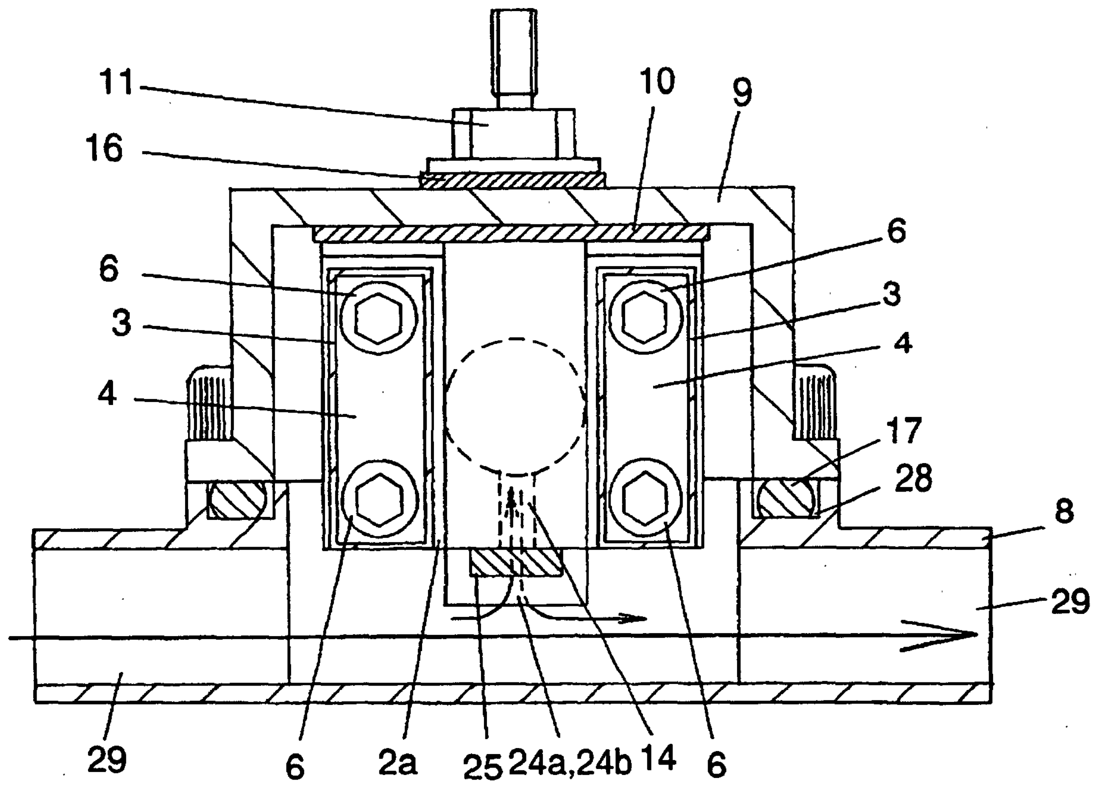

FIG. 3

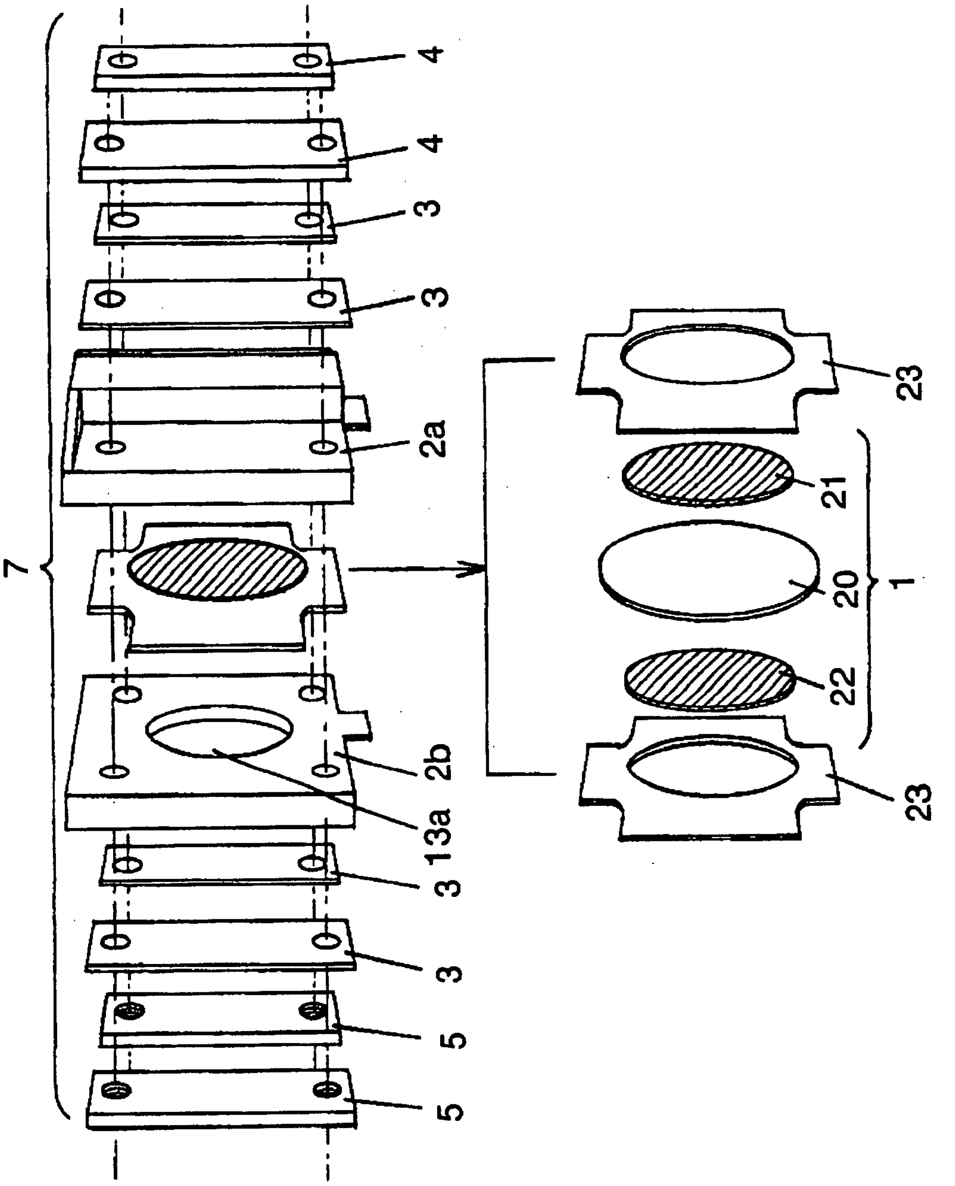

FIG. 4

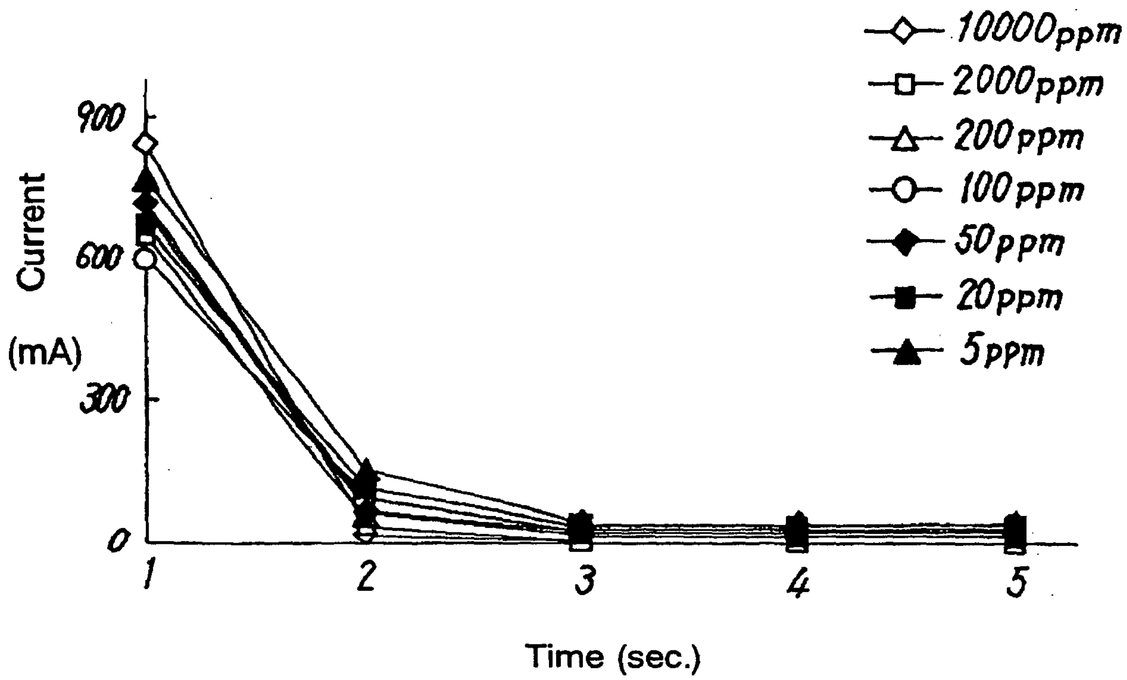
10000ppm
2000ppm
200ppm
100ppm
50ppm
20ppm
5ppm
Current
(mA)
900
600
300
0
1
2
3
4
5
Time (sec.)

FIG. 5

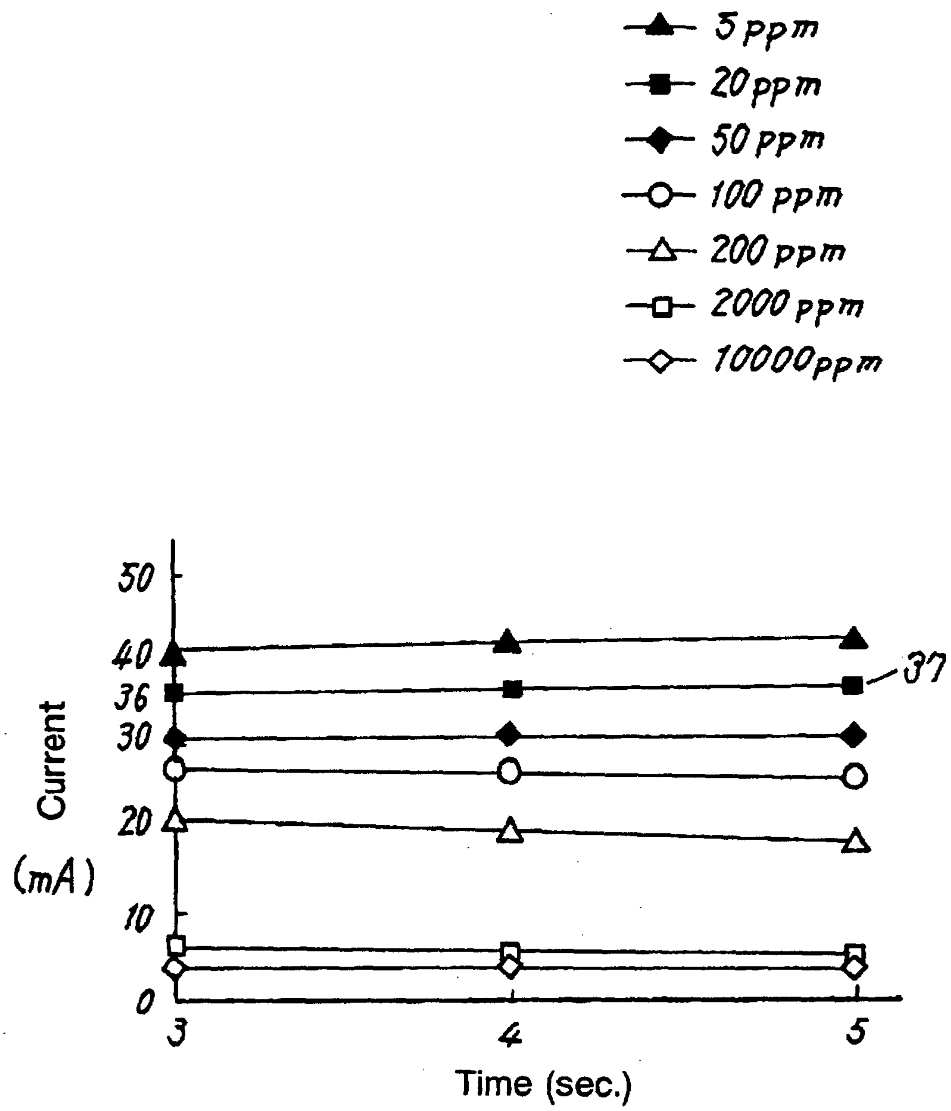
5ppm
20ppm
50ppm
100 ppm
200 ppm
2000 ppm
10000ppm
50
40
36
30
20
10
0
Current
(mA)
37
3
4
5
Time (sec.)

FIG. 6

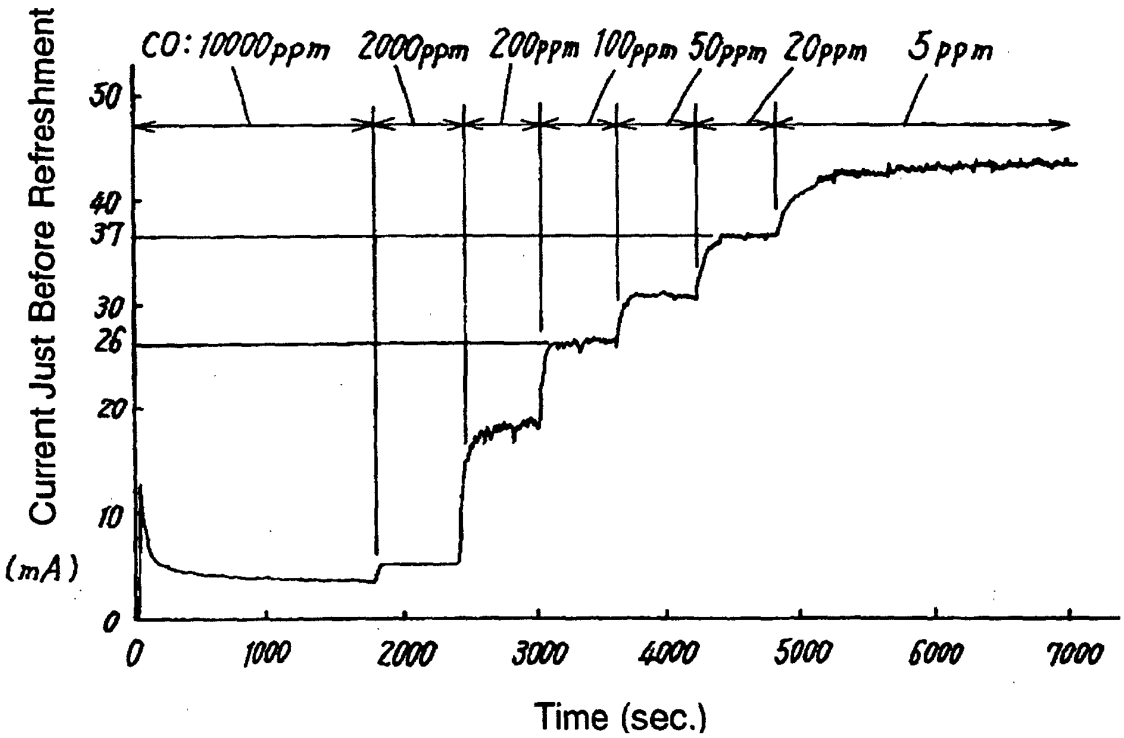
CO: 10000ppm
2000ppm
200ppm
100ppm
50ppm
20ppm
5ppm
Current Just Before Refreshment (mA)
50
40
37
30
26
20
10
0
0
1000
2000
3000
4000
5000
6000
7000
Time (sec.)

FIG. 7

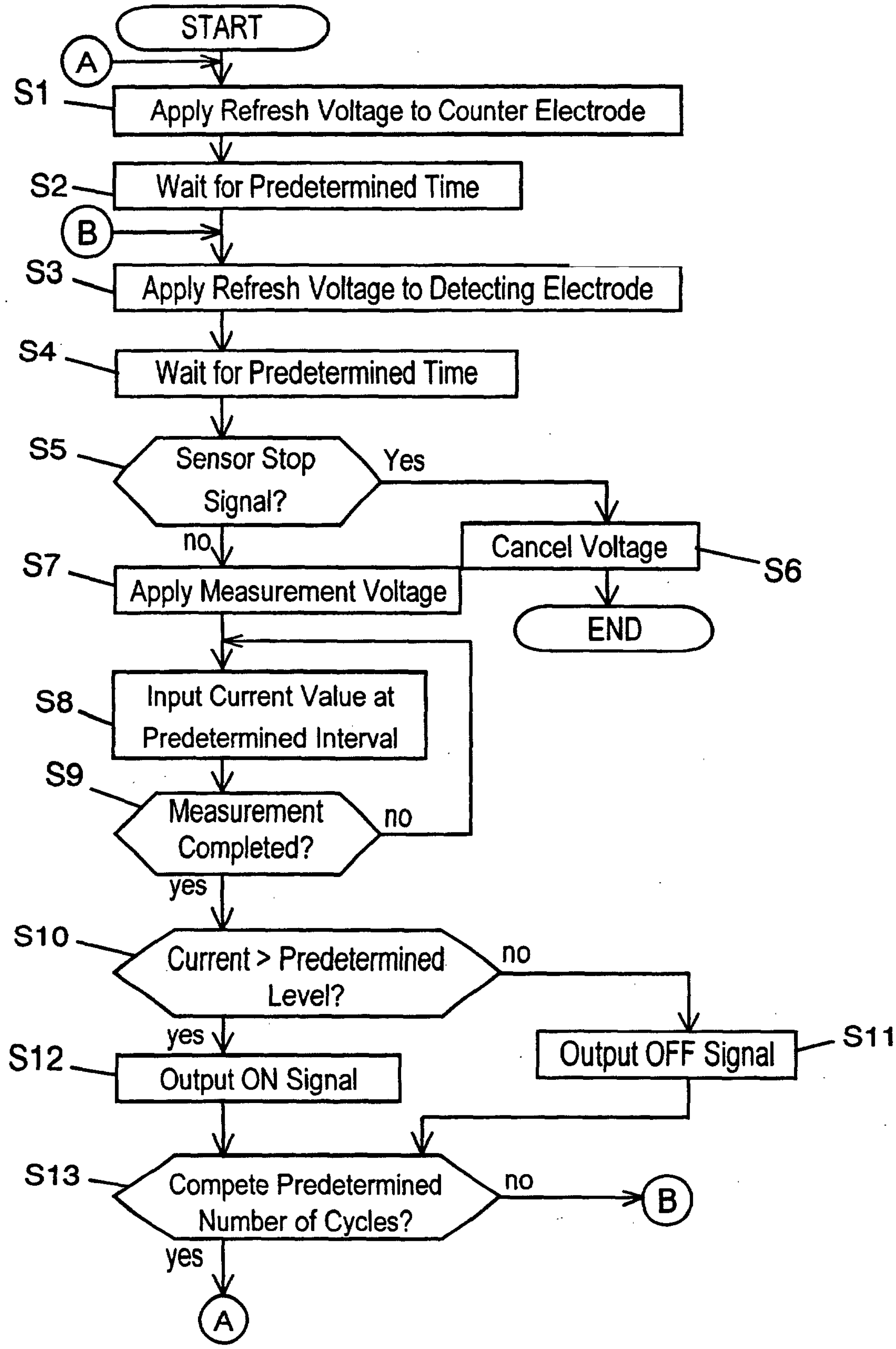
START
A
S1
Apply Refresh Voltage to Counter Electrode
S2
Wait for Predetermined Time
B
S3
Apply Refresh Voltage to Detecting Electrode
S4
Wait for Predetermined Time
S5
Sensor Stop Signal?
Yes
no
Cancel Voltage
S6
S7
Apply Measurement Voltage
END
S8
Input Current Value at Predetermined Interval
S9
Measurement Completed?
no
yes
S10
Current > Predetermined Level?
no
yes
S11
Output OFF Signal
S12
Output ON Signal
S13
Compete Predetermined Number of Cycles?
no
B
yes
A

FIG. 8

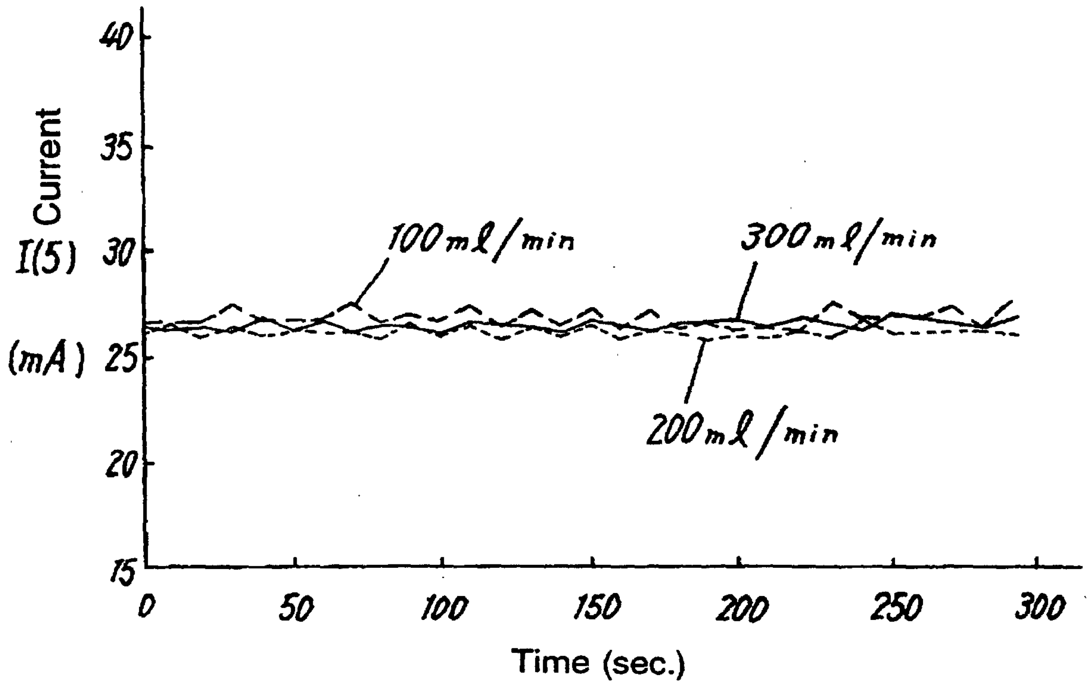
Current
I(5)
(mA)
40
35
30
25
20
15
100mℓ/min
300mℓ/min
200mℓ/min
0
50
100
150
200
250
300
Time (sec.)

FIG. 9

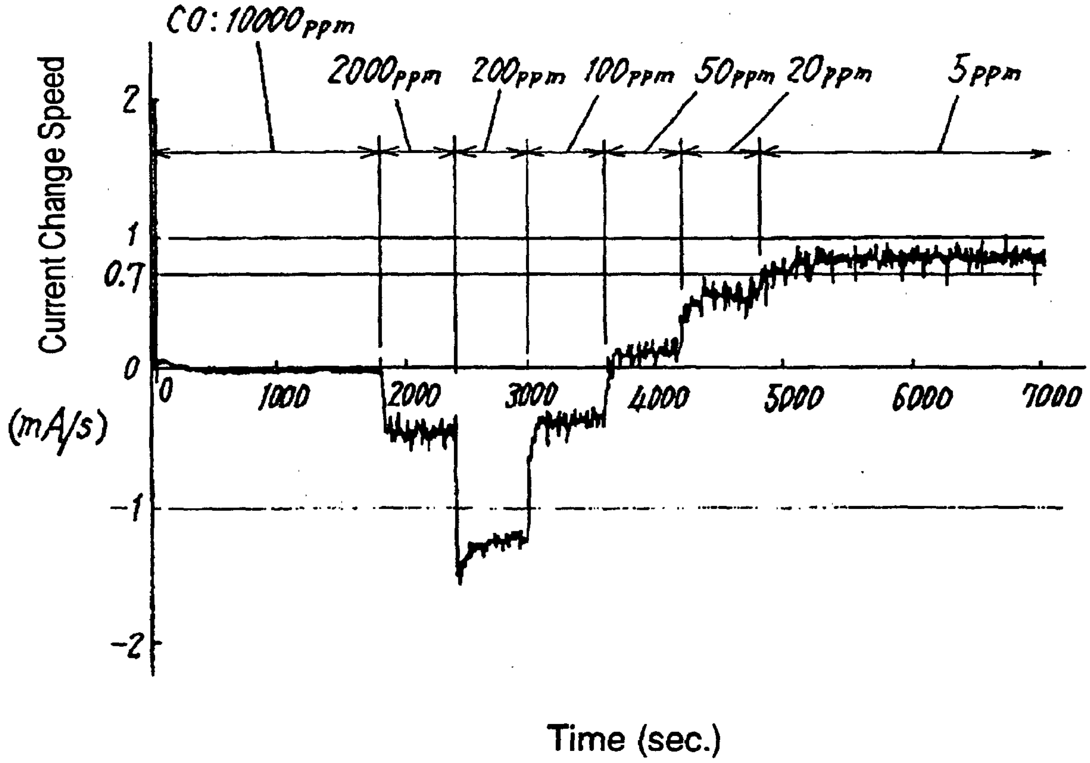
CO: 10000ppm
2000ppm
200ppm
100ppm
50ppm
20ppm
5ppm
Current Change Speed
(mA/s)
2
1
0.7
0
-1
-2
0
1000
2000
3000
4000
5000
6000
7000
Time (sec.)

FIG. 10

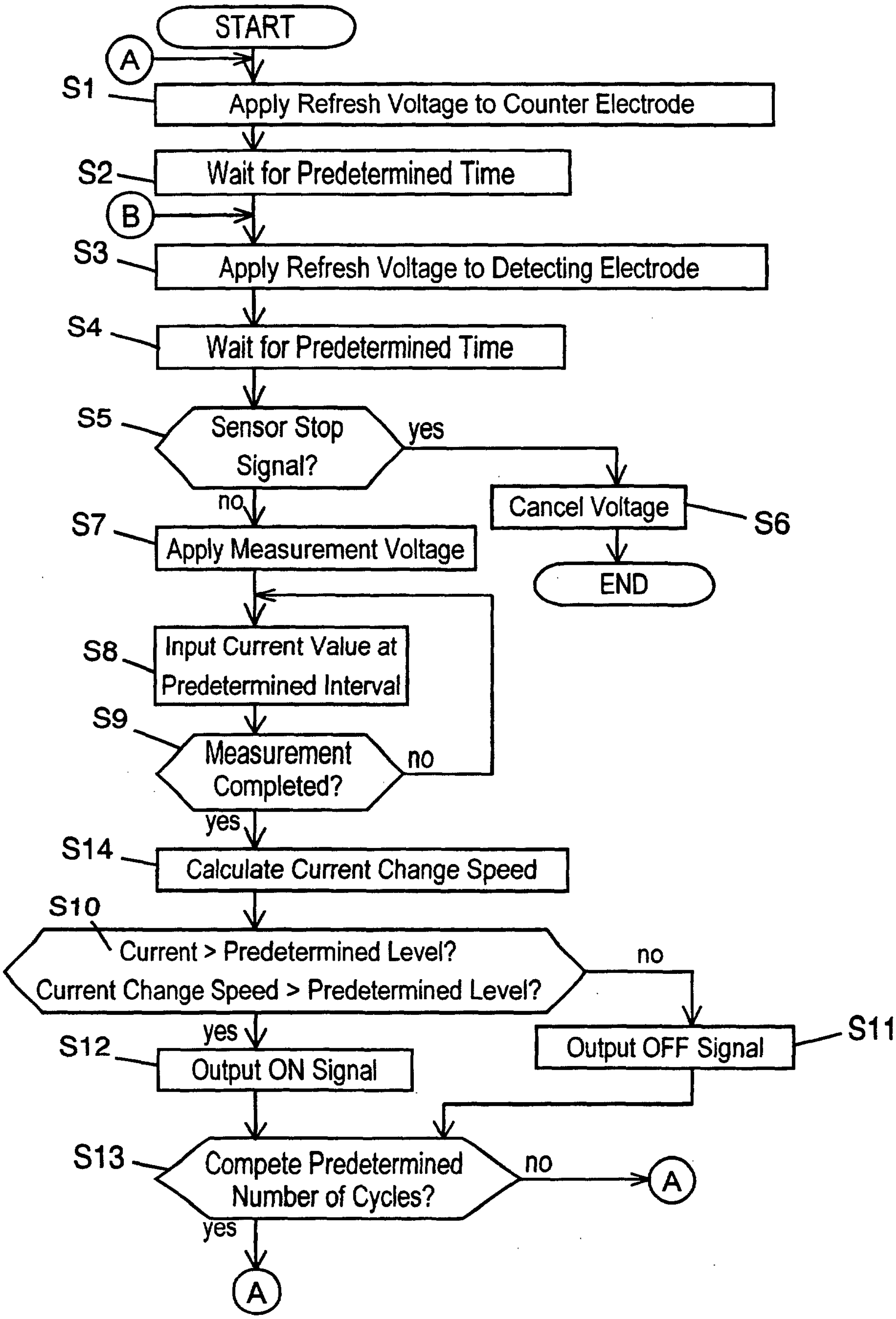
START
A
S1
Apply Refresh Voltage to Counter Electrode
S2
Wait for Predetermined Time
B
S3
Apply Refresh Voltage to Detecting Electrode
S4
Wait for Predetermined Time
S5
Sensor Stop Signal?
yes
no
Cancel Voltage
S6
END
S7
Apply Measurement Voltage
S8
Input Current Value at Predetermined Interval
S9
Measurement Completed?
no
yes
S14
Calculate Current Change Speed
S10
Current > Predetermined Level?
Current Change Speed > Predetermined Level?
no
yes
S12
Output ON Signal
Output OFF Signal
S11
S13
Compete Predetermined Number of Cycles?
no
A
yes
A

FIG. 11

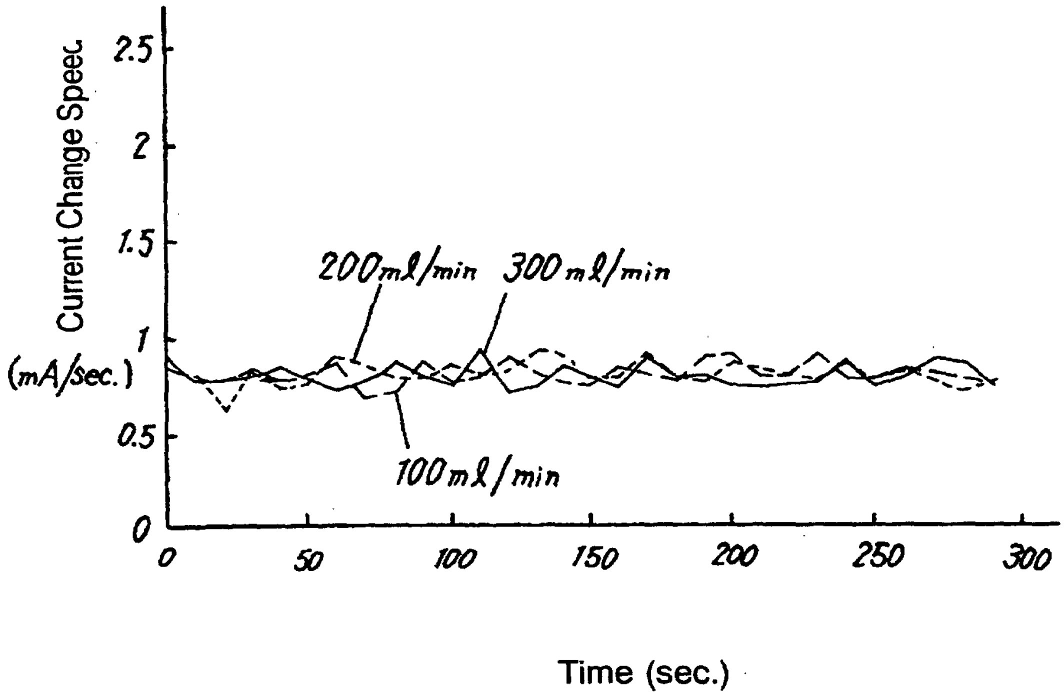
Current Change Speed
(mA/sec.)
2.5
2
1.5
1
0.5
0
200mℓ/min
300mℓ/min
100mℓ/min
0
50
100
150
200
250
300
Time (sec.)

FIG. 12

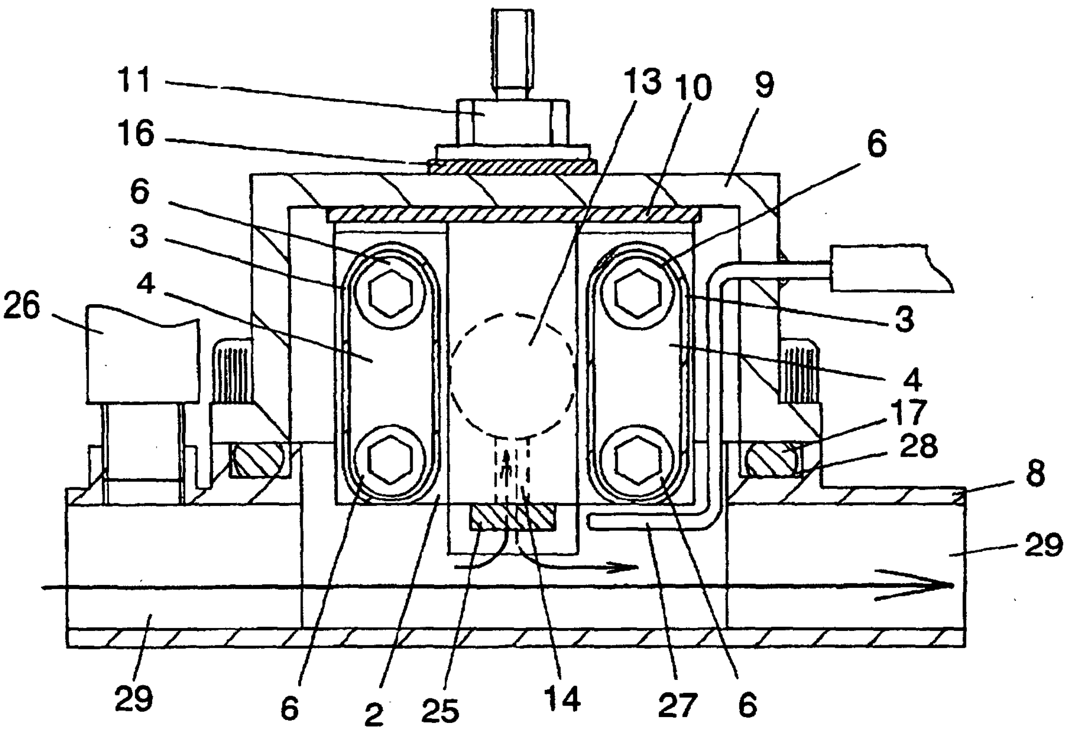

FIG. 13

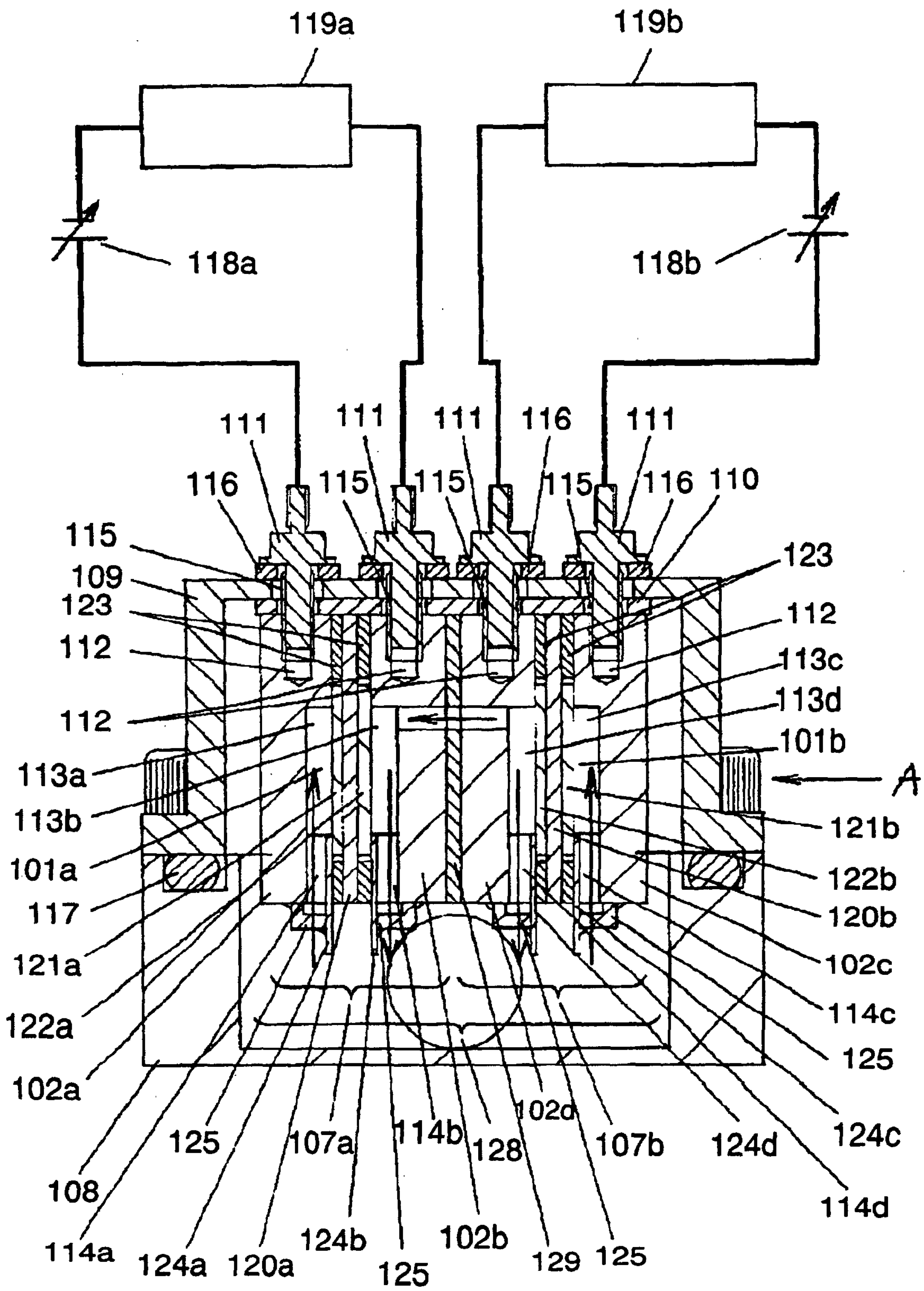
119a
119b
118a
118b
111
116
115
110
109
123
112
113a
113b
113c
113d
101a
101b
A
117
121a
121b
122a
122b
102a
102b
102c
102d
120a
120b
114a
114b
114c
114d
124a
124b
124c
124d
125
107a
107b
108
128
129

FIG. 14

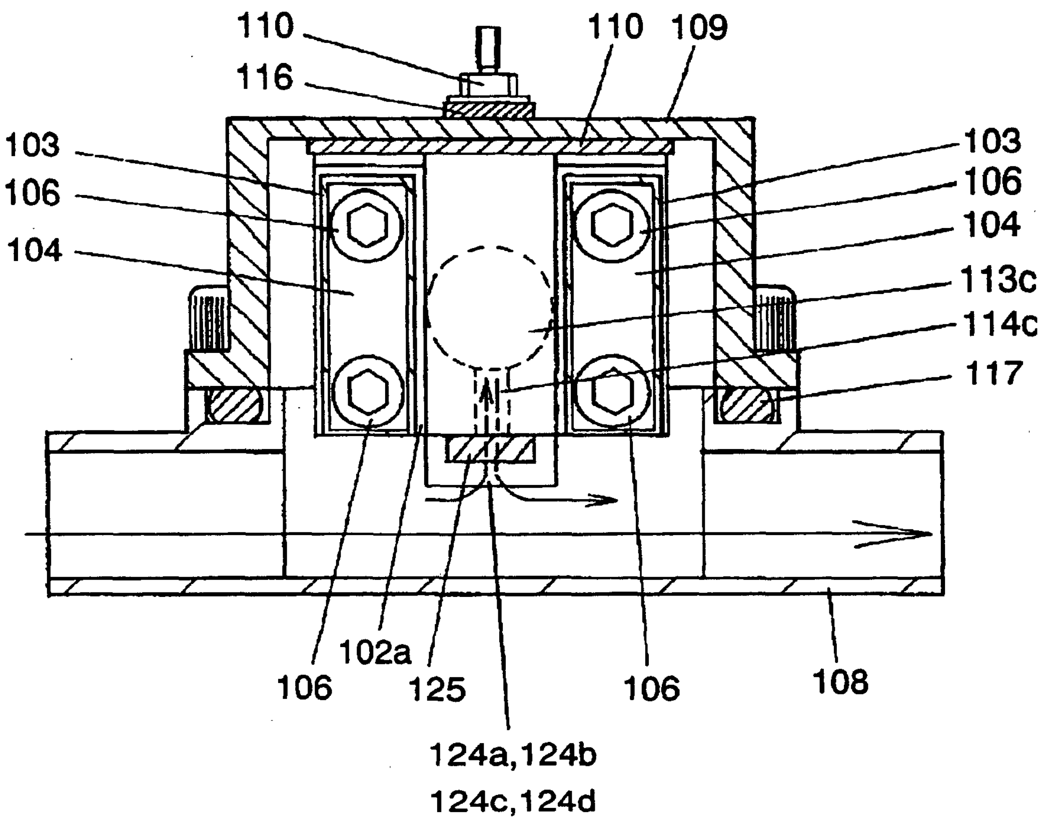
110
116
110
109
103
106
104
103
106
104
113c
114c
117
106
102a
125
106
108
124a,124b
124c,124d

FIG. 15

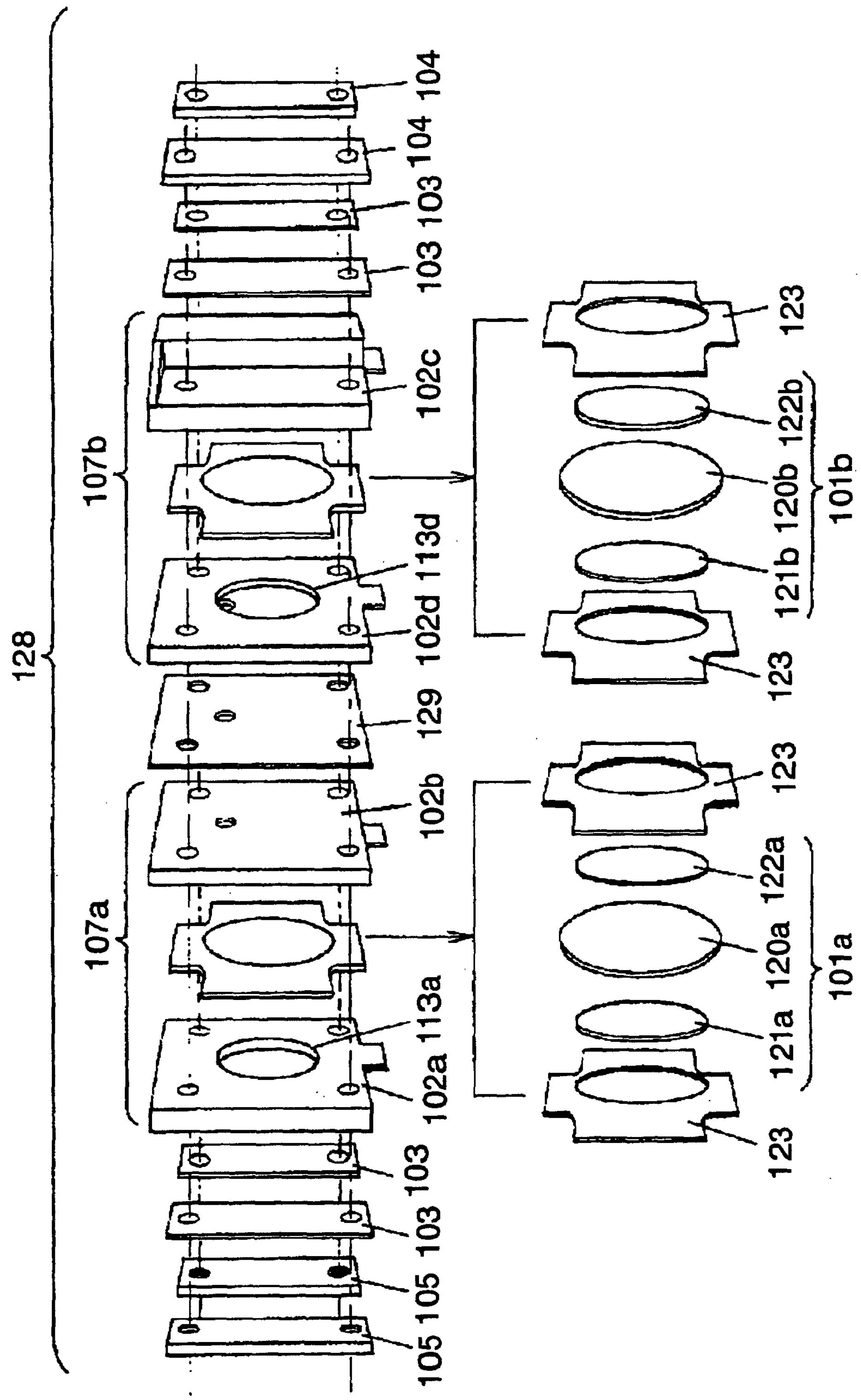
128
107a
107b
104
104
103
103
102c
113d
102d
129
102b
113a
102a
103
103
105
105
123
122b
120b
121b
101b
123
123
122a
120a
121a
101a
123

FIG. 16

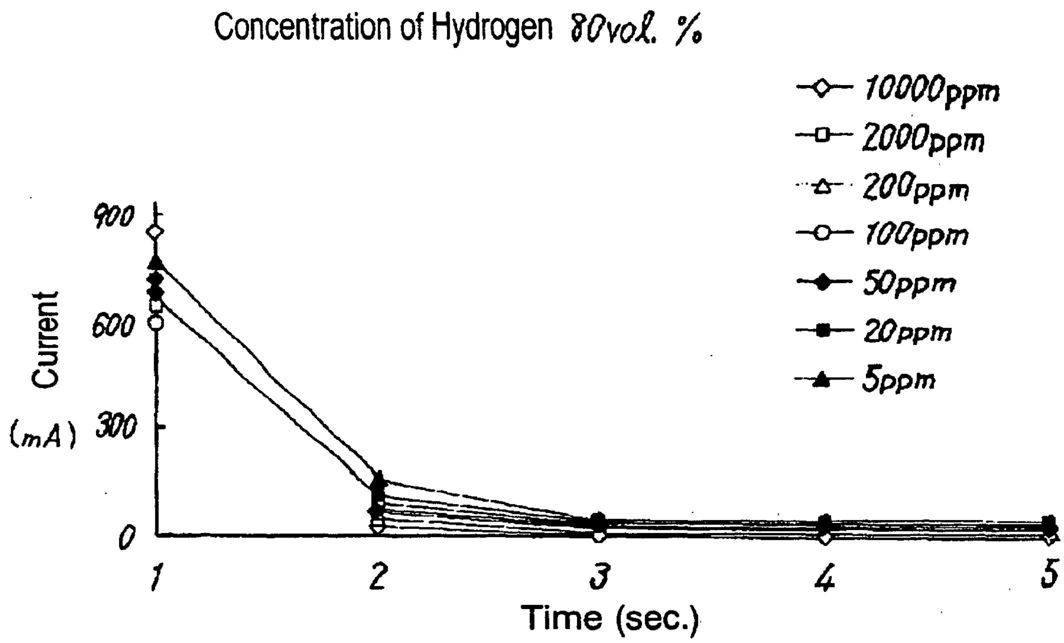
Concentration of Hydrogen 80vol. %
10000ppm
2000ppm
200ppm
100ppm
50ppm
20ppm
5ppm
Current
(mA)
900
600
300
0
1
2
3
4
5
Time (sec.)

FIG. 17

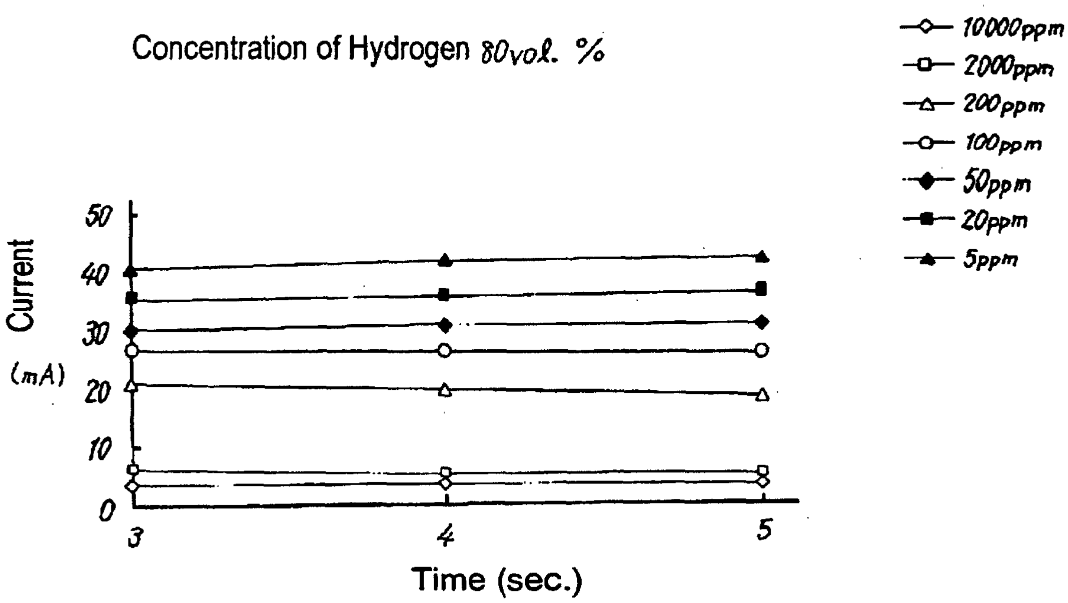
Concentration of Hydrogen 80vol. %
10000ppm
2000ppm
200ppm
100ppm
50ppm
20ppm
5ppm
Current
(mA)
50
40
30
20
10
0
3
4
5
Time (sec.)

FIG. 18

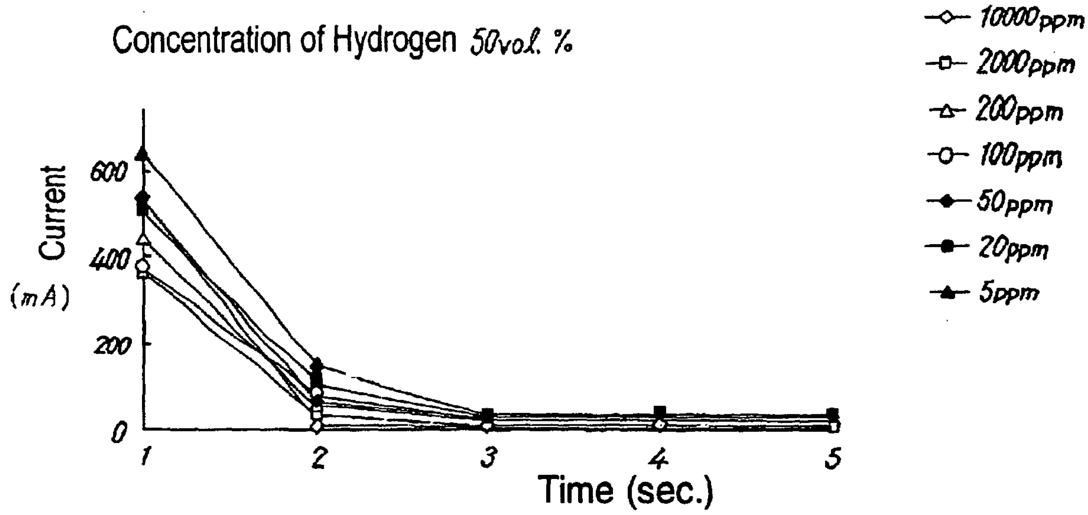
Concentration of Hydrogen 50vol. %
Current (mA)
600
400
200
0
1
2
3
4
5
Time (sec.)
10000ppm
2000ppm
200ppm
100ppm
50ppm
20ppm
5ppm

FIG. 19

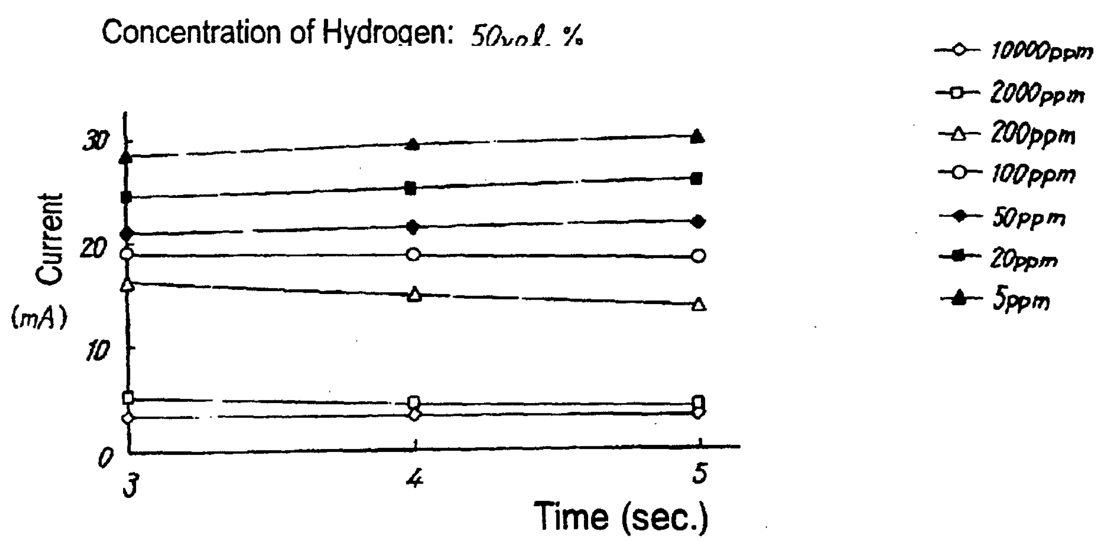
Concentration of Hydrogen: 50vol. %
Current (mA)
30
20
10
0
3
4
5
Time (sec.)
10000ppm
2000ppm
200ppm
100ppm
50ppm
20ppm
5ppm

FIG. 20

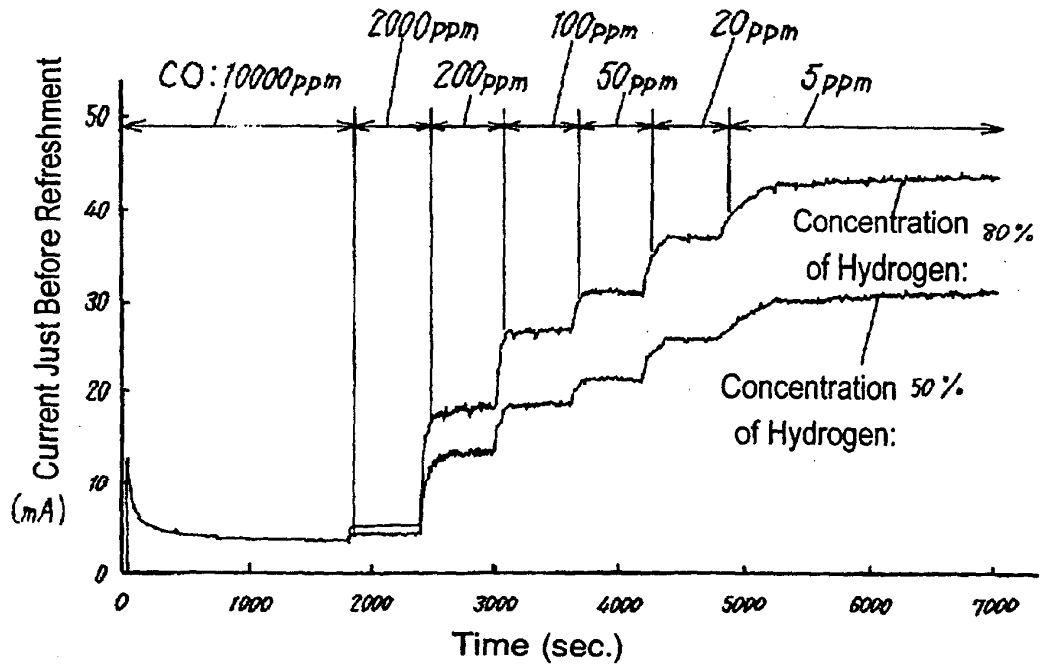
CO:10000ppm
2000ppm
200ppm
100ppm
50ppm
20ppm
5ppm
Current Just Before Refreshment
(mA)
50
40
30
20
10
0
0
1000
2000
3000
4000
5000
6000
7000
Time (sec.)
Concentration 80% of Hydrogen:
Concentration 50% of Hydrogen:

# FIG. 21

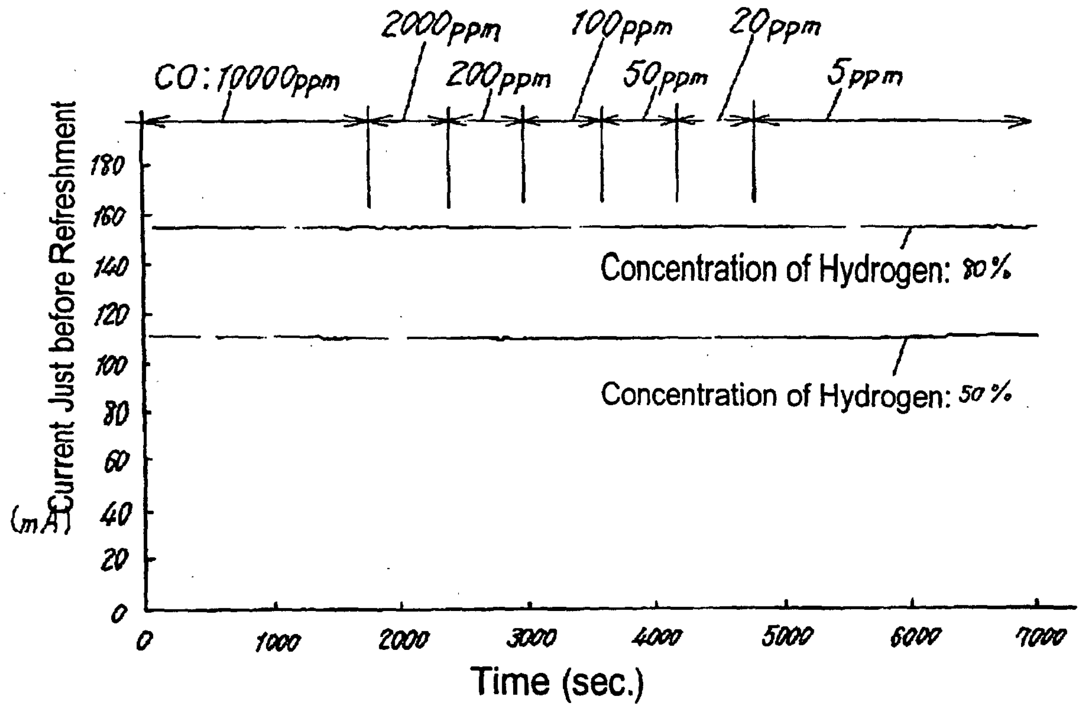
CO: 10000ppm
2000ppm
200ppm
100ppm
50ppm
20ppm
5ppm
Current Just before Refreshment (mA)
180
160
140
120
100
80
60
40
20
0
Concentration of Hydrogen: 80%
Concentration of Hydrogen: 50%
0
1000
2000
3000
4000
5000
6000
7000
Time (sec.)

FIG. 22

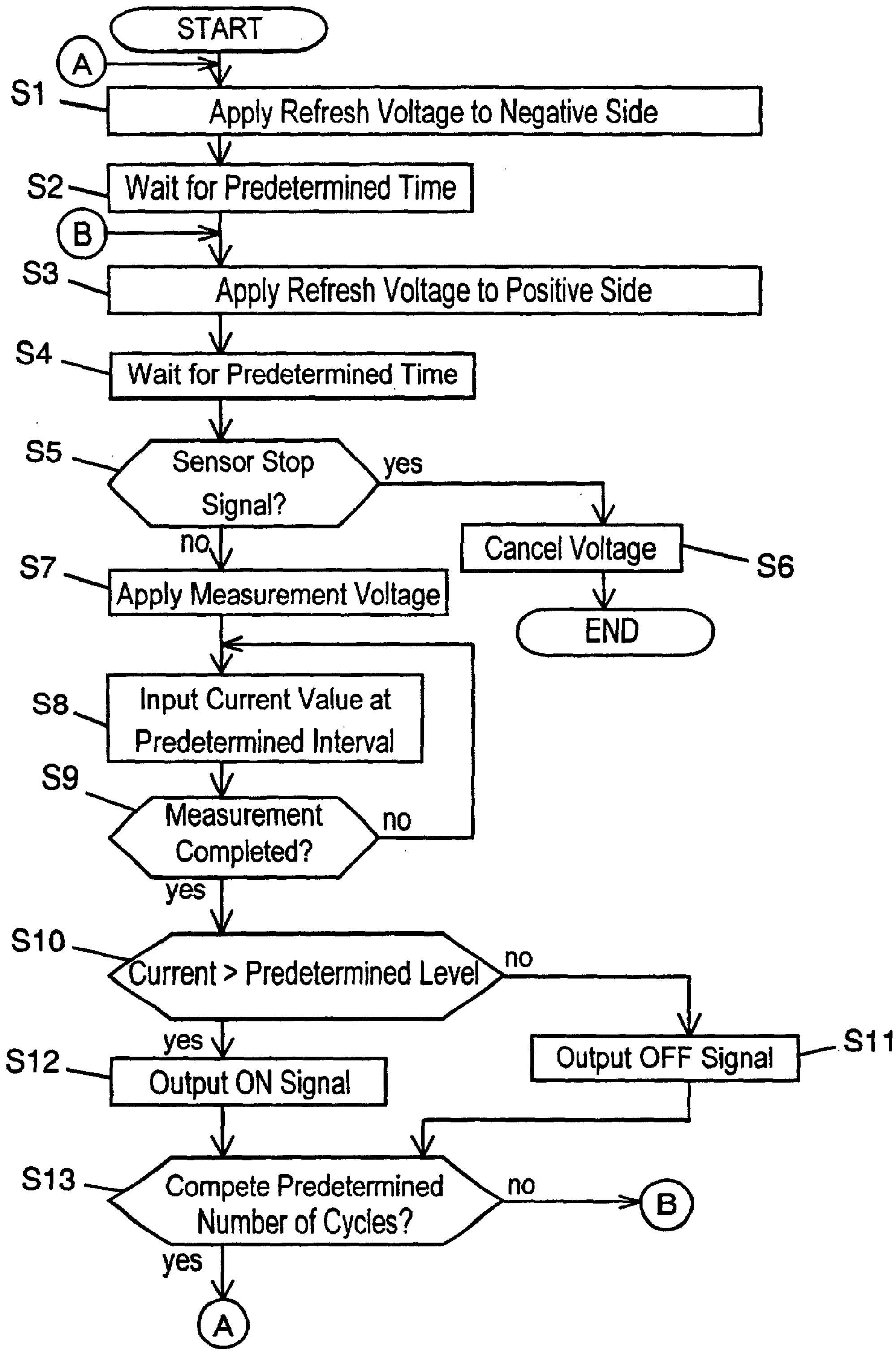
START
A
S1
Apply Refresh Voltage to Negative Side
S2
Wait for Predetermined Time
B
S3
Apply Refresh Voltage to Positive Side
S4
Wait for Predetermined Time
S5
Sensor Stop Signal?
yes
no
Cancel Voltage
S6
END
S7
Apply Measurement Voltage
S8
Input Current Value at Predetermined Interval
S9
Measurement Completed?
no
yes
S10
Current > Predetermined Level
no
Output OFF Signal
S11
yes
S12
Output ON Signal
S13
Compete Predetermined Number of Cycles?
no
B
yes
A

FIG. 23

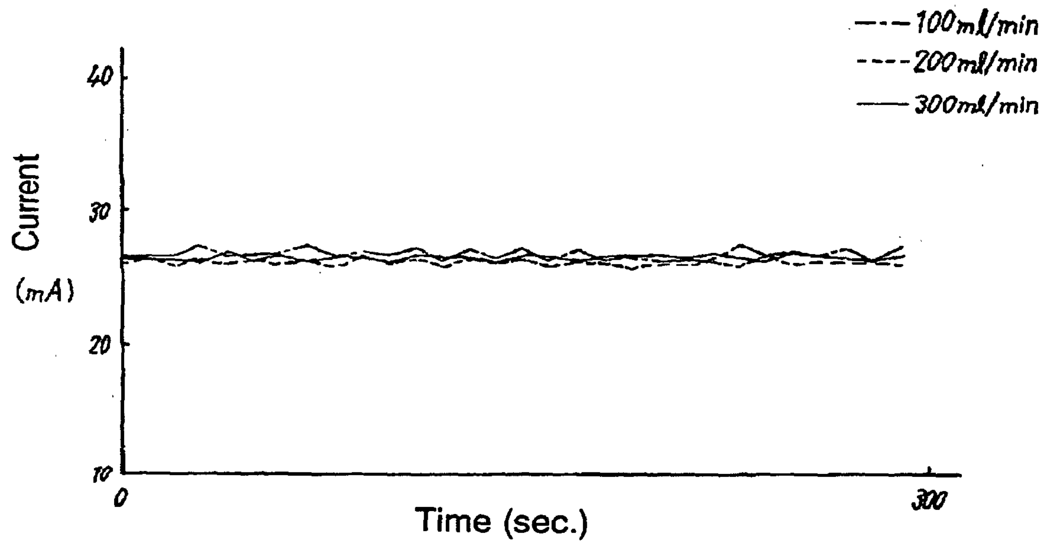
100mℓ/min
200mℓ/min
300mℓ/min
Current (mA)
40
30
20
10
0
300
Time (sec.)

FIG. 24

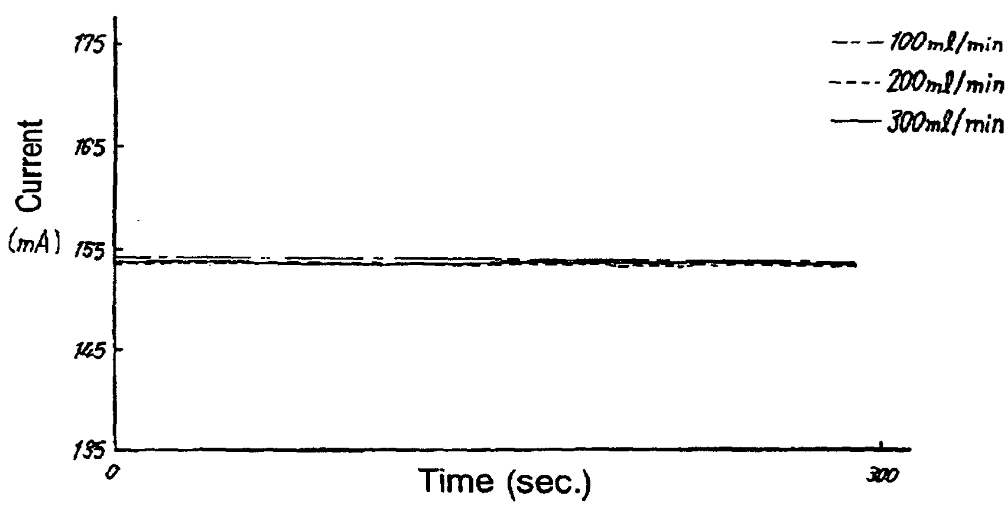
100mℓ/min
200mℓ/min
300mℓ/min
Current (mA)
175
165
155
145
135
0
300
Time (sec.)

FIG. 25

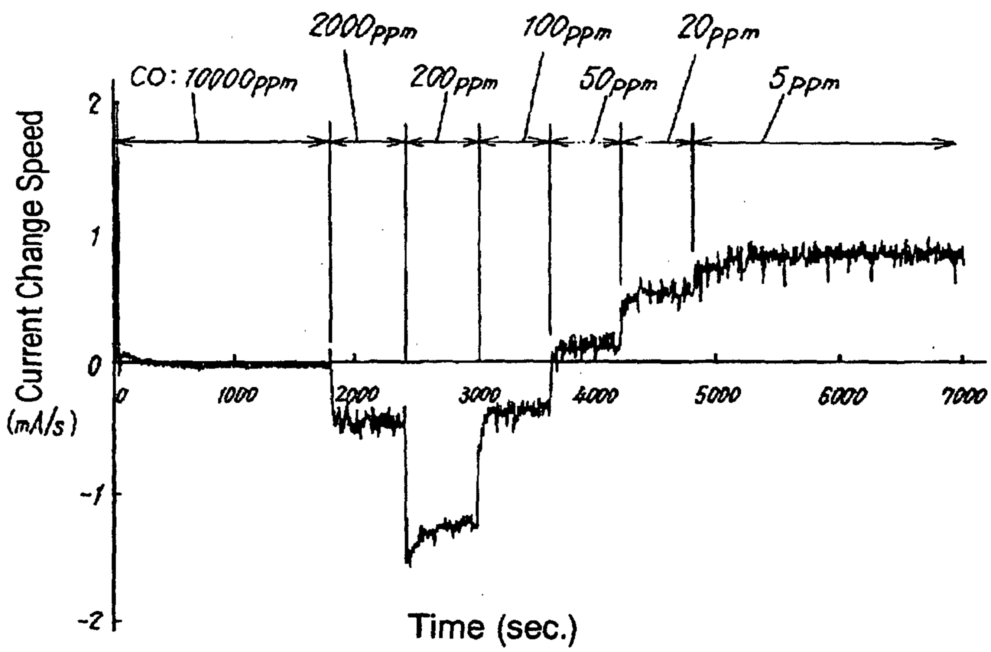

CO: 10000ppm
2000ppm
200ppm
100ppm
50ppm
20ppm
5ppm
Current Change Speed (mA/s)
2
1
0
-1
-2
0
1000
2000
3000
4000
5000
6000
7000
Time (sec.)

FIG. 26

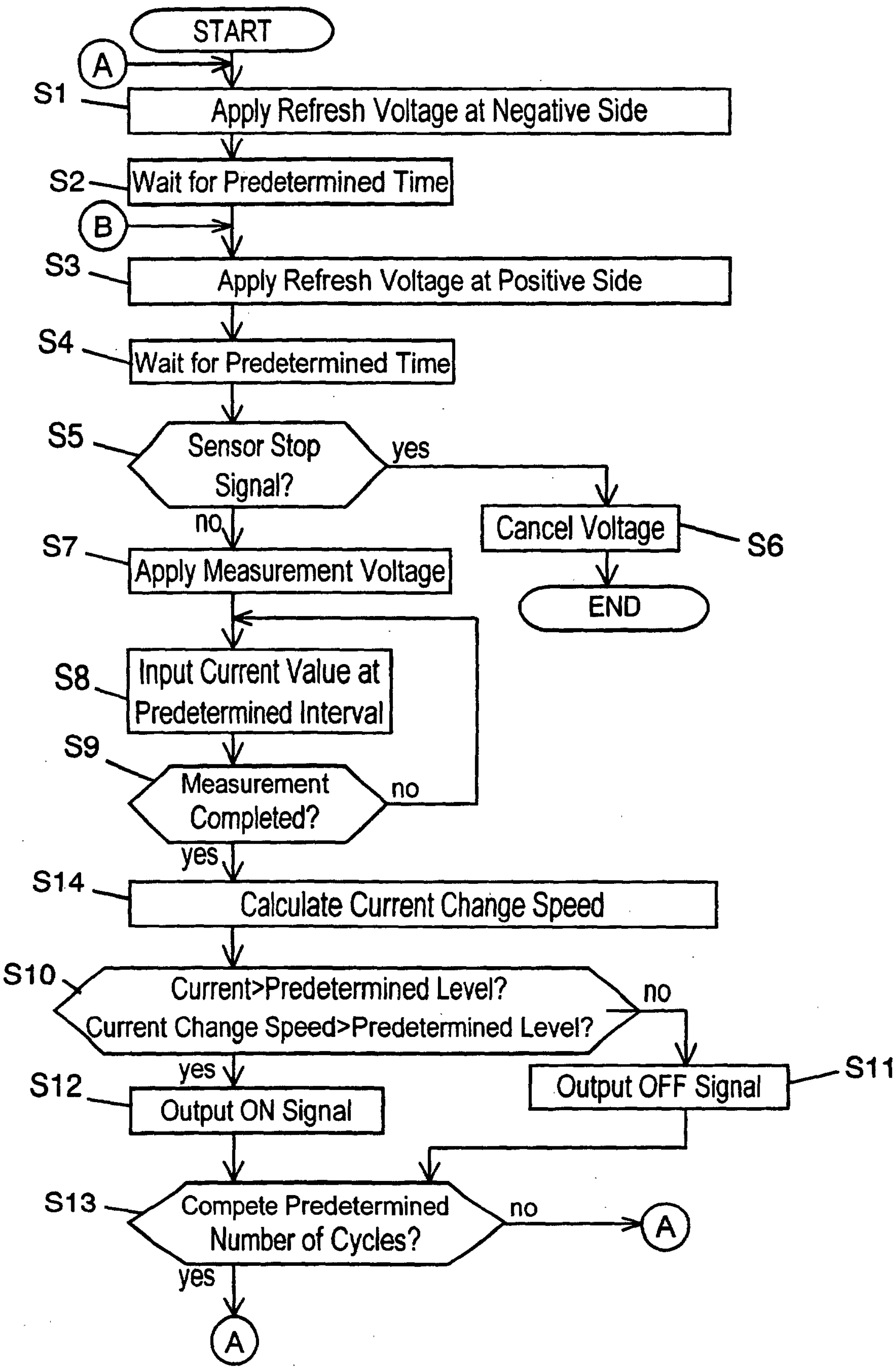
START
A
S1
Apply Refresh Voltage at Negative Side
S2
Wait for Predetermined Time
B
S3
Apply Refresh Voltage at Positive Side
S4
Wait for Predetermined Time
S5
Sensor Stop Signal?
yes
no
Cancel Voltage
S6
END
S7
Apply Measurement Voltage
S8
Input Current Value at Predetermined Interval
S9
Measurement Completed?
no
yes
S14
Calculate Current Change Speed
S10
Current>Predetermined Level?
Current Change Speed>Predetermined Level?
no
yes
S12
Output ON Signal
Output OFF Signal
S11
S13
Compete Predetermined Number of Cycles?
no
A
yes
A

# FIG. 27

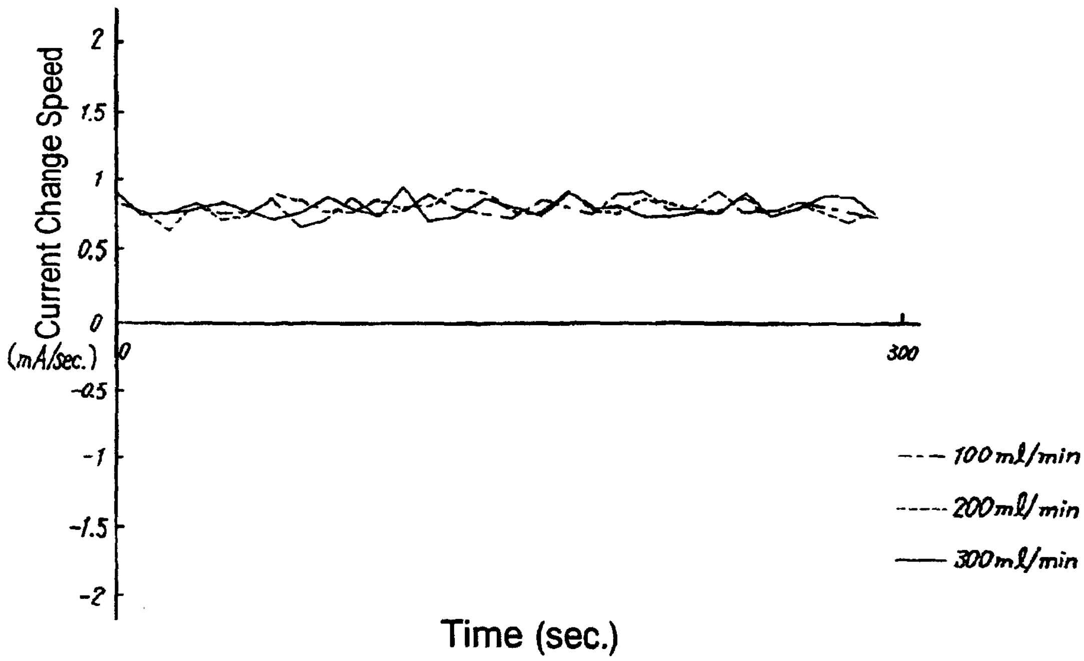
Current Change Speed
(mA/sec.)
2
1.5
1
0.5
0
-0.5
-1
-1.5
-2
0
300
100ml/min
200ml/min
300ml/min
Time (sec.)

FIG. 28

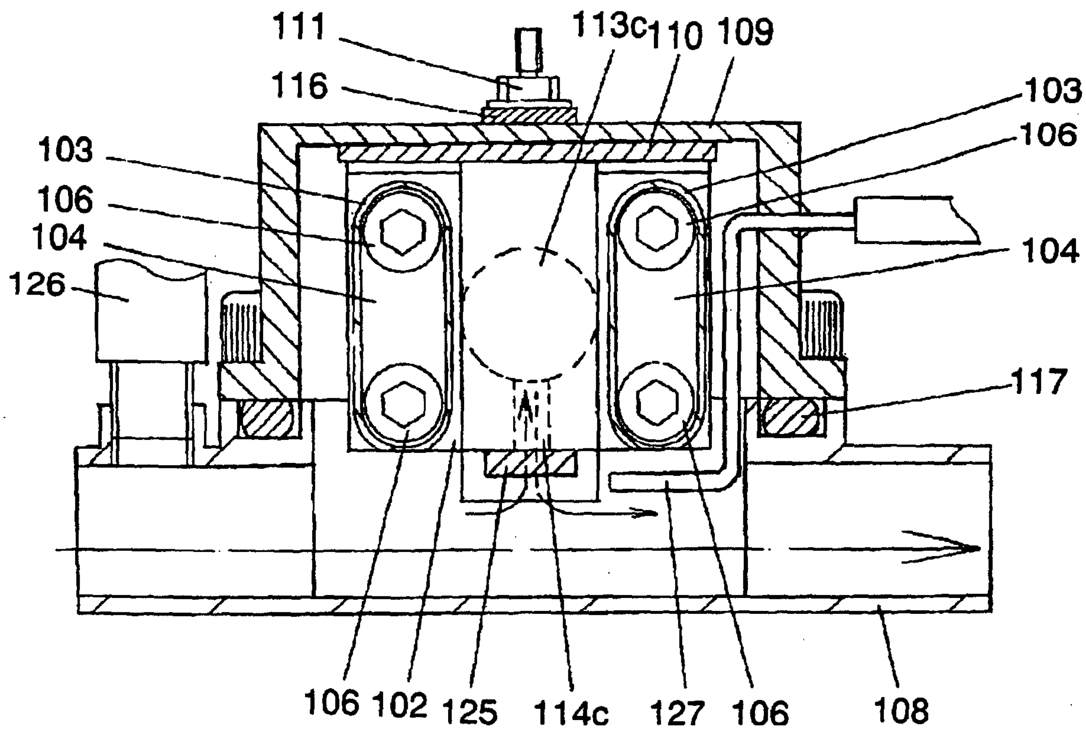
111
113c
110
109
116
103
103
106
106
104
104
126
117
106
102
125
114c
127
106
108

FIG. 29

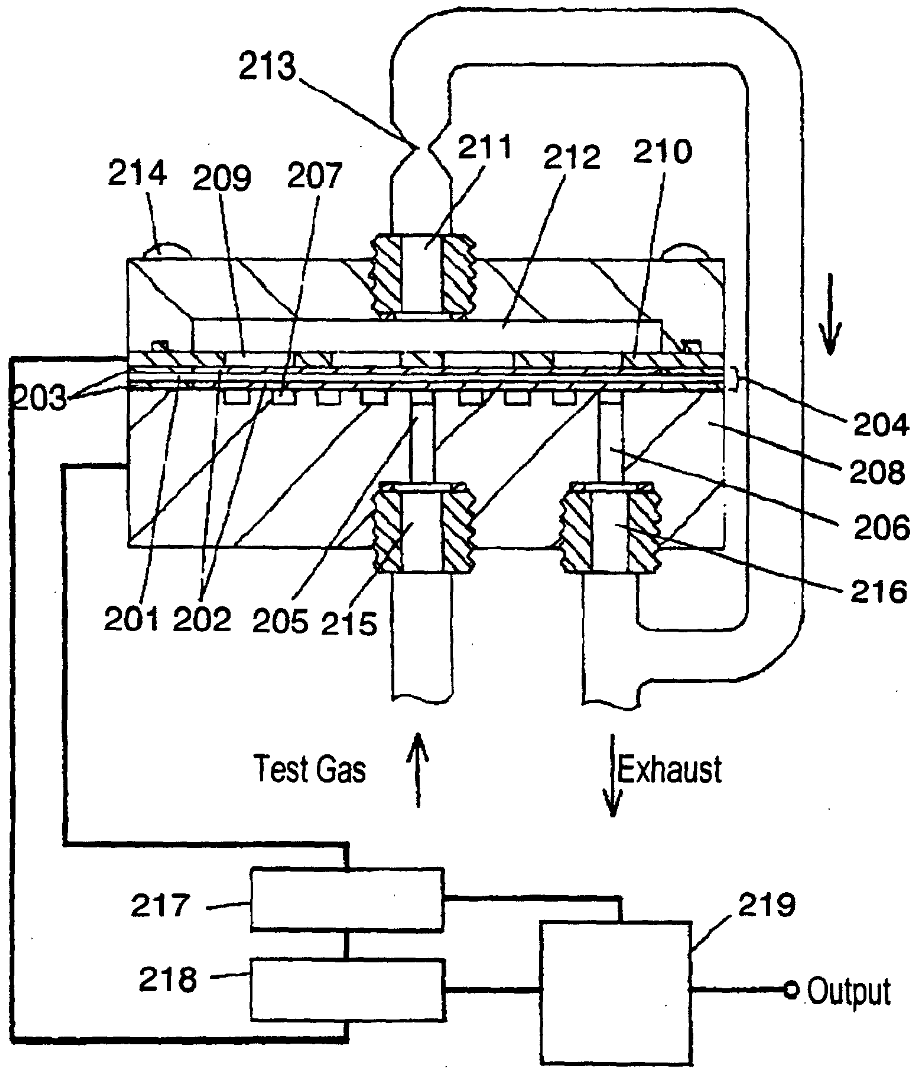
213
214
209
207
211
212
210
203
204
208
206
216
201
202
205
215
Test Gas
Exhaust
217
218
219
Output

FIG. 30A

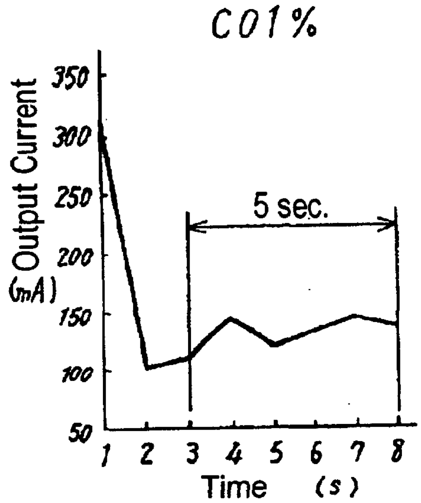


FIG. 30B

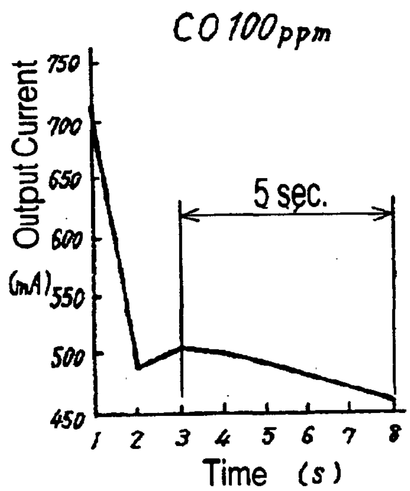


FIG. 30C

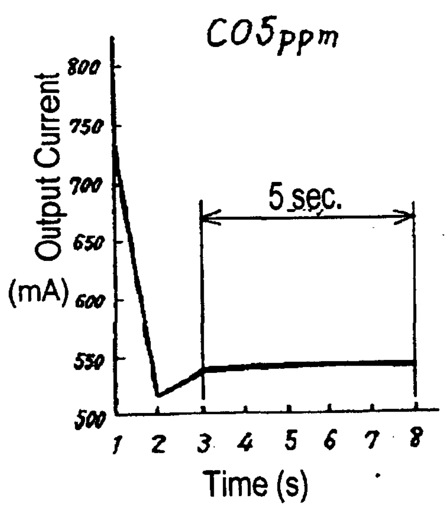

FIG. 31

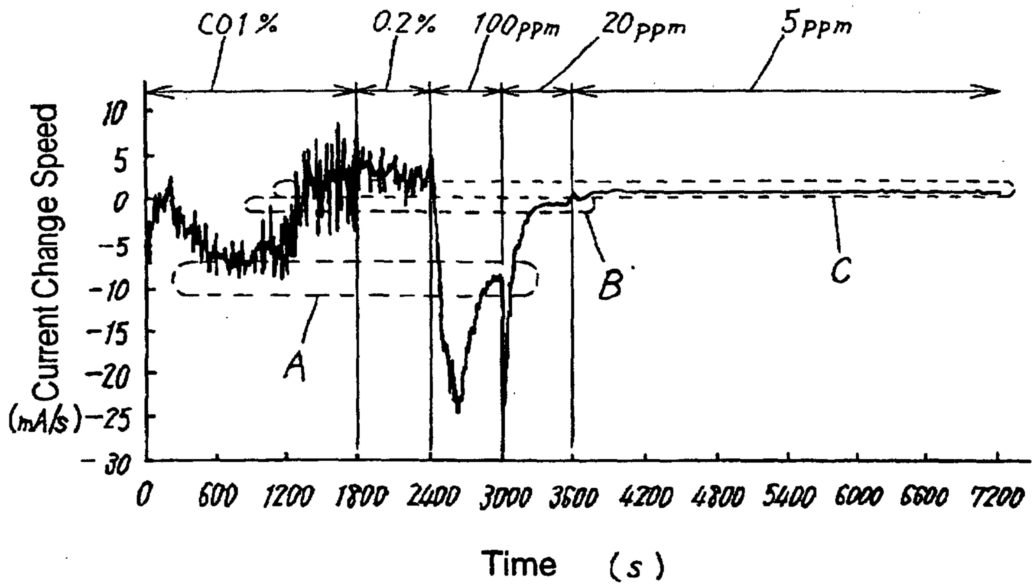
CO1%
0.2%
100ppm
20ppm
5ppm
Current Change Speed
(mA/s)
10
5
0
-5
-10
-15
-20
-25
-30
A
B
C
0
600
1200
1800
2400
3000
3600
4200
4800
5400
6000
6600
7200
Time (s)

FIG. 32

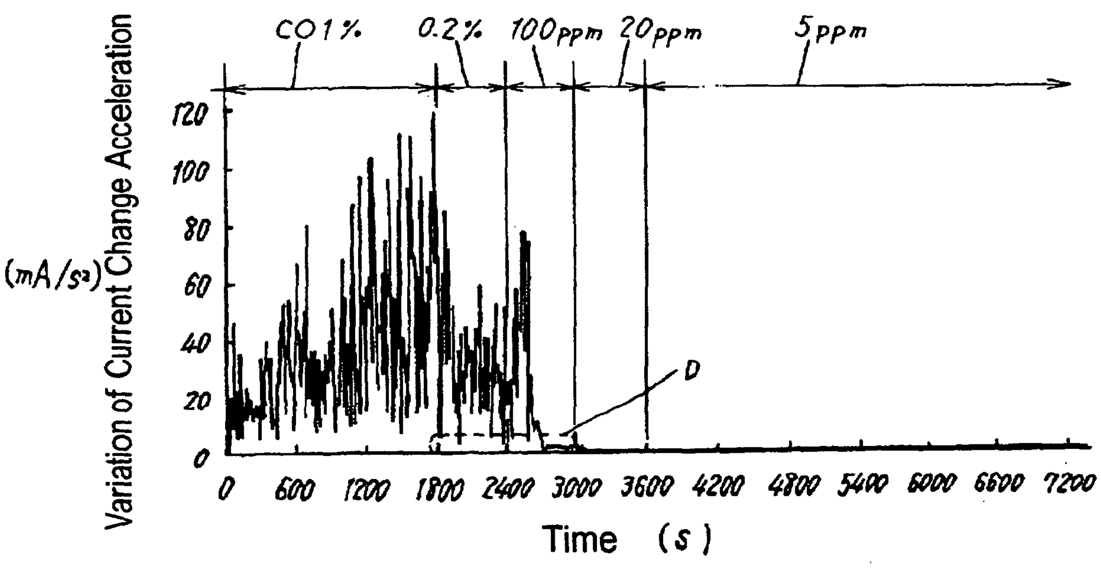
CO1%
0.2%
100ppm
20ppm
5ppm
Variation of Current Change Acceleration
(mA/s²)
120
100
80
60
40
20
0
D
0
600
1200
1800
2400
3000
3600
4200
4800
5400
6000
6600
7200
Time (s)

FIG. 33

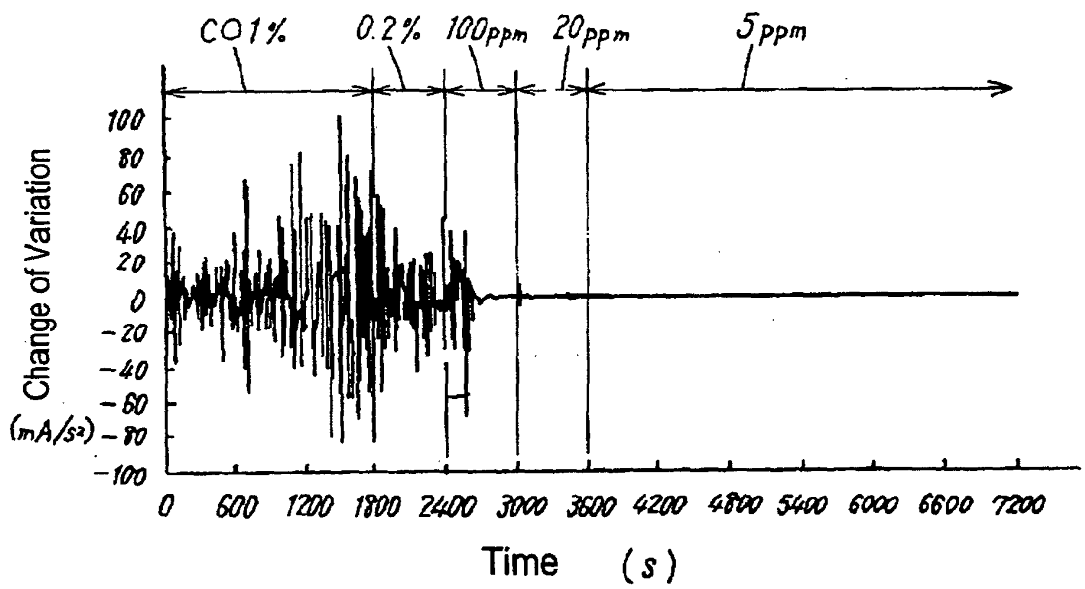
CO1%
0.2%
100ppm
20ppm
5ppm
100
80
60
40
20
0
-20
-40
-60
-80
-100
Change of Variation
(mA/s²)
0
600
1200
1800
2400
3000
3600
4200
4800
5400
6000
6600
7200
Time (s)

FIG. 34

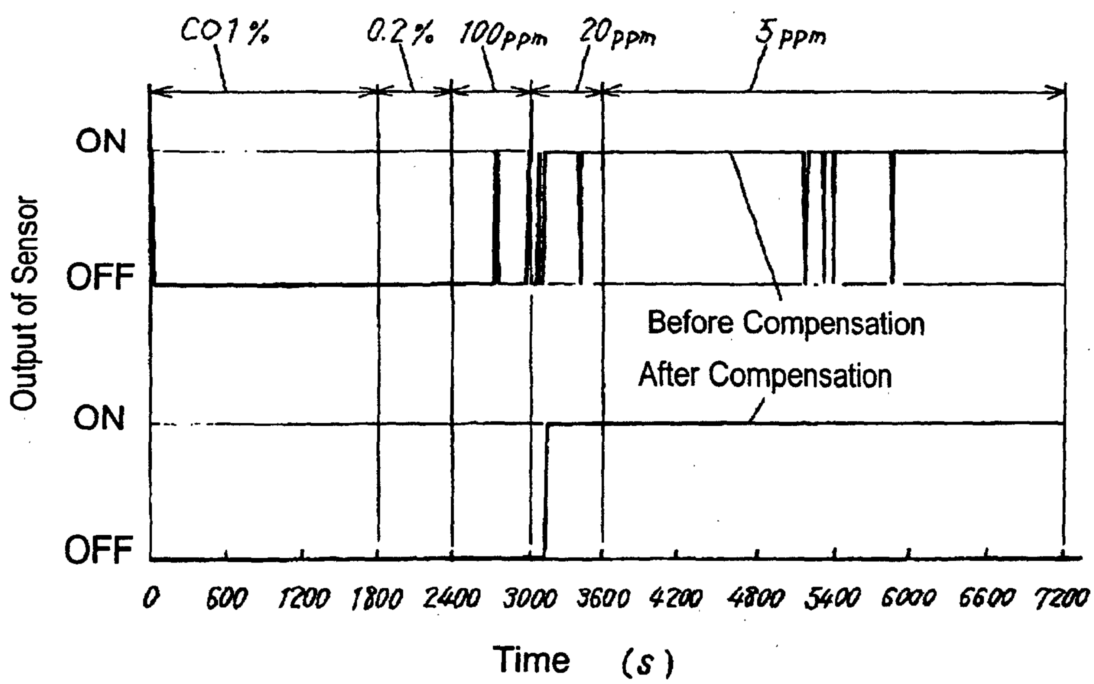
CO1%
0.2%
100ppm
20ppm
5ppm
ON
OFF
ON
OFF
Output of Sensor
Before Compensation
After Compensation
0
600
1200
1800
2400
3000
3600
4200
4800
5400
6000
6600
7200
Time (s)

FIG. 35

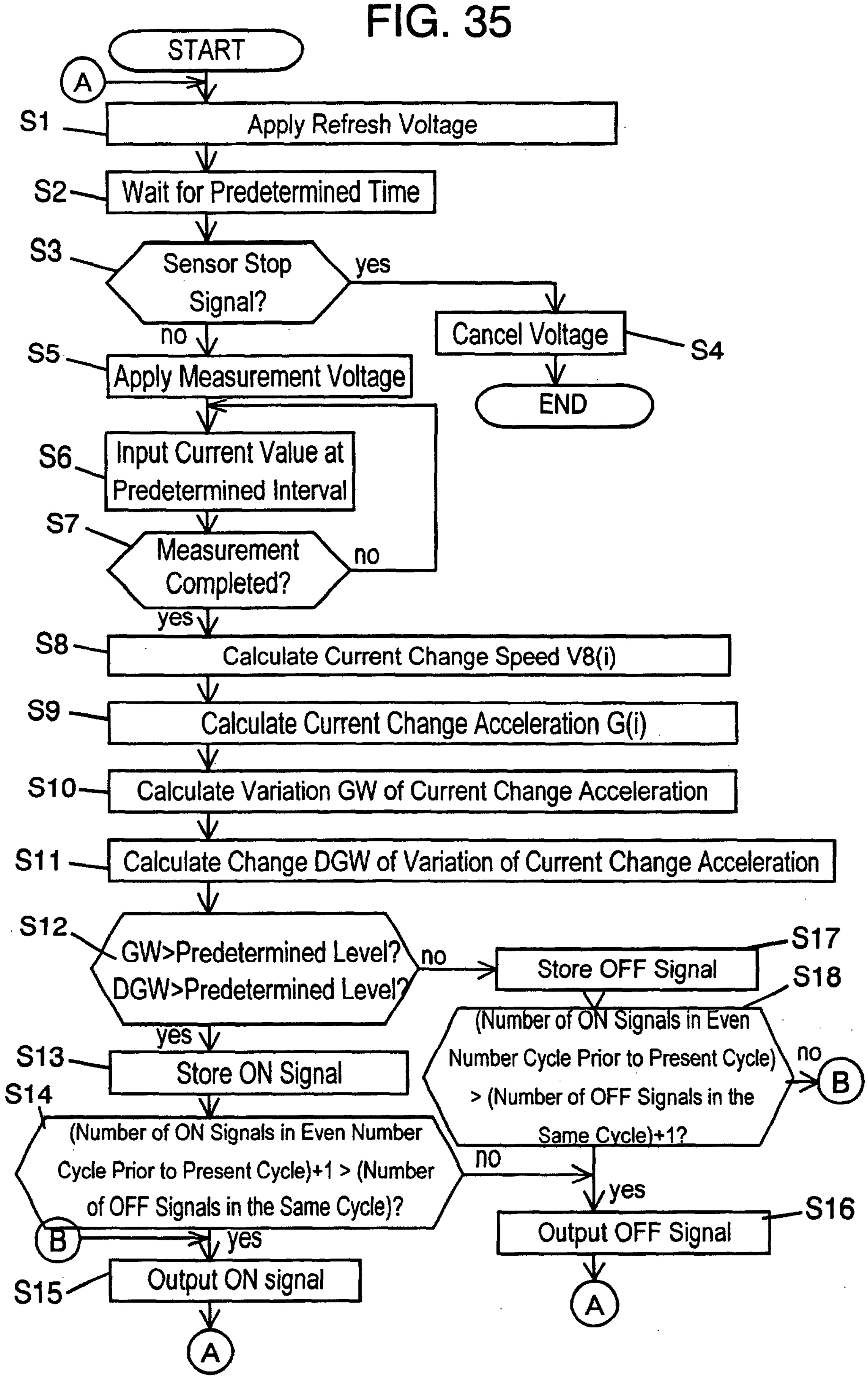
START
A
S1
Apply Refresh Voltage
S2
Wait for Predetermined Time
S3
Sensor Stop Signal?
yes
Cancel Voltage
S4
END
no
S5
Apply Measurement Voltage
S6
Input Current Value at Predetermined Interval
S7
Measurement Completed?
no
yes
S8
Calculate Current Change Speed V8(i)
S9
Calculate Current Change Acceleration G(i)
S10
Calculate Variation GW of Current Change Acceleration
S11
Calculate Change DGW of Variation of Current Change Acceleration
S12
GW>Predetermined Level? DGW>Predetermined Level?
no
S17
Store OFF Signal
S18
(Number of ON Signals in Even Number Cycle Prior to Present Cycle) > (Number of OFF Signals in the Same Cycle)+1?
no
B
yes
S13
Store ON Signal
S14
(Number of ON Signals in Even Number Cycle Prior to Present Cycle)+1 > (Number of OFF Signals in the Same Cycle)?
no
yes
B
S16
Output OFF Signal
A
S15
Output ON signal
A

FIG. 36

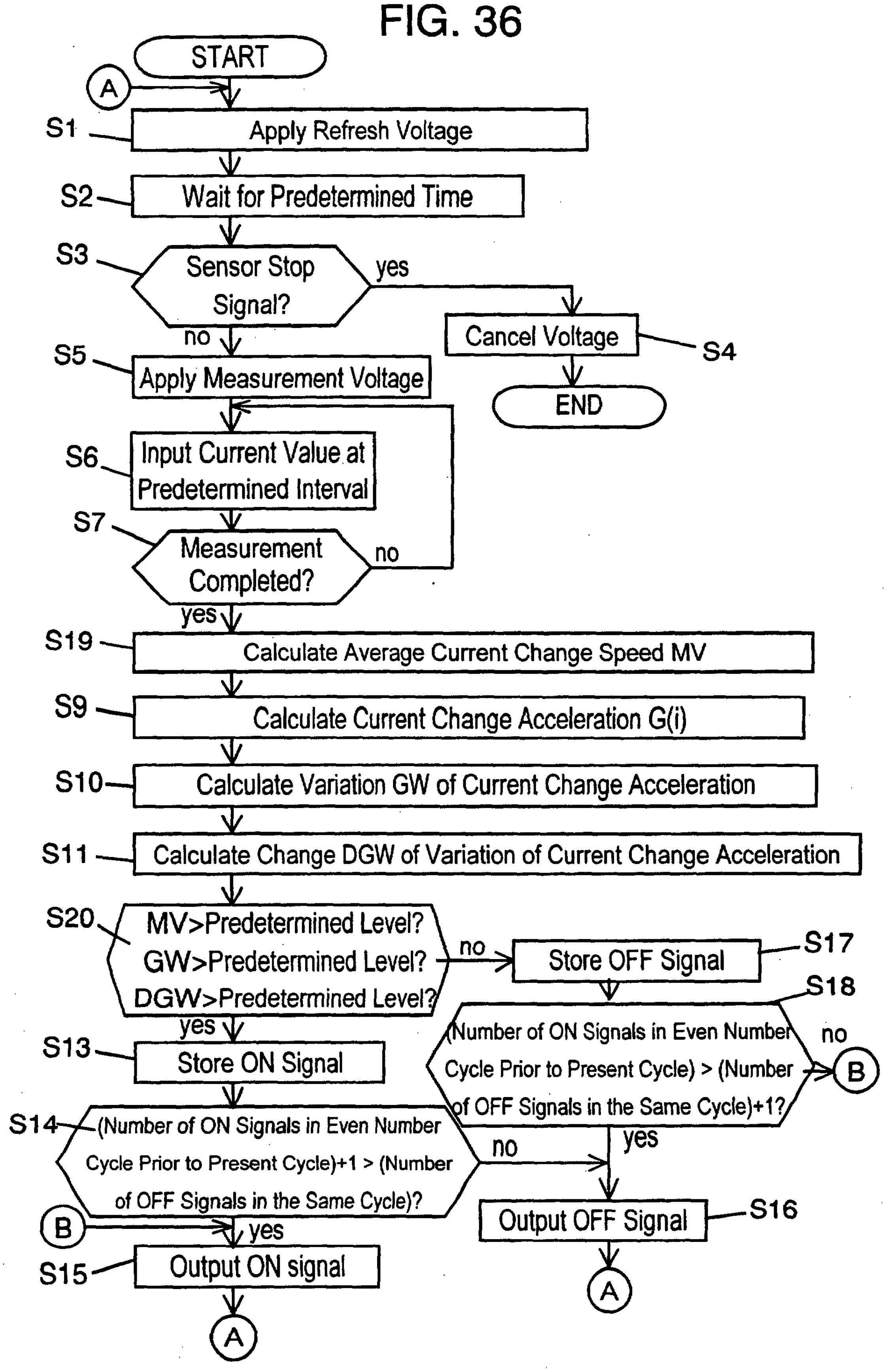
START
A
S1
Apply Refresh Voltage
S2
Wait for Predetermined Time
S3
Sensor Stop Signal?
yes
no
Cancel Voltage
S4
END
S5
Apply Measurement Voltage
S6
Input Current Value at Predetermined Interval
S7
Measurement Completed?
no
yes
S19
Calculate Average Current Change Speed MV
S9
Calculate Current Change Acceleration G(i)
S10
Calculate Variation GW of Current Change Acceleration
S11
Calculate Change DGW of Variation of Current Change Acceleration
S20
MV>Predetermined Level? GW>Predetermined Level? DGW>Predetermined Level?
no
Store OFF Signal
S17
S18
(Number of ON Signals in Even Number Cycle Prior to Present Cycle) > (Number of OFF Signals in the Same Cycle)+1?
no
B
yes
S13
Store ON Signal
S14
(Number of ON Signals in Even Number Cycle Prior to Present Cycle)+1 > (Number of OFF Signals in the Same Cycle)?
no
B
yes
Output OFF Signal
S16
S15
Output ON signal
A
A

FIG. 37

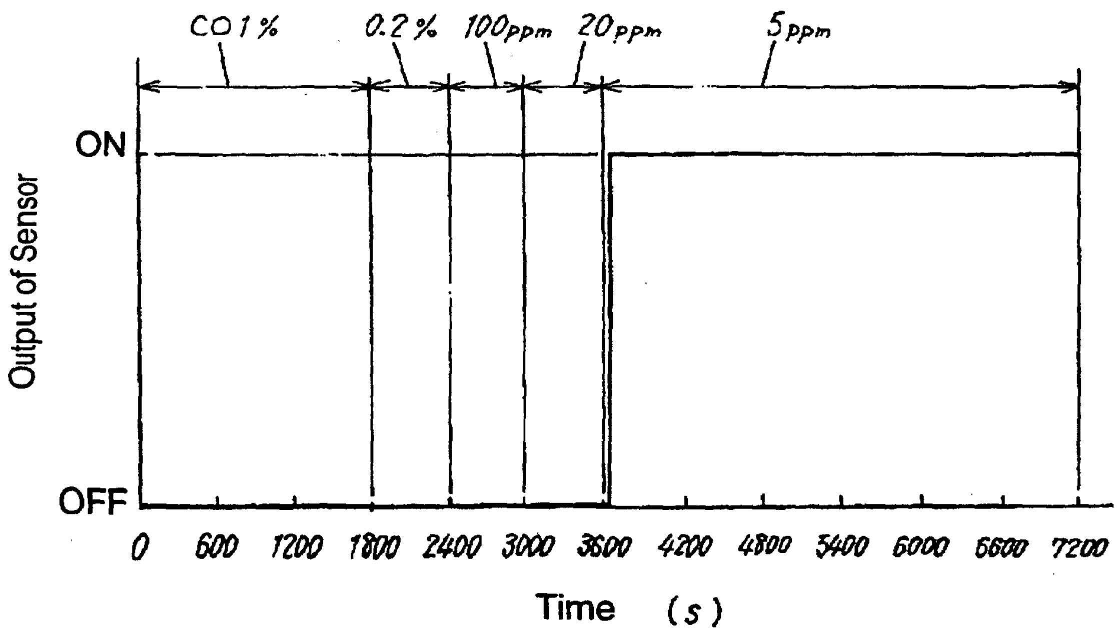
CO 1%
0.2%
100ppm
20ppm
5ppm
ON
OFF
Output of Sensor
0
600
1200
1800
2400
3000
3600
4200
4800
5400
6000
6600
7200
Time (s)

FIG. 38

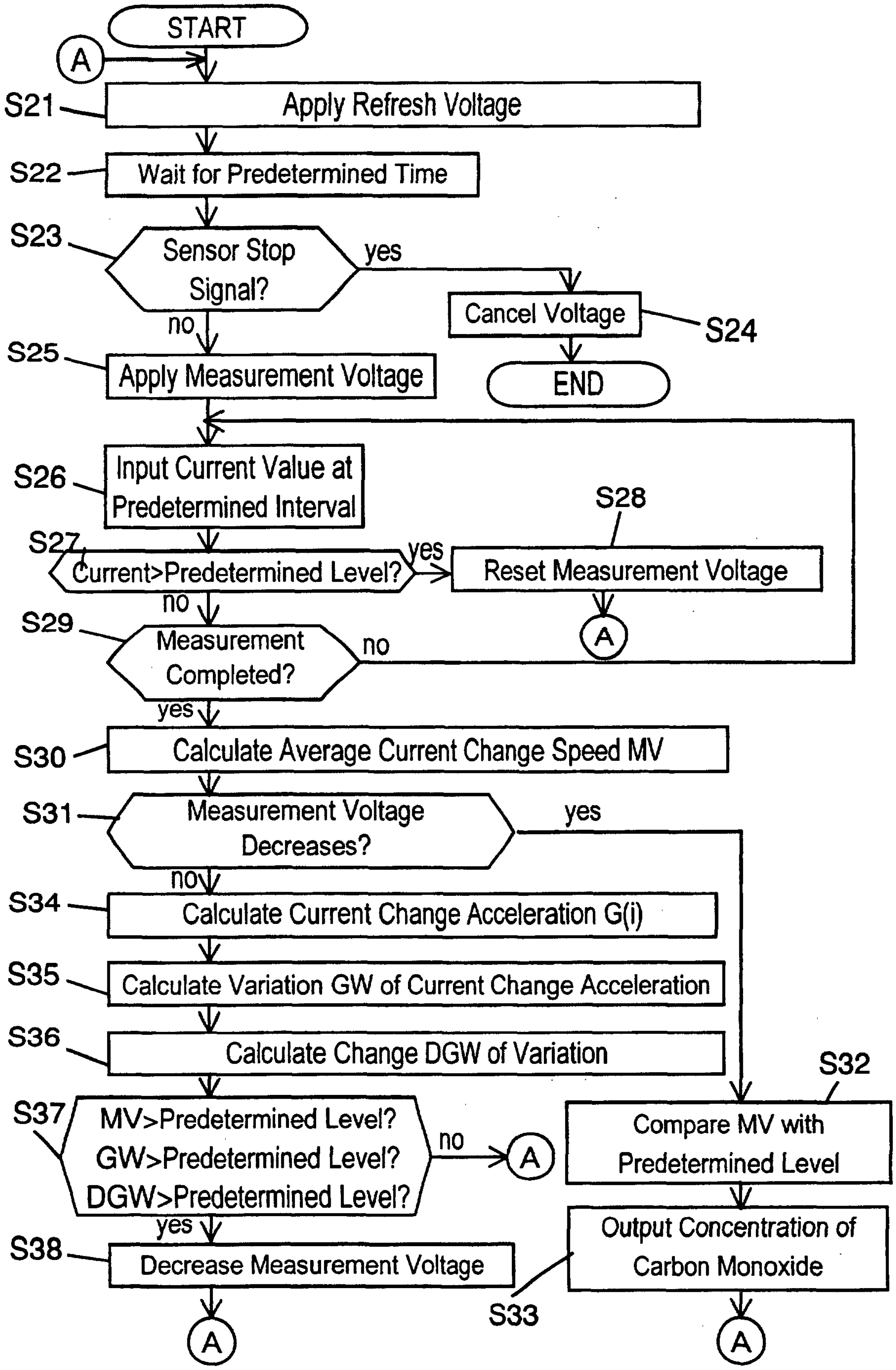
START
A
S21
Apply Refresh Voltage
S22
Wait for Predetermined Time
S23
Sensor Stop Signal?
yes
no
Cancel Voltage
S24
END
S25
Apply Measurement Voltage
S26
Input Current Value at Predetermined Interval
S27
Current>Predetermined Level?
yes
S28
Reset Measurement Voltage
A
no
S29
Measurement Completed?
no
yes
S30
Calculate Average Current Change Speed MV
S31
Measurement Voltage Decreases?
yes
no
S34
Calculate Current Change Acceleration G(i)
S35
Calculate Variation GW of Current Change Acceleration
S36
Calculate Change DGW of Variation
S32
S37
MV>Predetermined Level?
GW>Predetermined Level?
DGW>Predetermined Level?
no
A
Compare MV with Predetermined Level
yes
S38
Decrease Measurement Voltage
Output Concentration of Carbon Monoxide
S33
A
A

FIG. 39

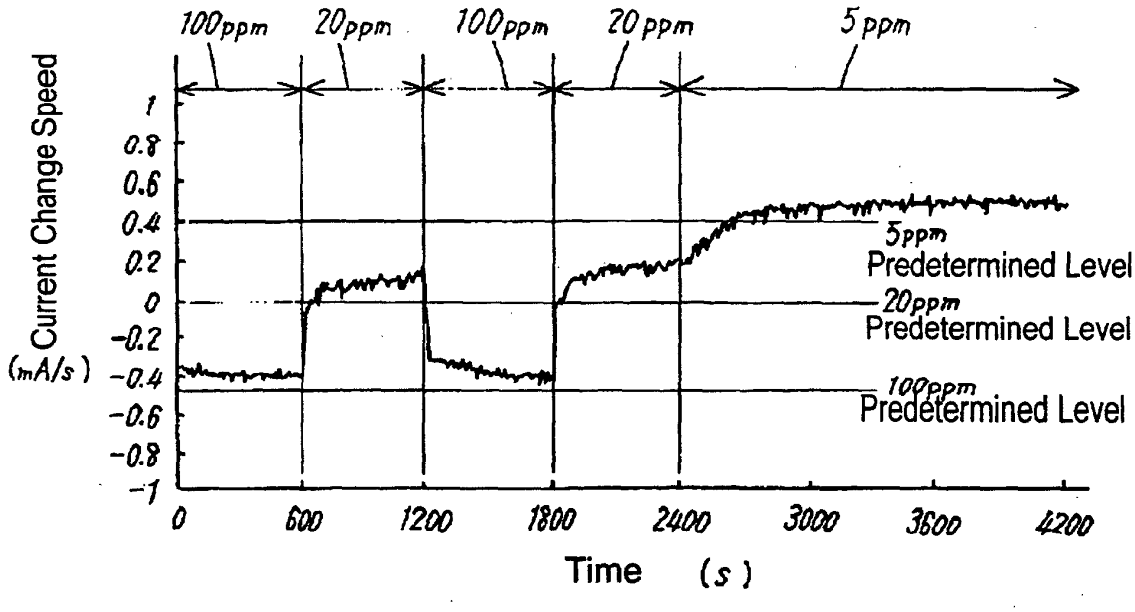
100ppm
20ppm
100ppm
20 ppm
5 ppm
Current Change Speed
(mA/s)
1
0.8
0.6
0.4
0.2
0
-0.2
-0.4
-0.6
-0.8
-1
5ppm
Predetermined Level
20ppm
Predetermined Level
100ppm
Predetermined Level
0
600
1200
1800
2400
3000
3600
4200
Time (s)

FIG. 40 B

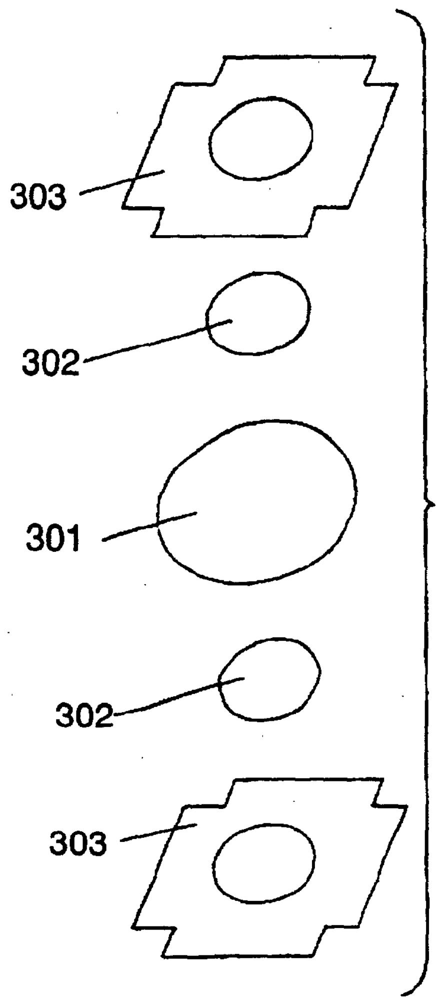


FIG. 40 A

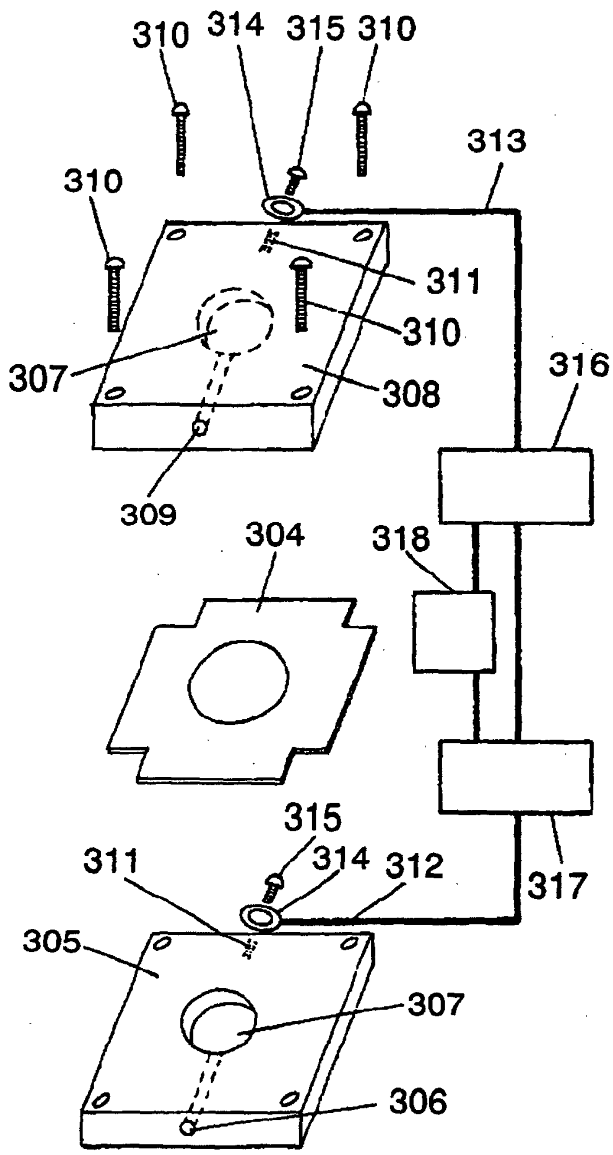

FIG. 41

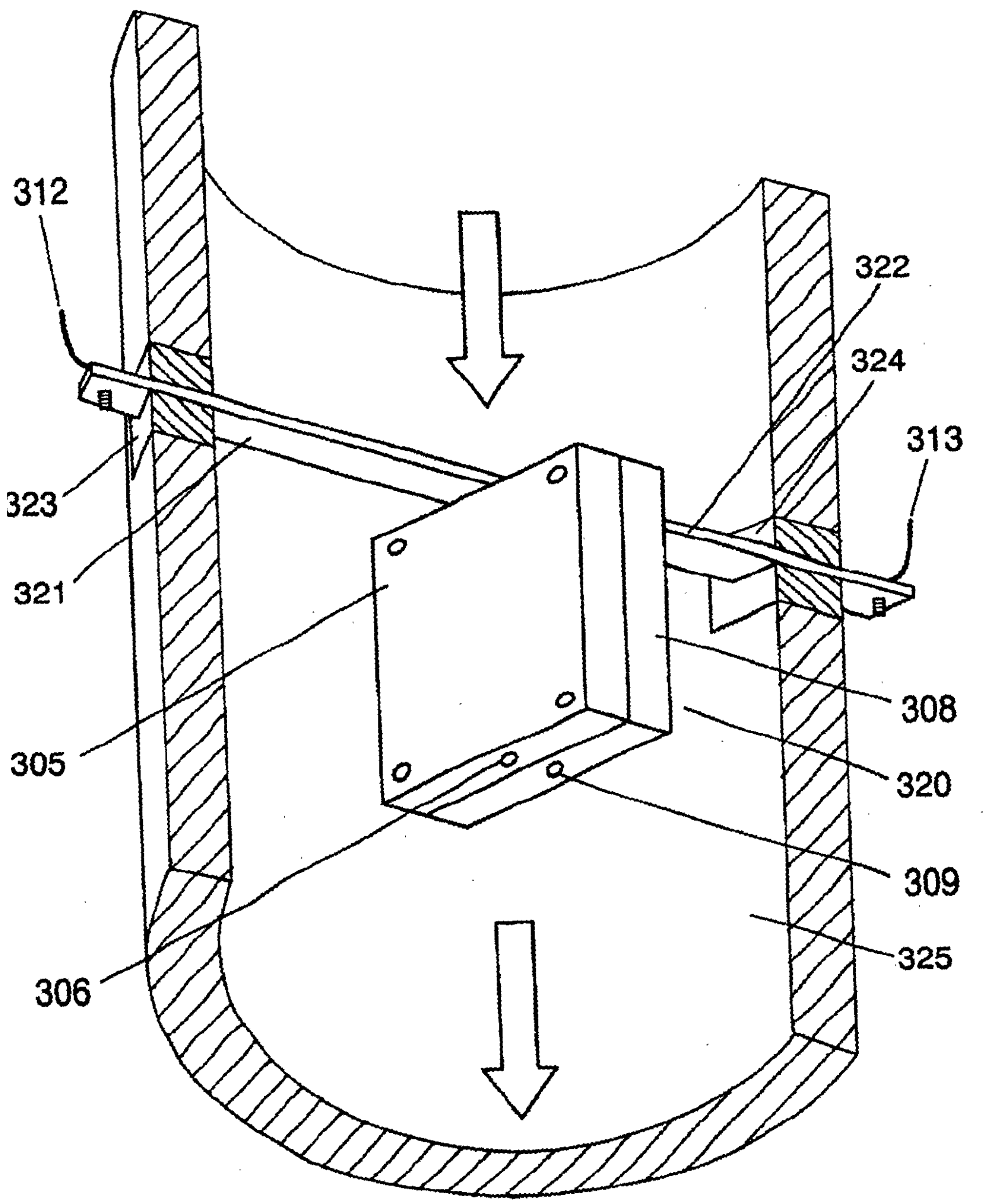

FIG. 42

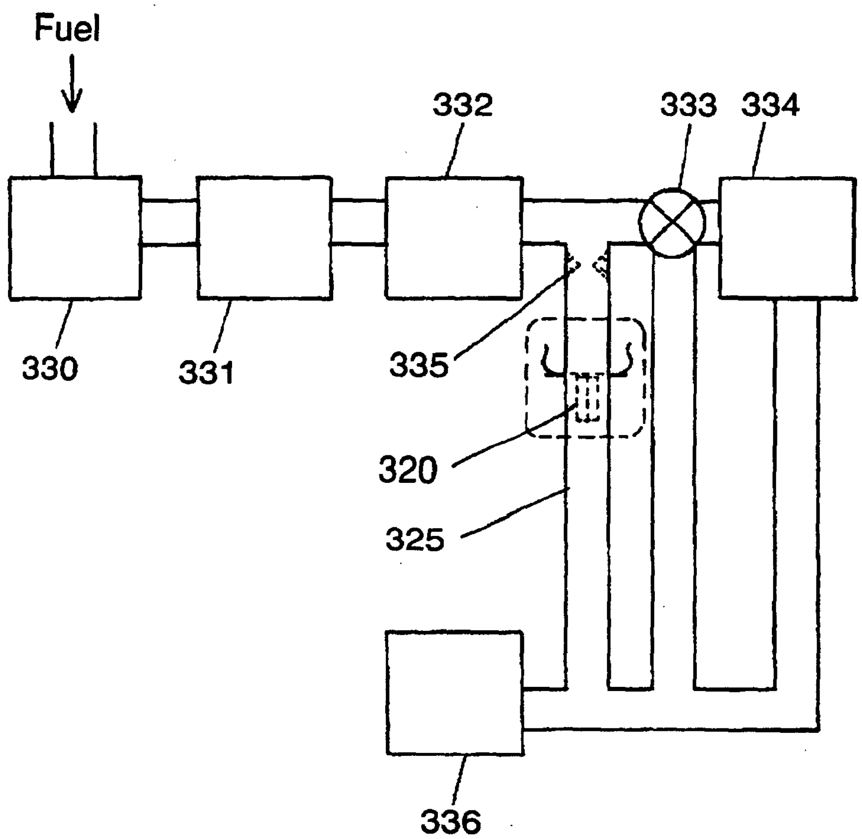

# FIG. 43

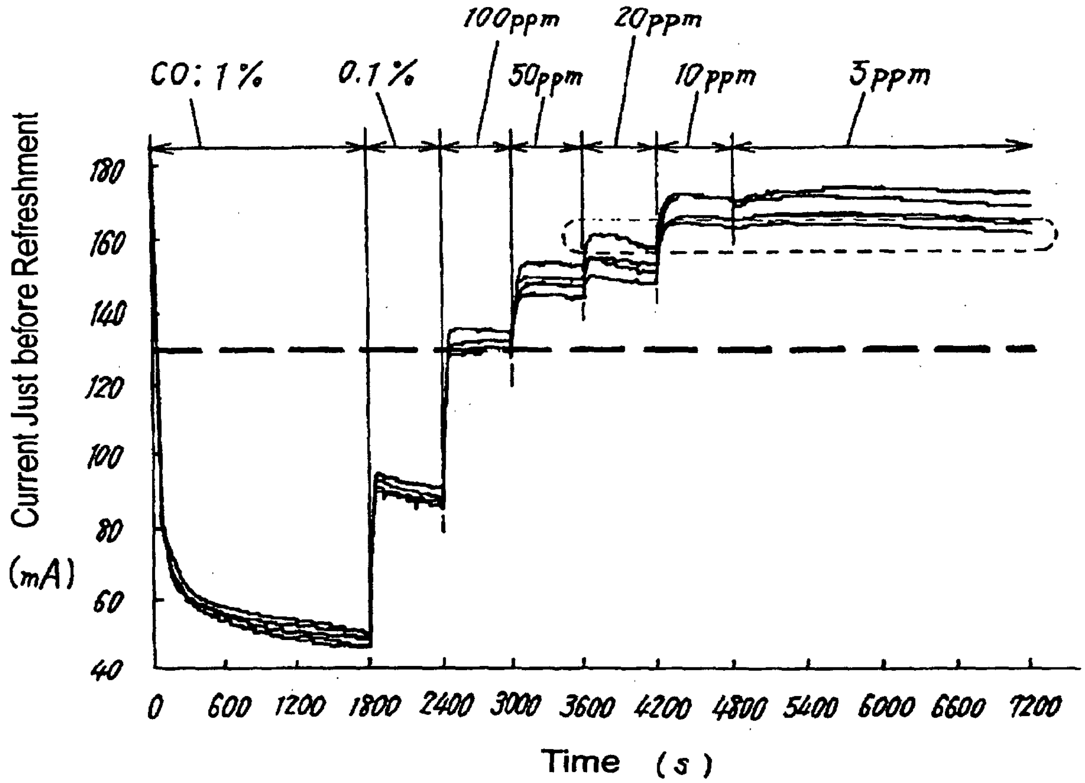
CO: 1%
0.1%
100ppm
50ppm
20ppm
10ppm
5ppm
Current Just before Refreshment
(mA)
180
160
140
120
100
80
60
40
0
600
1200
1800
2400
3000
3600
4200
4800
5400
6000
6600
7200
Time (s)

FIG. 44

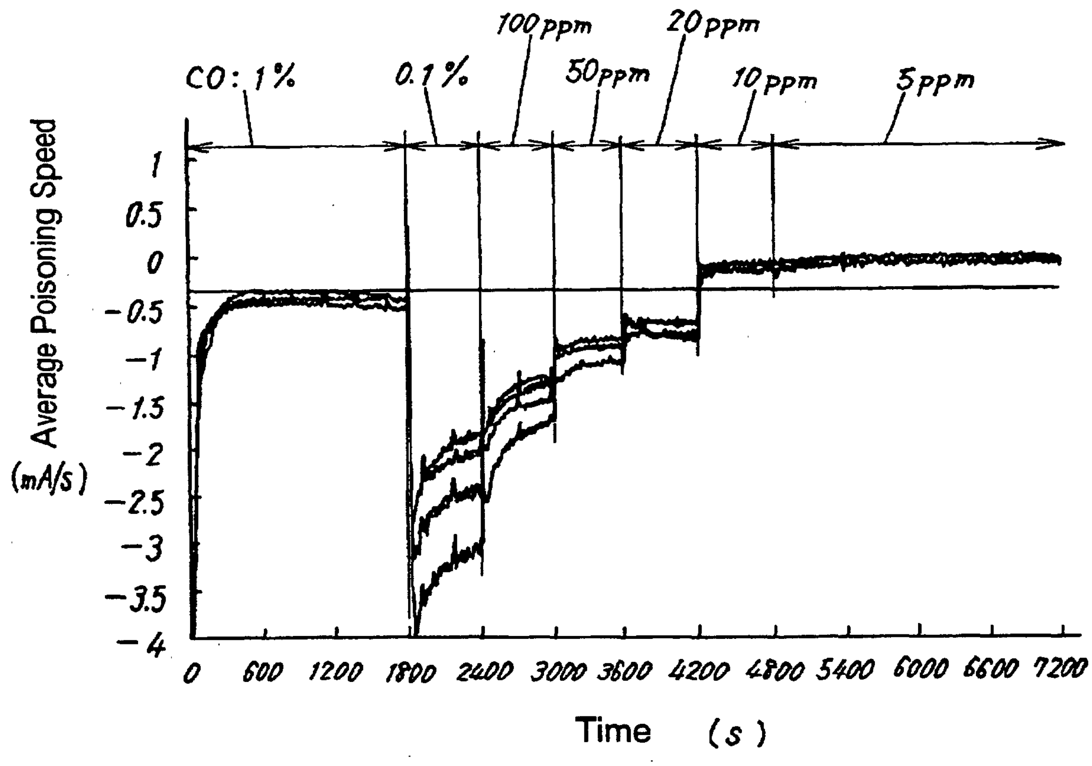

CO: 1%
0.1%
100 ppm
50 ppm
20 ppm
10 ppm
5 ppm
Average Poisoning Speed
(mA/s)
1
0.5
0
-0.5
-1
-1.5
-2
-2.5
-3
-3.5
-4
0
600
1200
1800
2400
3000
3600
4200
4800
5400
6000
6600
7200
Time (s)

FIG. 45

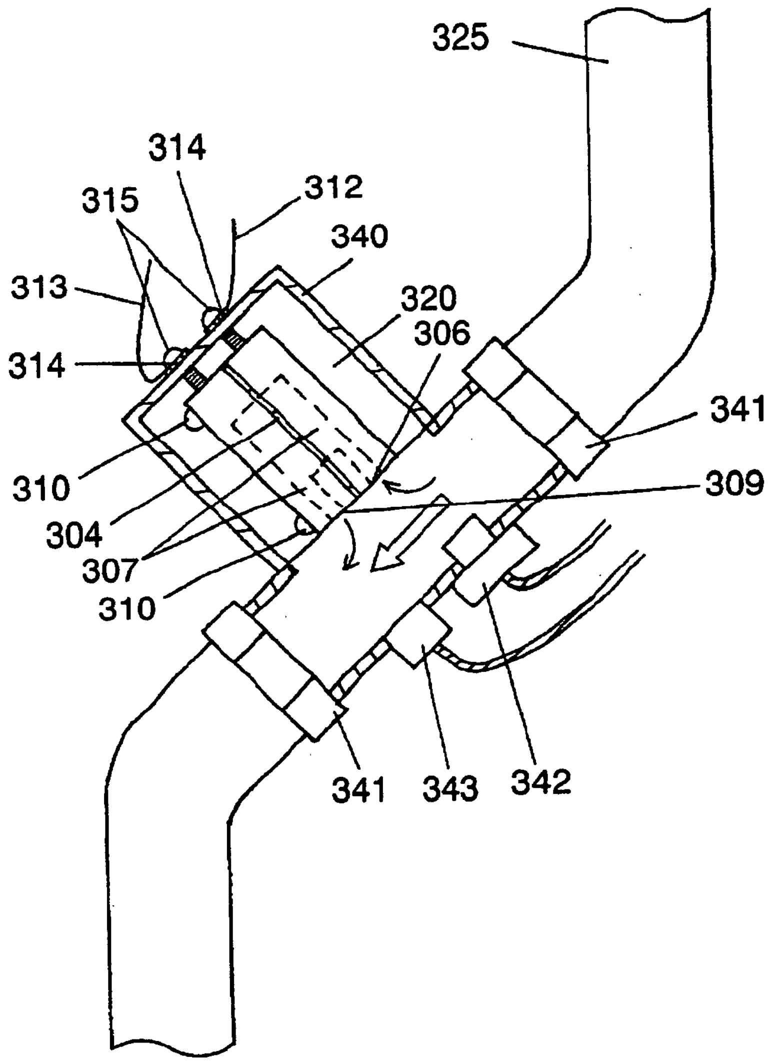
325
314
312
315
340
313
320
306
314
341
310
309
304
307
310
341
343
342

FIG. 46

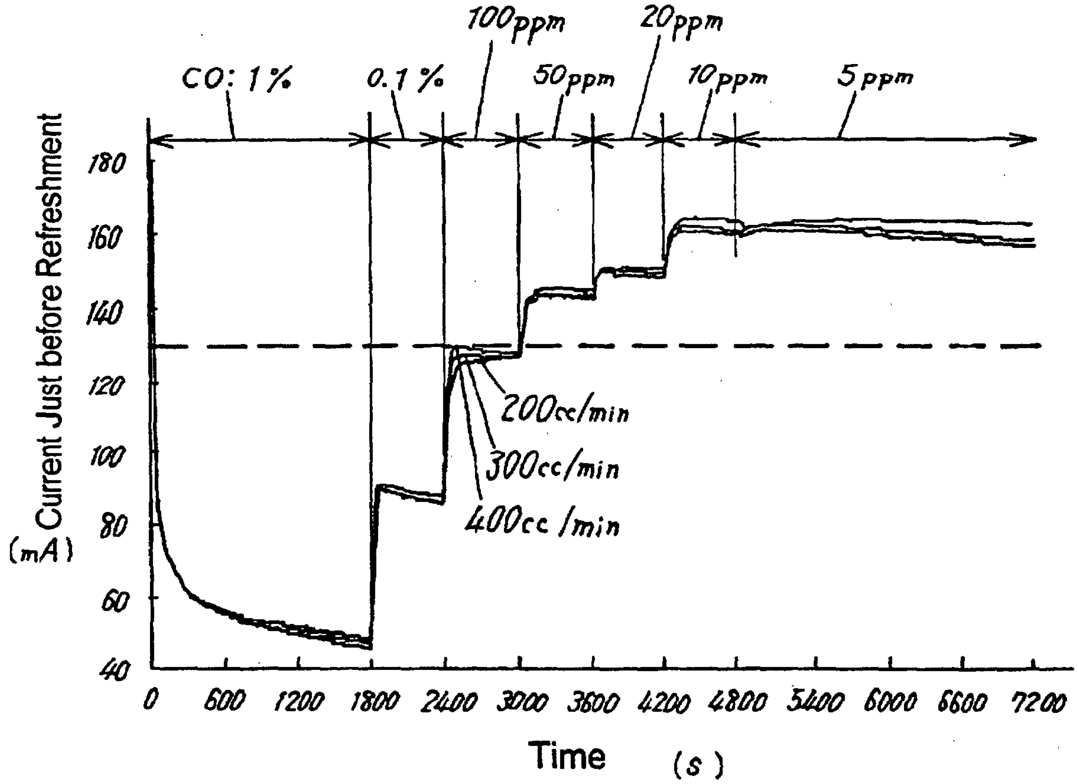
CO: 1%
0.1%
100ppm
50ppm
20ppm
10ppm
5ppm
Current Just before Refreshment (mA)
180
160
140
120
100
80
60
40
200cc/min
300cc/min
400cc/min
0
600
1200
1800
2400
3000
3600
4200
4800
5400
6000
6600
7200
Time (s)

FIG. 47

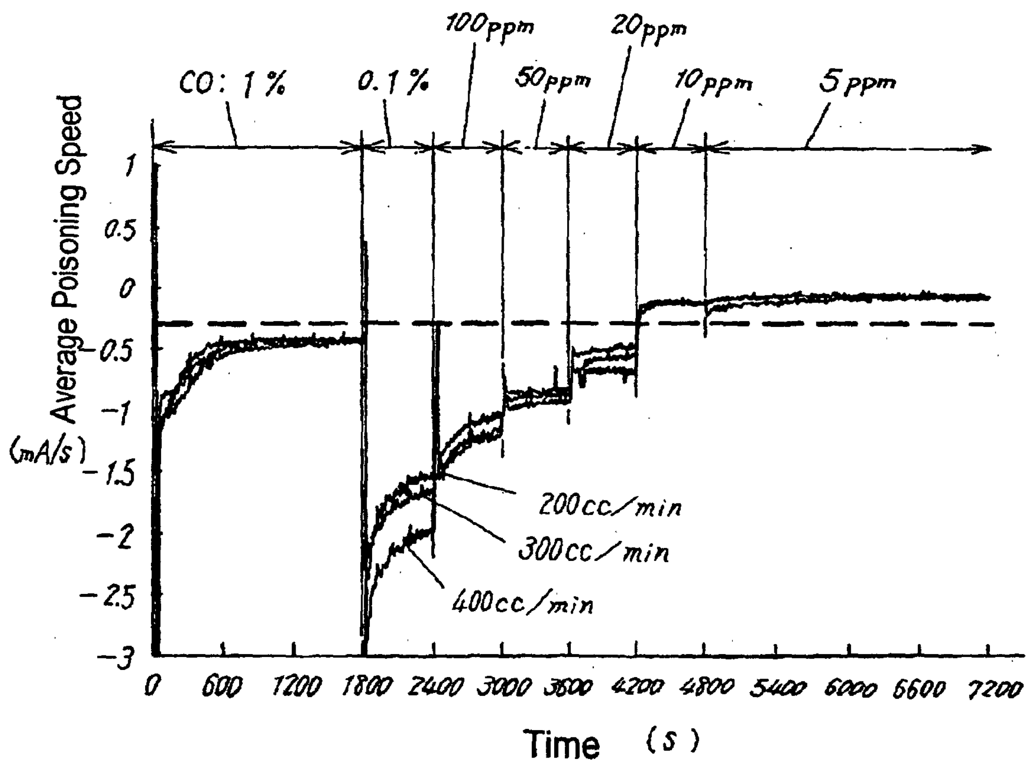

100ppm
20ppm
CO: 1%
0.1%
50ppm
10ppm
5ppm
Average Poisoning Speed
(mA/s)
1
0.5
0
-0.5
-1
-1.5
-2
-2.5
-3
200cc/min
300cc/min
400cc/min
0
600
1200
1800
2400
3000
3600
4200
4800
5400
6000
6600
7200
Time (s)

FIG. 48

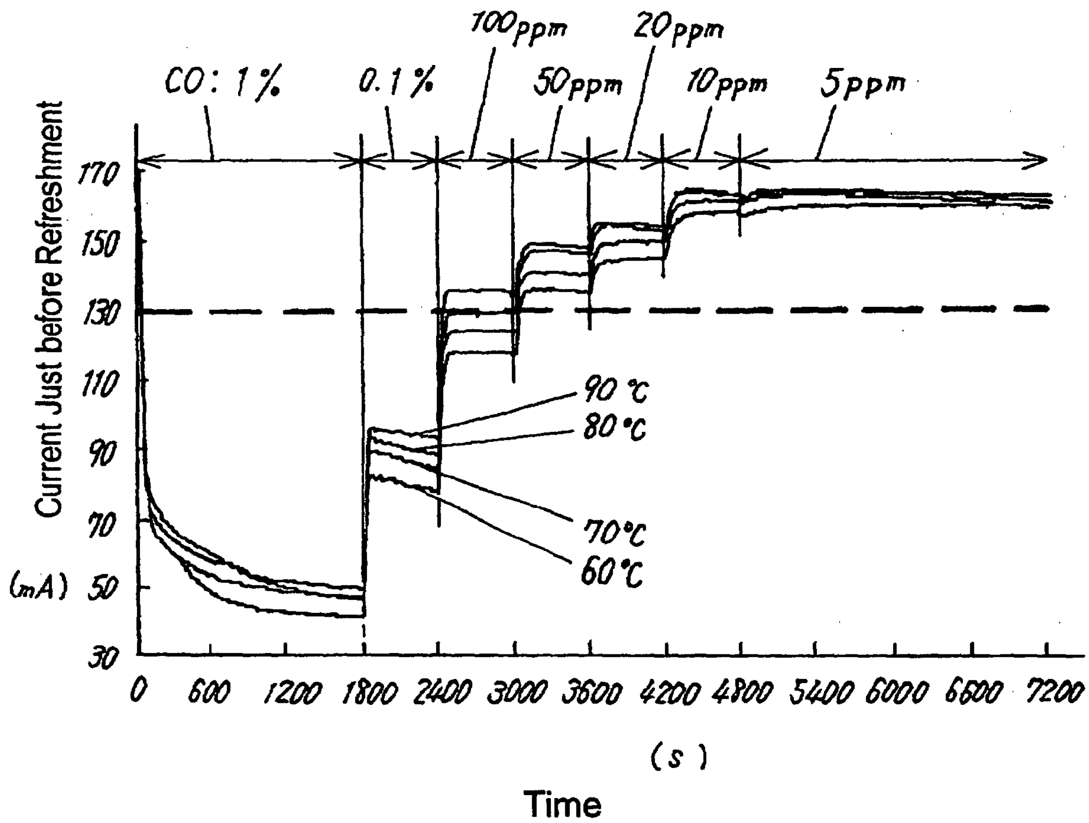
CO: 1%
0.1%
100ppm
50ppm
20ppm
10ppm
5ppm
Current Just before Refreshment
(mA)
170
150
130
110
90
70
50
30
0
600
1200
1800
2400
3000
3600
4200
4800
5400
6000
6600
7200
(s)
Time
90 °C
80 °C
70 °C
60 °C

FIG. 49

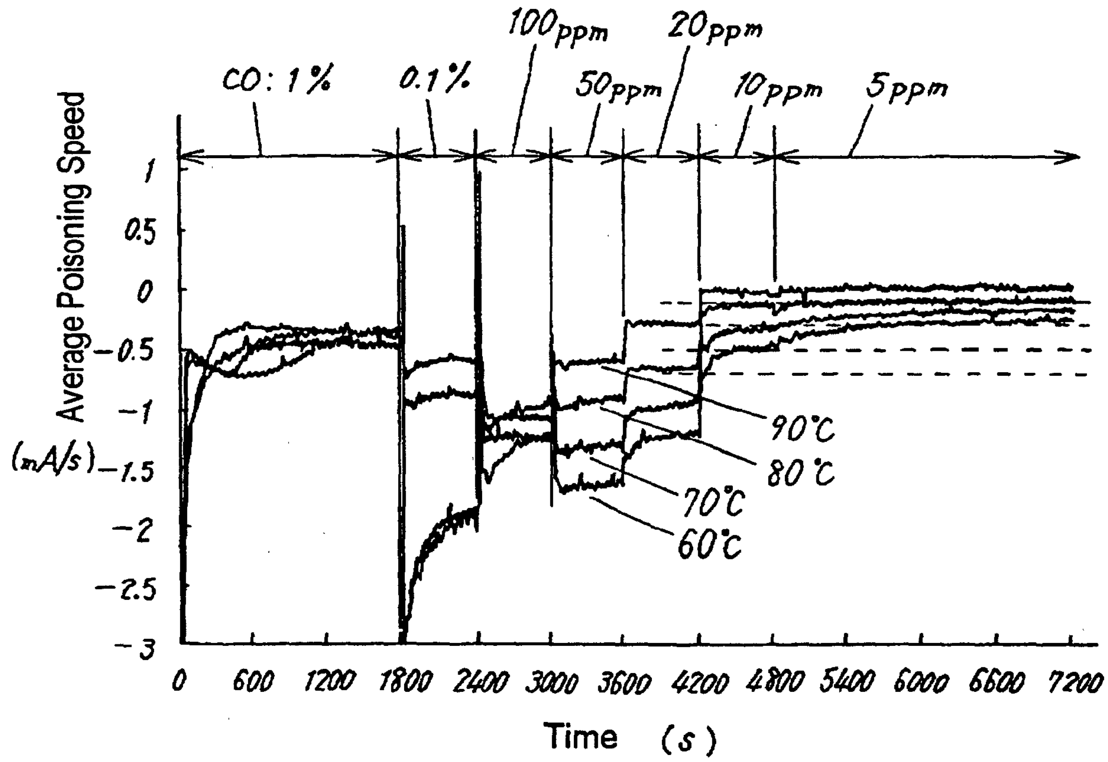
100ppm
20ppm
CO: 1%
0.1%
50ppm
10ppm
5ppm
Average Poisoning Speed
(mA/s)
1
0.5
0
-0.5
-1
-1.5
-2
-2.5
-3
90°C
80°C
70°C
60°C
0
600
1200
1800
2400
3000
3600
4200
4800
5400
6000
6600
7200
Time (s)

FIG. 50

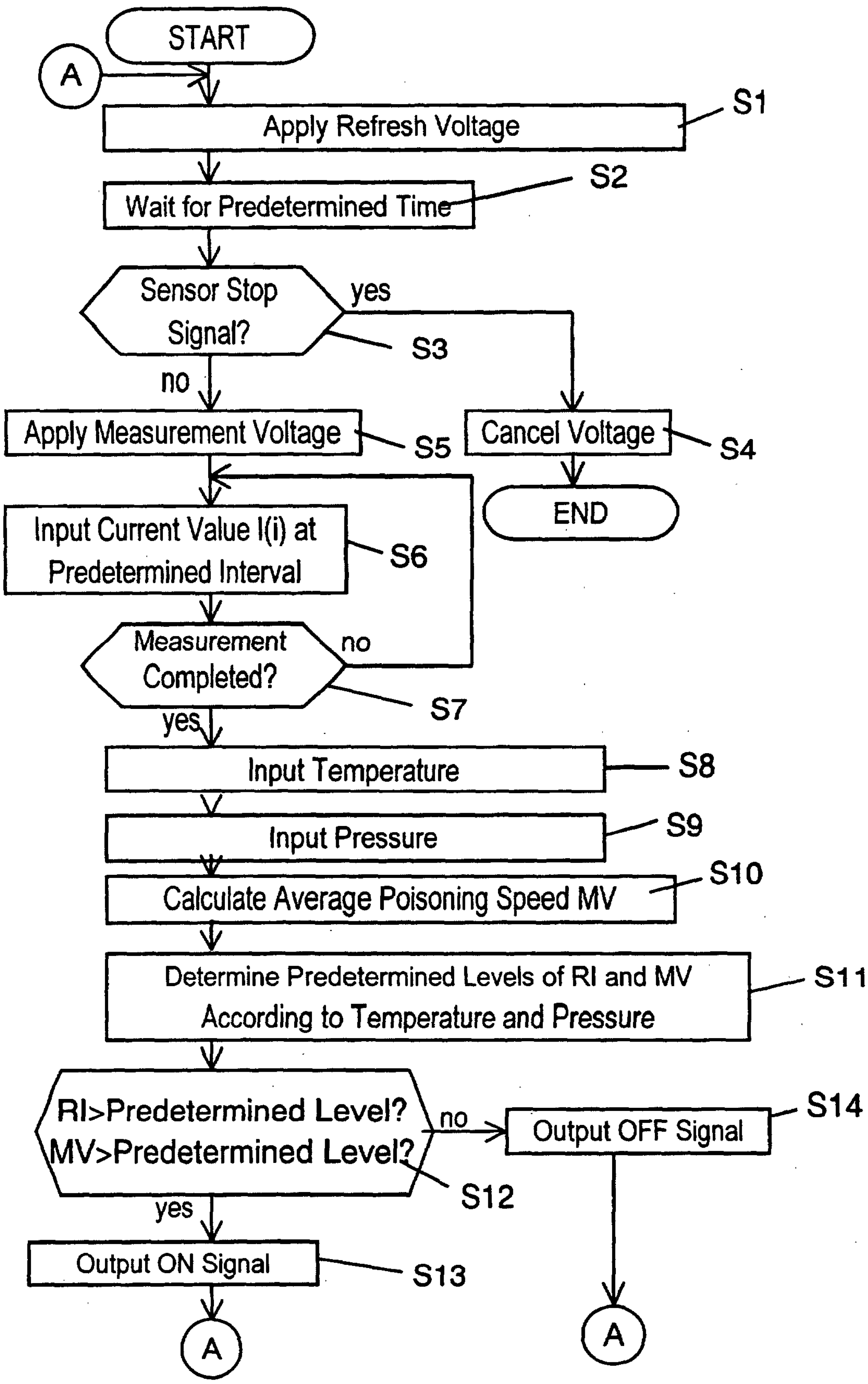
START
A
Apply Refresh Voltage
S1
Wait for Predetermined Time
S2
Sensor Stop Signal?
yes
S3
no
Apply Measurement Voltage
S5
Cancel Voltage
S4
END
Input Current Value I(i) at Predetermined Interval
S6
Measurement Completed?
no
S7
yes
Input Temperature
S8
Input Pressure
S9
Calculate Average Poisoning Speed MV
S10
Determine Predetermined Levels of RI and MV According to Temperature and Pressure
S11
RI>Predetermined Level? MV>Predetermined Level?
no
Output OFF Signal
S14
S12
yes
Output ON Signal
S13
A
A

FIG. 51

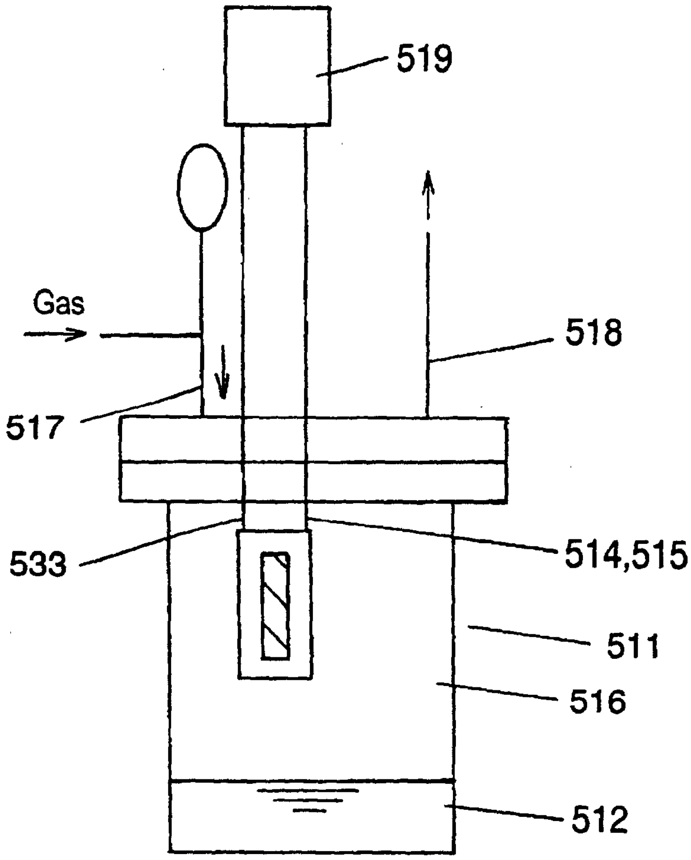


FIG. 52

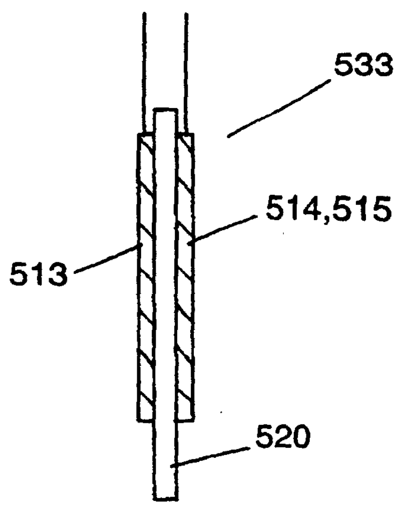

FIG. 53

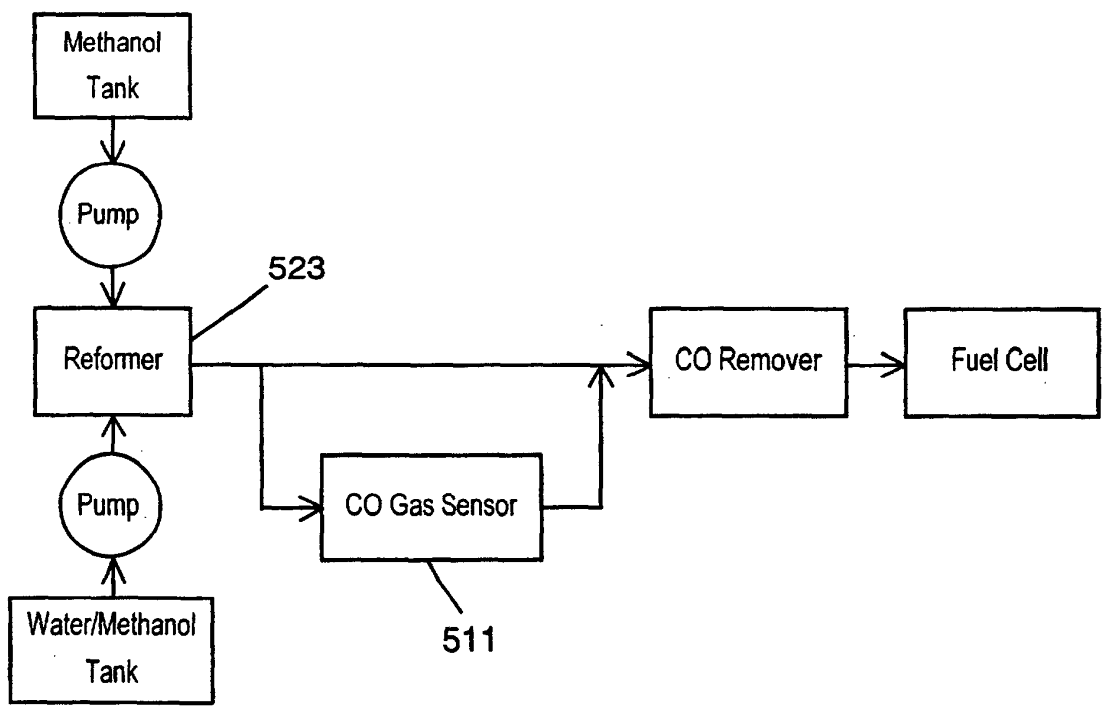
Methanol
Tank
Pump
523
Reformer
CO Remover
Fuel Cell
Pump
CO Gas Sensor
Water/Methanol
Tank
511

FIG. 54

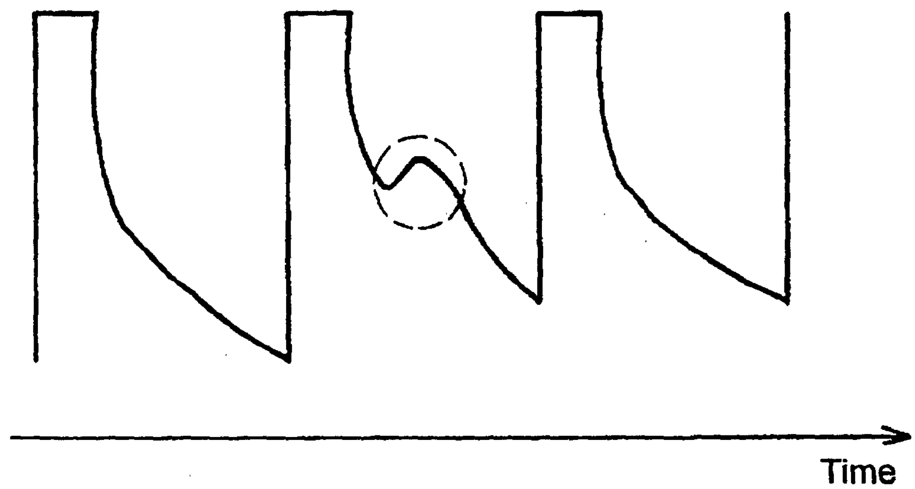

Reference Numerals

| | |
|---|---|
| 1 | Detector Element |
| 2a, 2b | Collector Plate |
| 3 | Insulating Rubber Strip |
| 4 | First Pressure Strip |
| 5 | Second Pressure Strip |
| 6 | Bolt |
| 7 | Detector |
| 8 | Case |
| 9 | Cover |
| 10 | Rubber Sheet |
| 11 | Connector Terminal |
| 12 | Output Terminal Joining Thread |
| 13a, 13b | Recess |
| 14a | Positive Side Passage |
| 14b | Negative Side Passage |
| 15 | Thread |
| 16 | Seal |
| 17 | O-Ring |
| 18 | Direct Current Source |
| 19 | Ampere Meter |
| 20 | Electrolytic Membrane |
| 21 | Detecting Electrode |
| 22 | Counter Electrode |
| 23 | Rubber Seal |
| 24a, 24b | Sheet Partition |
| 25 | Filter |
| 26 | Pressure Sensor |
| 27 | Temperature Sensor |
| 101a | First Detector Element |
| 101b | Second Detector Element |
| 102a | First Collector Plate |
| 102b | Second Collector Plate |
| 102c | Third Collector Plate |
| 102d | Fourth Collector Plate |

103 Insulating Rubber Strip
104 First Pressure Strip
105 Second Pressure Strip
106 Bolt
107a Carbon Monoxide Gas Concentration Detector
107b Hydrogen Gas Concentration Detector
108 Case
109 Cover
110 Rubber Sheet
111 Connector Terminal
112 Output Terminal Joining Strip
113a, 113c Recess
113b, 113d Aperture
114a, 114c Positive Side Passage
114b, 114d Negative Side Passage
115 Thread
116 Seal
117 O-Ring
118a First Direct Current Source
118b Second Direct Current Source
119a First Ampere Meter
119b Second Ampere Meter
120a First Electrolyte Membrane
120b Second Electrolyte Membrane
121a First Detecting Electrode
121b Second Detecting Electrode
122a First Counter Electrode
122b Second Counter Electrode
123 Rubber Seal
124a, 124b, 124c, 124d Partition
125 Filter
126 Pressure Sensor
127 Temperature Sensor
128 Gas Concentration Detector
129 Seal Sheet
201 Proton-Conductive Electrolytic Membrane

202 Electrode
203 Seal
204 Detecting Element
205 Inlet
206 Outlet
207 Gas Passage
208 First Collector Plate
209 Aperture
210 Second Collector Plate
211 Outlet
212 gas Chamber
213 Orifice
214 Screw
215 Gas Intake
216 Gas Exhaust
217 Direct Current Source
218 Ampere Meter
219 Microcomputer
301 Proton-Conductive Electrolyte Membrane
302 electrode
303 Seal
304 Detecting Element
305 First Collector Plate
306 First Collector Plate Passage
307 Gas Chamber
308 Second Collector Plate
309 Second Collector Plate Passage
310 Screw
311 Female Thread
312 Positive Lead
313 Negative Lead
314 Washer
315 Retaining Screw to Tighten Washer
316 Direct Current Source
317 Ampere Meter
318 Microcomputer

| | |
|---|---|
| 320 | Gas Concentration Detector |
| 321 | Positive Strip |
| 322 | Negative Strip |
| 323 | Positive Strip Insulator |
| 324 | Negative Strip Insulator |
| 325 | Bypass Conduit |
| 330 | Reformer |
| 331 | Transformer |
| 332 | Carbon Monoxide Remover |
| 333 | Directional Valve |
| 334 | Fuel Cell |
| 335 | Orifice |
| 336 | Burner |
| 340 | Case |
| 341 | Nut |
| 342 | Temperature Sensor |
| 343 | Pressure Sensor |

**INTERNATIONAL SEARCH REPORT**

International application No.
PCT/JP02/00877

A. CLASSIFICATION OF SUBJECT MATTER
Int.Cl[7] G01N27/416, H01M8/04

According to International Patent Classification (IPC) or to both national classification and IPC

B. FIELDS SEARCHED

Minimum documentation searched (classification system followed by classification symbols)
Int.Cl[7] G01N27/416, H01M8/04, G01N27/406

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| | JP 11-219716 A (General Motors Corp.), 10 August, 1999 (10.08.99), | |
| X | Full text; Figs. 2 to 4 | 1,9,10,52 |
| A | Full text; Figs. 1 to 4 | 2-8,11-22, 23-51,53-66, 67-70,71-73, 74-105 |
| | & CA 2245228 A1 & EP 911629 A & US 6001499 A1 | |
| | JP 10-83824 A (Toyota Motor Corp.), 31 March, 1998 (13.03.98), | |
| X | Full text; Figs. 4, 16 | 1,2,9,10 |
| A | Full text; Figs. 1 to 32 | 3-8,11-22, 23-51,52-66, 67-70,71-73, 74-105 |
| | & CA 2214769 A1 & EP 828303 A2 & US 5925476 A1 | |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 April, 2002 (22.04.02) | 14 May, 2002 (14.05.02) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/00877

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 11-219717 A (General Motors Corp.),<br>10 August, 1999 (10.08.99),<br>Full text; Figs. 2 to 4<br>Full text; Figs. 1 to 4<br>& CA 2244808 A1 & EP 911898 A<br>& US 6063516 A1 | 1,9,10,52<br>2-8,11-22, 23-51,53-66, 67-70,71-73, 74-105 |
| P,X<br>P,A | JP 2001-41926 A (Equos Research Co., Ltd.),<br>16 February, 2001 (16.02.01),<br>Full text; Fig. 7<br>Full text; Figs. 1 to 12<br>(Family: none) | 74<br>1-22,23-50, 52-66,67-70, 71-73,75-105 |
| P,X<br>P,A | JP 2001-41925 A (Equos Research Co., Ltd.),<br>16 February, 2001 (16.02.01),<br>Full text; Fig. 13<br>Full text; Figs. 1 to 14<br>(Family: none) | 74<br>1-22,23-50, 52-66,67-70, 71-73,75-105 |
| P,X<br>P,A | JP 2001-99809 A (Matsushita Electric Industrial Co., Ltd.),<br>13 April, 2001 (13.04.01),<br>Full text; Figs. 2, 6, 8<br>Full text; Figs. 1 to 8<br>(Family: none) | 1,2<br>1-22,23-50, 52-66,67-70, 71-73,75-105 |
| P,X<br>P,A | JP 2001-330585 A (Matsushita Electric Industrial Co., Ltd.),<br>30 November, 2001 (30.11.01),<br>Full text; Figs. 1 to 5<br>Full text; Figs. 1 to 5<br>(Family: none) | 1-22,23-51, 52-56,71<br>57-66,67-70, 72-73,74-105 |
| E,X<br>E,A | JP 2002-82092 A (Matsushita Electric Industrial Co., Ltd.),<br>22 March, 2002 (22.03.02),<br>Full text; Figs. 1 to 7<br>Full text; Figs. 1 to 7<br>(Family: none) | 1-22,23-51, 52-56,71<br>57-66,67-70, 72-73, 74-105 |
| A | JP 2-136739 A (Shimadzu Corp.),<br>25 May, 1990 (25.05.90),<br>Full text; Figs. 1 to 7<br>(Family: none) | 1-22,23-51, 52-66,67-70, 71-73 |

Form PCT/ISA/210 (continuation of second sheet) (July 1998)

**INTERNATIONAL SEARCH REPORT**

International application No.
PCT/JP02/00877

C (Continuation). DOCUMENTS CONSIDERED TO BE RELEVANT

| Category* | Citation of document, with indication, where appropriate, of the relevant passages | Relevant to claim No. |
|---|---|---|
| A | JP 62-172256 A (Figaro Engineering Inc.), 29 July, 1987 (29.07.87), Full text; Figs. 1 to 8 (Family: none) | 1-22,23-51, 52-66,67-70, 71-73 |
| A | JP 8-29390 A (Matsushita Electric Industrial Co., Ltd.), 02 February, 1996 (02.02.96), Full text; Figs. 1 to 8 (Matsushita Electric Industrial Co., Ltd.), (Family: none) | 1-22,23-51, 52-66,67-70, 71-73 |
| A | JP 2000-208162 A (Toyota Motor Corp.), 28 July, 2000 (28.07.00), Full text; Figs. 1 to 5 (Family: none) | 74-105 |
| P,A | JP 2001-307757 A (Nissan Motor Co., Ltd.), 02 November, 2001 (02.11.01), Full text; Figs. 1 to 9 | 74-105 |

Form PCT/ISA/210 (continuation of second sheet) (July 1998)

**INTERNATIONAL SEARCH REPORT**

International application No.
PCT/JP02/00877

**Box I Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

I. Claims 1 to 22, 23 to 51, 52 to 66, 67 to 70, and 71 to 73 relate to a gas density detector.
II. Claims 74 to 105 relate to a fuel cell system.
These two groups of inventions are not considered to be a group of inventions so linked as to form a single general inventive concept.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☒ No protest accompanied the payment of additional search fees.

Form PCT/ISA/210 (continuation of first sheet (1)) (July 1998)